# EUROPEAN PATENT APPLICATION

(11) **EP 3 145 019 A1**
(43) Date of publication of application: **22.03.2017**
(21) Application number: 15793472.0
(22) Date of filing: 13.05.2015
(51) Int. Cl.: H01M 10/0567, H01G 11/06, H01G 11/64, H01M 4/485, H01M 4/58, H01M 6/16, H01M 10/052, H01M 10/0568, H01M 10/0569, C07F 5/02, C07F 9/40

(54) **NON-AQUEOUS ELECTROLYTE, POWER STORAGE DEVICE USING SAME, AND LITHIUM SALT USED FOR SAME**

(30) Priority: 14.05.2014 JP 2014100961; 30.07.2014 JP 2014155364; 03.10.2014 JP 2014204651; 06.02.2015 JP 2015021922
(71) Applicant: UBE Industries, Ltd., Ube-shi, Yamaguchi 755-8633 (JP)
(72) Inventor: ABE, Koji, Ube-shi Yamaguchi 755-8633 (JP); SHIKITA, Shoji, Ube-shi Yamaguchi 755-8633 (JP); CHIKA, Junichi, Ube-shi Yamaguchi 755-8633 (JP); SHIMAMOTO, Kei, Ube-shi Yamaguchi 755-8633 (JP); SATO, Yosuke, Ube-shi Yamaguchi 755-8633 (JP)
(74) Representative: Gille Hrabal
(86) International application number: PCT/JP2015/063770
(87) International publication number: WO 2015/174455

(57) **Abstract**

A nonaqueous electrolytic solution having an electrolyte salt dissolved in a nonaqueous solvent, the nonaqueous electrolytic solution containing a lithium salt having a specific α,β-dihydroxy carboxylic acid ester structure, phosphono hydroxy carboxylic acid structure, alkoxycarbonyl hydroxy carboxylic acid structure, or formyloxy structure; an energy storage device using the nonaqueous electrolytic solution; and a lithium salt used for the nonaqueous electrolytic solution. This nonaqueous electrolytic solution makes it possible not only to improve the electrochemical characteristics when the energy storage device is used at a high temperature and a high voltage and to improve the capacity retention rate after high-voltage and high-temperature storage, but also to suppress gas generation.

## Description

### TECHNICAL FIELD

The present invention relates to a nonaqueous electrolytic solution capable of improving electrochemical characteristics in using an energy storage device at a high voltage, an energy storage device using the same, and a lithium salt to be used for the same.

### BACKGROUND ART

An energy storage device, especially a lithium secondary battery, has been widely used recently for a power source of a small-sized electronic device, such as a mobile telephone, a notebook personal computer, etc., and a power source for an electric vehicle or electric power storage. With respect to a thin electronic device, such as a tablet device, an ultrabook, etc., a laminate-type battery or a prismatic battery using a laminate film, such as an aluminum laminate film, etc., for an outer packaging member thereof is frequently used. In such a battery, the outer packaging member is thin, and therefore, there is involved such a problem that the battery is easily deformed even by a bit of expansion of the outer packaging member and the deformation very likely influences the electronic device.

Since there is a possibility that such an electronic device or a vehicle is used in a broad temperature range, such as a high temperature in midsummer, a low temperature in an extremely cold region, etc., it is demanded to improve electrochemical characteristics with a good balance in a broad temperature range.

In particular, in order to prevent the global warming, it is an urgent need to reduce the CO₂ emission. Among eco-friendly vehicles mounted with an energy storage apparatus composed of an energy storage device, such as lithium secondary batteries, capacitors, etc., early dissemination of a hybrid electric vehicle (HEV), a plug-in hybrid electric vehicle (PHEV), or a battery electric vehicle (BEV) is demanded.

Since a vehicle is long in moving distance, there is a possibility that the vehicle is used in regions in a broad temperature range of from a very hot region of the torrid zone to an extremely cold region. In consequence, in particular, these onboard energy storage devices are required such that even when used in a broad temperature range of from high temperatures to low temperatures, the electrochemical characteristics are not worsened.

In the present specification, the term, lithium secondary battery, is used as a concept also including a so-called lithium ion secondary battery.

A lithium secondary battery is mainly constituted of a positive electrode and a negative electrode, each containing a material capable of absorbing and releasing lithium, and a nonaqueous electrolytic solution including a lithium salt and a nonaqueous solvent; and a carbonate, such as ethylene carbonate (EC), propylene carbonate (PC), etc., is used as the nonaqueous solvent.

In addition, a lithium metal, a metal compound capable of absorbing and releasing lithium (e.g., a metal elemental substance, a metal oxide, an alloy with lithium, etc.), and a carbon material are known as the negative electrode of the lithium secondary battery. In particular, a nonaqueous electrolytic solution secondary battery using, as the carbon material, a carbon material capable of absorbing and releasing lithium, for example, coke or graphite (e.g., artificial graphite or natural graphite), etc., is widely put into practical use.

Since the aforementioned negative electrode material stores and releases lithium and an electron at an extremely electronegative potential equal to the lithium metal, it has a possibility that a lot of solvents are subjected to reductive decomposition, and a part of the solvent in the electrolytic solution is reductively decomposed on the negative electrode regardless of the kind of the negative electrode material, so that there were involved such problems that the movement of a lithium ion is disturbed due to deposition of decomposed products, generation of a gas, or expansion of the electrode, thereby worsening battery characteristics, such as cycle properties, etc., especially in the case of using the battery at a high temperature and at a high voltage; and that the battery is deformed due to expansion of the electrode. Furthermore, it is known that a lithium secondary battery using a lithium metal or an alloy thereof, a metal elemental substance, such as tin, silicon, etc., or an oxide thereof as the negative electrode material may have a high initial battery capacity, but the battery capacity and the battery performance thereof, such as cycle properties, may be largely worsened because the micronized powdering of the material may be promoted during cycles, which brings about accelerated reductive decomposition of the nonaqueous solvent, as compared with the negative electrode formed of a carbon material, and the battery may be deformed due to expansion of the electrode.

Meanwhile, since a material capable of absorbing and releasing lithium, which is used as a positive electrode material, such as LiCoO₂, LiMn₂O₄, LiNiO₂, LiFePO₄, etc., stores and releases lithium and an electron at an electropositive voltage of 3.5 V or more on the lithium basis, it has a possibility that a lot of solvents are subjected to oxidative decomposition especially in the case of using the battery at a high temperature and at a high voltage, and a part of the solvent in the electrolytic solution is oxidatively decomposed on the positive electrode regardless of the kind of the positive electrode material, so that there were involved such problems that the resistance is increased due to deposition of decomposed products; and that a gas is generated due to decomposition of the solvent, thereby expanding the battery.

Under such a situation, in electronic devices having a lithium secondary battery mounted therein, the electric power consumption increases, and the capacity increases steadily. The electrolytic solution is in the environment where the decomposition is apt to take place more and more due to an increase of temperature of the battery by the heat generation from the electronic device, an increase of voltage of charging setting voltage of the battery, and the like. Thus, there was involved such a problem that the battery becomes unable to be used due to expansion of the battery caused by the gas generation, actuation of a safety mechanism to cut off the current, etc., or the like.

Irrespective of the foregoing situation, the multifunctionality of electronic devices on which lithium secondary batteries are mounted is advanced, and the electric power consumption tends to increase. The capacity of the lithium secondary battery is thus being much increased, and because of an increase of a density of the battery, a reduction of a useless space capacity within the battery, and so on, a volume occupied by the nonaqueous electrolytic solution in the battery is becoming small. In consequence, it is the present situation that in the case of using the battery at a high temperature and at a high voltage, the battery performance is apt to be worsened by decomposition of a bit of the nonaqueous electrolytic solution.

PTL 1 discloses an organic alkali metal salt, such as lithium bis[oxalate (2-)O,O'] borate, etc., and describes application as an electrolyte for a nonaqueous secondary lithium battery which improves performances, such as formation of coating layer, cycle property, safety, conductivity, and low-temperature behavior.

PTL 2 shows that an organic lithium borate compound such as lithium tetrakis(acetate) borate has a small dipole moment and is favorably dissolved in a mixed solvent including a large amount of a fluorinated solvent having a low dielectric constant, and in comparison with an organic lithium salt known in the related art, exhibits a higher conductivity at a lower concentration and improves the storage characteristics at a high temperature as a nonaqueous electrolytic solution in which the compound is dissolved.

### CITATION LIST

### PATENT LITERATURE

PTL 1: JP-A 2000-268863
PTL 2: JP-A 2002-193973

### DISCLOSURE OF INVENTION

### TECHNICAL PROBLEM

A technical problem of the present invention is to provide a nonaqueous electrolytic solution which makes it possible not only to improve electrochemical characteristics when an energy storage device is used at a high temperature and a high voltage and the capacity retention rate after high-voltage and high-temperature storage, but also to suppress gas generation, an energy storage device using the same, and a novel lithium salt which can be used for the same.

### SOLUTION TO PROBLEM

As a result of intensive investigation of the performance of nonaqueous electrolytic solutions of the related art described above, the present inventors found that, actually in the nonaqueous electrolyte secondary battery of PTL 1, it was not possible to exhibit very much of an effect with respect to the problem of suppressing the generation of gas accompanying charging and discharging in a case of using the energy storage device at a high temperature and a high voltage.

As a result of intensive investigation in order to solve the problem described above, the present inventors found that, by adding a specific compound, it is possible to improve the capacity retention rate after storage in a case of using the energy storage device at a high temperature and a high voltage and it is possible to suppress gas generation, thereby completing the present invention.

Namely, the present invention provides the following (1) to (3).
(1) A nonaqueous electrolytic solution having an electrolyte salt dissolved in a nonaqueous solvent, the nonaqueous electrolytic solution containing:
   one or more selected from lithium salts represented by the following general formula (I), (III), or (IV).

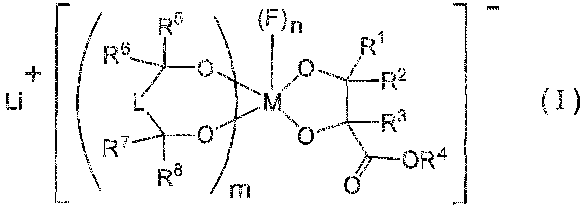

In the formula, R¹, R⁵, and R⁷ each independently represents a hydrogen atom, an alkyl group having 1 to 6 carbon atoms, or -C(=O)-OR⁹ group, R², R³, R⁶, and R⁸ each independently represents a hydrogen atom or an alkyl group having 1 to 6 carbon atoms, C(R⁵)(R⁶) and C(R⁷)(R⁸) may each independently represents C(=O), R⁴ and R⁹ each independently represents an alkyl group having 1 to 6 carbon atoms, a cycloalkyl group having 3 to 7 carbon atoms, an alkenyl group having 2 to 6 carbon atoms, an alkynyl group having 3 to 6 carbon atoms, or an aryl group having 6 to 12 carbon atoms, and L represents a single bond or an alkylene group having 1 to 4 carbon atoms, provided that at least one hydrogen atom of the alkyl group, the cycloalkyl group, the alkenyl group, the aryl group, or the alkylene group may be substituted with a halogen atom.

M represents a boron atom or phosphorus atom, m represents 0 or 1, and n represents 0, 2, or 4, provided that in a case where M is a boron atom, 2m + n = 2 and in a case where M is a phosphorus atom, 2m + n = 4.

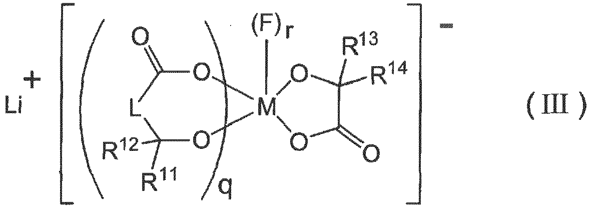

In the formula, R¹¹ and R¹³ each independently represents a hydrogen atom, a fluorine atom, or an alkyl group having 1 to 6 carbon atoms, R¹² represents a hydrogen atom, an alkyl group having 1 to 6 carbon atoms, a -C(=O)-OR¹⁵ group, a -P(=O)(-OR¹⁶) (-OR¹⁷) group, a -P(=O)(-R¹⁸) (-OR¹⁹) group, or a -P(=O)(-R²⁰) (-R²¹) group, R¹⁴ represents -C(=O)-OR¹⁵ group, a -P(=O)(-OR¹⁶) (-OR¹⁷) group, a -P(=O)(-R¹⁸) (-OR¹⁹) group, or a -P(=O)(-R²⁰) (-R²¹) group, and C(R¹¹)(R¹²) may represent C(=O). R¹⁵, R¹⁶, R¹⁷, R¹⁸, R¹⁹, R²⁰, and R²¹ each independently represents an alkyl group having 1 to 6 carbon atoms, a cycloalkyl group having 3 to 7 carbon atoms, an alkenyl group having 2 to 6 carbon atoms, an alkynyl group having 3 to 6 carbon atoms, or an aryl group having 6 to 12 carbon atoms, and L represents a single bond or an alkylene group having 1 to 4 carbon atoms.

At least one hydrogen atom of the alkyl group, the cycloalkyl group, the alkenyl group, the aryl group, or the alkylene group may be substituted with a halogen atom.

M represents a boron atom or phosphorus atom, q represents 0 or 1, and r represents 0, 2, or 4, provided that in a case where M is a boron atom, 2q + r = 2 and in a case where M is a phosphorus atom, 2q + r = 4.

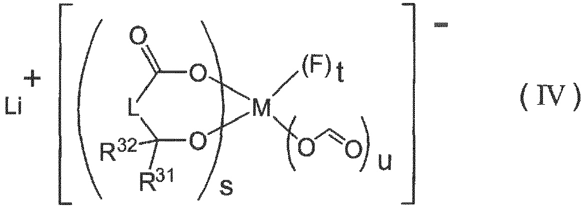

In the formula, R³¹ and R³² each independently represents a hydrogen atom, a halogen atom, or an alkyl group having 1 to 6 carbon atoms, and C(R³¹)(R³²) may represent C(=O). L represents a single bond or an alkylene group having 1 to 4 carbon atoms, M represents a boron atom or phosphorus atom, s represents an integer of 0 to 2, t represents an integer of 0 to 5, and u represents an integer of 1 to 6.

At least one hydrogen atom of the alkyl group or the alkylene group may be substituted with a halogen atom.

In a case where M is a boron atom, s = 1 and 2s + t + u = 4, and in a case where M is a phosphorus atom, 2s + t + u = 6.

(2) An energy storage device including:
   a positive electrode;
   a negative electrode; and
   a nonaqueous electrolytic solution having an electrolyte salt dissolved in a nonaqueous solvent,
   wherein the nonaqueous electrolytic solution contains one or more selected from lithium salt represented by the above general formula (I), (III), or (IV).
(3) A lithium salt represented by the following general formula (II), the above general formula (III), or the above general formula (IV):

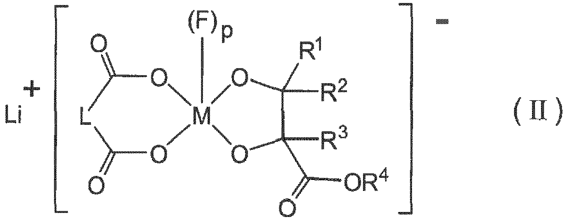

In the formula, R¹ represents a hydrogen atom, an alkyl group having 1 to 6 carbon atoms, or a -C(=O)-OR⁹ group, R² and R³ each independently represents a hydrogen atom or an alkyl group having 1 to 6 carbon atoms, R⁴ and R⁹ each independently represents an alkyl group having 1 to 6 carbon atoms, a cycloalkyl group having 3 to 7 carbon atoms, an alkenyl group having 2 to 6 carbon atoms, an alkynyl group having 3 to 6 carbon atoms, or an aryl group having 6 to 12 carbon atoms, and L represents a single bond or an alkylene group having 1 to 4 carbon atoms, provided that at least one hydrogen atom of the alkyl group, the cycloalkyl group, the alkenyl group, the aryl group, or the alkylene group may be substituted with a halogen atom.

M represents a boron atom or a phosphorus atom, and p represents 0 or 2, provided that in a case where M is a boron atom, p represents 0 and in a case where M is a phosphorus atom, p represents 2.

### ADVANTAGEOUS EFFECTS OF INVENTION

According to the present invention, it is possible to provide a nonaqueous electrolytic solution which makes it possible not only to improve the electrochemical characteristics when an energy storage device is used at a high temperature and a high voltage and the capacity retention rate after high-voltage and high-temperature storage, but also to suppress the gas generation, an energy storage device using the same, and a novel lithium salt which can be used for the same.

### DESCRIPTION OF EMBODIMENTS

### [Nonaqueous electrolytic solution]

With respect to the nonaqueous electrolytic solution of the present invention, one or more selected from lithium salts represented by the general formulae (I), (III), or (IV) is contained in a nonaqueous electrolytic solution in which an electrolyte salt is dissolved in a nonaqueous solvent.

The reason why it is possible for the nonaqueous electrolytic solution of the present invention to greatly improve the electrochemical characteristics in a case of using an energy storage device at a high temperature and a high voltage is not clear; however, the reason is considered to be as follows.

The lithium salt represented by the general formula (I) used in the nonaqueous electrolytic solution of the present invention is a complex salt which has an α,β-dihydroxy carboxylic acid ester structure and which also has a metal atom, such as a boron atom or a phosphorus atom. Since the reactivity on the electrode is much more enhanced by the α,β-dihydroxy carboxylic acid ester structure, the reaction is carried out quickly at active sites of both the positive electrode and the negative electrode. Furthermore, it is considered that a firm coating film is formed since a metal atom, such as a boron atom or a phosphorus atom is contained in the coating film, whereby the high-temperature and high-voltage storage characteristics are improved and the gas generation due to decomposition of the solvent is suppressed. (Sometimes referred to as "nonaqueous electrolytic solution of the first embodiment of the present invention")

The lithium salt represented by the general formula (III) used in the nonaqueous electrolytic solution of the present invention is a complex salt which has a phosphono hydroxycarboxylic acid structure or an alkoxycarbonyl hydroxycarboxylic acid structure and which also has a metal atom, such as a boron atom or a phosphorus atom. Since the reactivity on the electrode is much more enhanced by the phosphono hydroxycarboxylic acid structure or the alkoxycarbonyl hydroxycarboxylic acid structure, the reaction is carried out quickly at active sites of both the positive electrode and the negative electrode. Furthermore, it is considered that a firm coating film is formed since a metal atom, such as a boron atom or a phosphorus atom is contained in the coating film, whereby the high-temperature and high-voltage storage characteristics are improved and the gas generation due to decomposition of the solvent is suppressed in a broad temperature range. (Sometimes referred to as "nonaqueous electrolytic solution of the second embodiment of the present invention")

The lithium salt represented by the general formula (IV) used in the nonaqueous electrolytic solution of the present invention is a complex salt which has a formyloxy group and which has a boron atom. Since the reactivity on the electrode is much more enhanced by the formyloxy group, the reaction is carried out quickly at active sites of both the positive electrode and the negative electrode. Furthermore, it is considered that a firm coating film is formed since a boron atom is contained in the coating film, whereby the high-temperature and high-voltage storage characteristics are improved and the gas generation due to decomposition of the solvent is suppressed. (Sometimes referred to as "nonaqueous electrolytic solution of the third embodiment of the present invention")

The lithium salt contained in the nonaqueous electrolytic solution of the first embodiment of the present invention is represented by the following general formula (I).

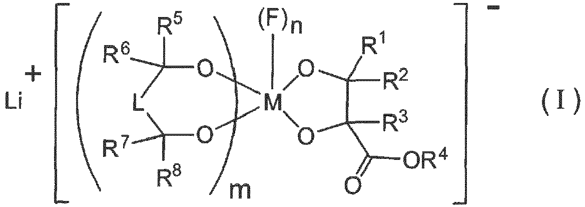

In the formula, R¹ R⁵, and R⁷ each independently represents a hydrogen atom, an alkyl group having 1 to 6 carbon atoms, or a -C(=O)-OR⁹ group, R², R³, R⁶, and R⁸ each independently represents a hydrogen atom or an alkyl group having 1 to 6 carbon atoms, and C(R⁵) (R⁶) and C(R⁷)(R⁸) may each independently represent C(=O). R⁴ and R⁹ each independently represents an alkyl group having 1 to 6 carbon atoms, a cycloalkyl group having 3 to 7 carbon atoms, an alkenyl group having 2 to 6 carbon atoms, an alkynyl group having 3 to 6 carbon atoms, or an aryl group having 6 to 12 carbon atoms, and L represents a single bond or an alkylene group having 1 to 4 carbon atoms.

The hydrogen atom of at least one of the alkyl group, the cycloalkyl group, the alkenyl group, the aryl group, or the alkylene group may be substituted with a halogen atom.

M represents a boron atom or a phosphorus atom, m represents 0 or 1, and n represents 0, 2, or 4. In a case where M is a boron atom, 2m + n = 2 and in a case where M is a phosphorus atom, 2m + n = 4.

In the general formula (I), R¹, R⁵, and R⁷ each independently represents a hydrogen atom, an alkyl group having 1 to 6 carbon atoms in which at least one hydrogen atom may be substituted with a halogen atom, or a -C(=O)-OR⁹ group. A hydrogen atom, an alkyl group having 1 or 2 carbon atoms, or a -C(=O)-OR⁹ group is preferable, and a hydrogen atom, or a -C(=O)-OR⁹ group is more preferable.

R², R³, R⁶, and R⁸ each independently represents a hydrogen atom or an alkyl group having 1 to 6 carbon atoms, preferably a hydrogen atom or an alkyl group having 1 or 2 carbon atoms, and more preferably a hydrogen atom.

R⁴ and R⁹ each independently represents an alkyl group having 1 to 6 carbon atoms in which at least one hydrogen atom may be substituted with a halogen atom, a cycloalkyl group having 3 to 7 carbon atoms in which at least one hydrogen atom may be substituted with a halogen atom, an alkenyl group having 2 to 6 carbon atoms in which at least one hydrogen atom may be substituted with a halogen atom, an alkynyl group having 3 to 6 carbon atoms, or an aryl group having 6 to 12 carbon atoms in which at least one hydrogen atom may be substituted with a halogen atom. Among the above, an alkyl group having 1 to 4 carbon atoms in which at least one hydrogen atom may be substituted with a halogen atom, a cycloalkyl group having 3 to 6 carbon atoms in which at least one hydrogen atom may be substituted with a halogen atom, an alkenyl group having 2 to 4 carbon atoms in which at least one hydrogen atom may be substituted with a halogen atom, an alkynyl group having 3 to 5 carbon atoms, or an aryl group having 6 to 8 carbon atoms in which at least one hydrogen atom may be substituted with a halogen atom is preferable, and an alkyl group having 1 to 3 carbon atoms, a cycloalkyl group having 5 to 6 carbon atoms, an alkenyl group having 2 to 3 carbon atoms, an alkynyl group having 3 to 4 carbon atoms, or an aryl group having 6 to 8 carbon atoms, where at least one hydrogen atom may be substituted with a halogen atom, is more preferable.

L represents a single bond or an alkylene group having 1 to 4 carbon atoms in which at least one hydrogen atom may be substituted with a halogen atom, preferably a single bond or an alkylene group having 1 or 2 carbon atoms in which at least one hydrogen atom may be substituted with a halogen atom, and even more preferably a single bond or an alkylene group having 1 carbon atom in which at least one hydrogen atom may be substituted with a halogen atom.

Suitable examples of R¹, R⁵, and R⁷ include a hydrogen atom, straight-chain alkyl groups, such as, a methyl group, an ethyl group, a n-propyl group, a n-butyl group, a n-pentyl group, a n-hexyl group, etc.; branched alkyl groups, such as an isopropyl group, a sec-butyl group, a tert-butyl group, etc.; halogenated alkyl groups, such as a fluoromethyl group, a difluoromethyl group, a trifluoromethyl group, a 2-chloroethyl group, a 2-fluoroethyl group, a 2,2,2-trifluoroethyl group, a 2,2,3,3-tetrafluoropropyl group, a 2,2,3,3,3-pentafluoropropyl group, etc.; a -C(=O)-OR⁹ group, and the like. Among the above, a hydrogen atom, a methyl group, an ethyl group, a n-propyl group, an isopropyl group, a trifluoromethyl group, a 2,2,2-trifluoroethyl group, or -C(=O)-OR⁹ is preferable, and a hydrogen atom or -C(=O)-OR⁹ is more preferable. Suitable examples of R², R³, R⁶, and R⁸ include a hydrogen atom, straight-chain alkyl groups, such as a methyl group, an ethyl group, a n-propyl group, a n-butyl group, a n-pentyl group, a n-hexyl group, etc.; branched-chain alkyl groups, such as an isopropyl group, a sec-butyl group, a tert-butyl group, etc., and the like, and among the above, a hydrogen atom, a methyl group, or an ethyl group is preferable, and a hydrogen atom is more preferable.

Suitable examples of R⁴, and R⁹ include straight-chain alkyl groups, such as a methyl group, an ethyl group, a n-propyl group, a n-butyl group, a n-pentyl group, a n-hexyl group, etc.; branched-chain alkyl groups, such as an isopropyl group, a sec-butyl group, a 2-pentyl group, a 3-pentyl group, a tert-butyl group, a tert-amyl group, etc.; halogenated alkyl groups, such as a 2-chloroethyl group, a 2-fluoroethyl group, a 2,2,2-trifluoroethyl group, a 3,3,3-trifluoropropyl group, a 2,2,3,3-tetrafluoropropyl group, a 2,2,3,3,3-pentafluoropropyl group, etc.; cycloalkyl groups, such as a cyclopropyl group, a cyclobutyl group, a cyclopentyl group, a cyclohexyl group, and a cycloheptyl group; alkenyl groups, such as a vinyl group, a 1-propen-1-yl group, a 2-propen-1-yl group, a 2-buten-1-yl group, a 3-buten-1-yl group, a 4-penten-1-yl group, a 5-hexen-1-yl group, a 1-propen-2-yl group, a 1-buten-2-yl group, a 2-methyl-2-propen-1-yl group, etc.; alkynyl groups, such as a 2-propynyl group, a 2-butynyl group, a 3-butynyl group, a 1-methyl-2-propynyl group, a 1,1-dimethyl-2-propynyl group, etc.; and aryl groups, such as a phenyl group, a 2-methyl phenyl group, a 3-methyl phenyl group, a 4-methyl phenyl group, a 4-tert-butyl phenyl group, a 2-fluorophenyl group, a 4-fluorophenyl group, a 2-trifluoromethylphenyl group, a 3-trifluoromethylphenyl group, a 4-trifluoromethylphenyl group, etc. Among the above, a methyl group, an ethyl group, a n-propyl group, a n-butyl group, an isopropyl group, a 2,2,2-trifluoroethyl group, a 2,2,3,3-tetrafluoropropyl group, a cyclopentyl group, a cyclohexyl group, a vinyl group, a 2-propen-1-yl group, a 2-propynyl group, or a 1-methyl-2-propynyl group is preferable, and a methyl group, an ethyl group, or a 2,2,2-trifluoroethyl group is more preferable.

Suitable examples of L include a single bond, alkylene groups, such as a methylene group, an ethane-1,2-diyl group, a propane-1,3-diyl group, etc.; and halogenated alkylene groups, such as a fluoromethylene group, a difluoromethylene group, a 1,1,2,2-tetrafluoroethane-1,2-diyl group, etc., and among the above, a single bond, a methylene group, an ethane-1,2-diyl group, or a difluoromethylene group is preferable, and a single bond, a methylene group, or a difluoromethylene group is more preferable.

In addition, the compound having one α,β-dihydroxy carboxylic acid ester structure is preferable to the compound having two of the structure, and it is more preferable that an electron-withdrawing group, such as a fluorine atom or an -O-C(=O)-C(=O)-O- group, is present on the boron atom or the phosphorus atom as a substituent, since the reactivity of the lithium salt having the α,β-dihydroxy carboxylic acid ester structure according to the present invention is enhanced and the electrochemical characteristics at a high temperature are improved.

In the general formula (I), an optical isomer may be present. R form and S form may be present as the optical isomers; however, in the present invention, both exhibit the effects of the present invention. In addition, it is possible to use the optical isomers as a mixture having an arbitrary ratio, and the effect of the present invention is exhibited in both the case where one of the optical isomers is excessively present (optically active substance) and the case where the optical isomers are present in the same amount (racemate).

Furthermore, in the general formula (I), in the case where R¹ and R² are not the same, or the case where m represents 1 and R⁵ and R⁶, or R⁷ and R⁸ are not the same, there may be cases where there are two or more of an asymmetric carbon and a diastereomer may be present in addition to the optical isomers described above. Since the chemical or electrochemical properties of diastereomers are not necessarily the same, the extent of the effect of the present invention may be different depending on the presence ratio of the diastereomers; however, the effect of the present invention is exhibited in both the case where any of these optical isomers is used solely and the case where the plural optical isomers are used as a mixture.

Suitable examples of the lithium salt represented by the general formula (I) include the specific lithium salts shown below.

(i) In the case where M is a boron atom, the following compounds can be suitably exemplified.

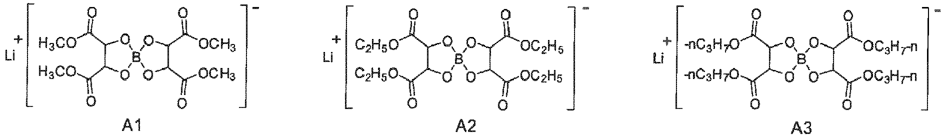

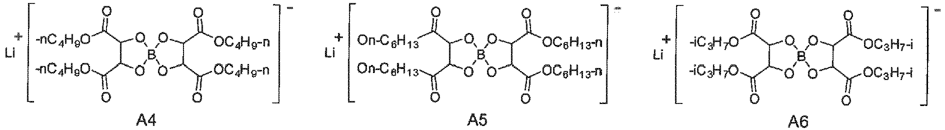

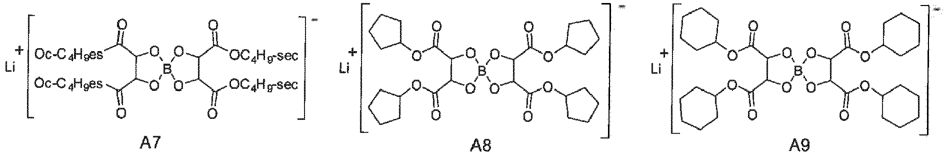

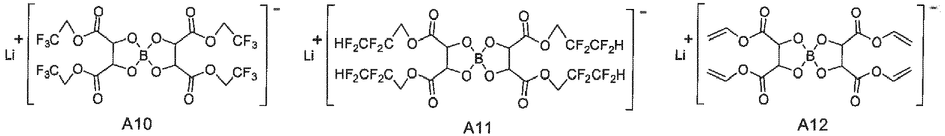

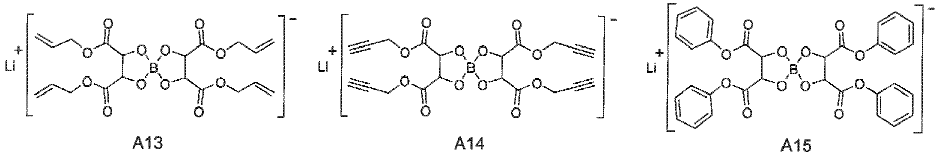

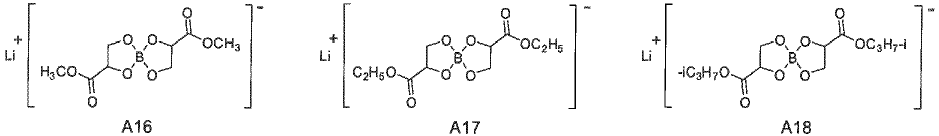

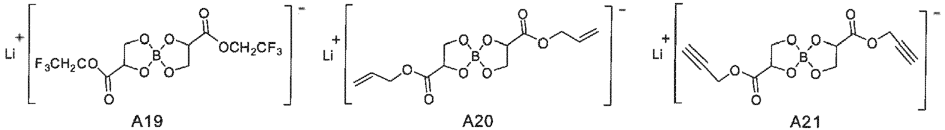

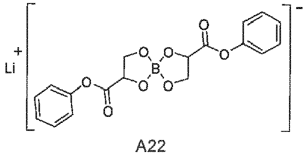

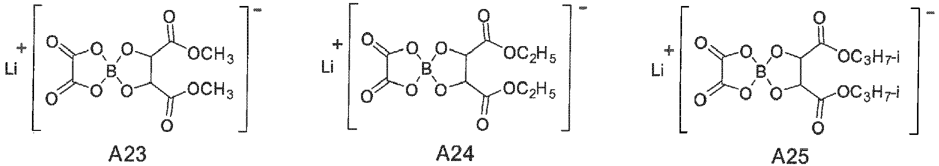

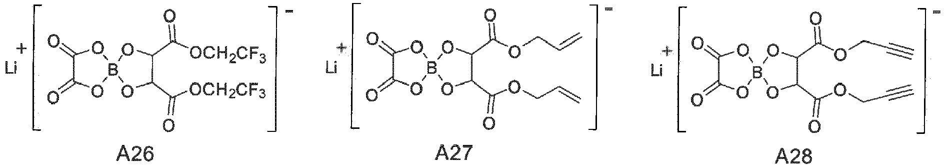

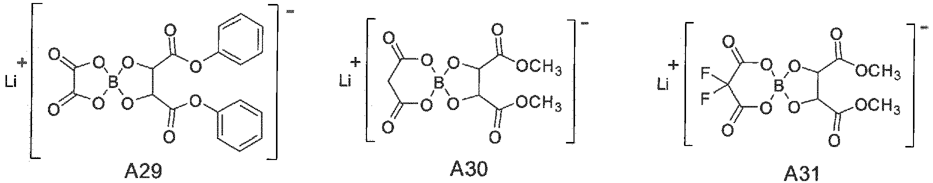

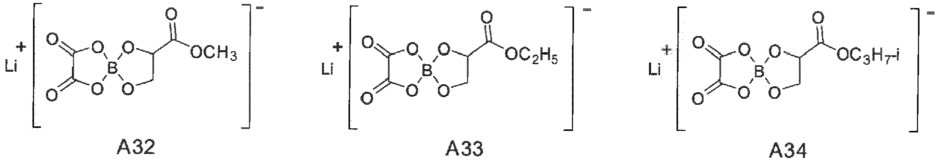

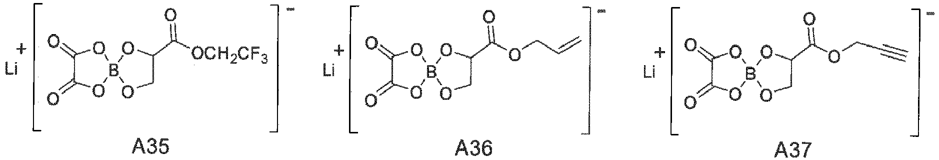

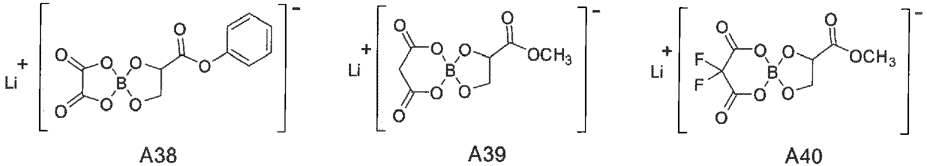

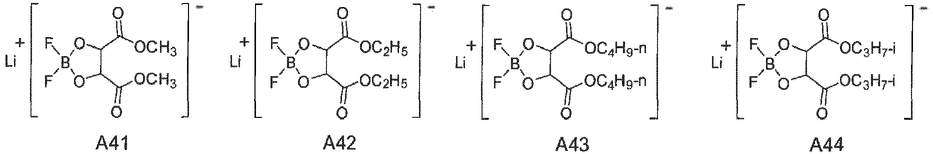

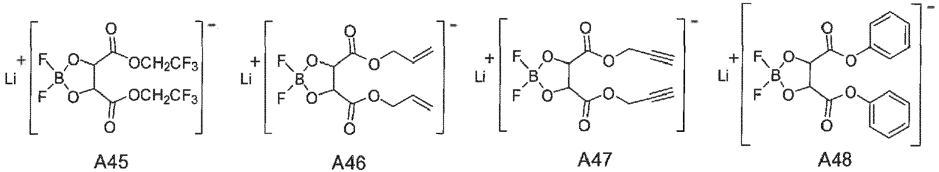

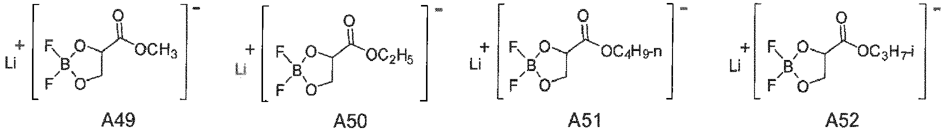

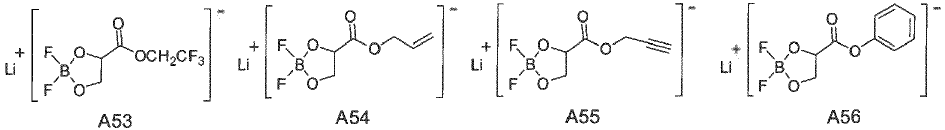

(ii) In the case where M is a phosphorus atom, the following compounds can be suitably exemplified.

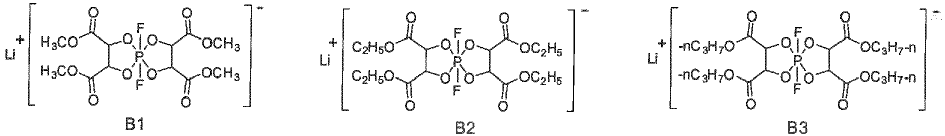

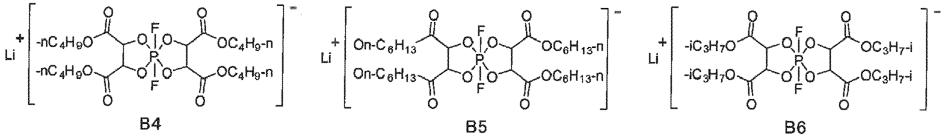

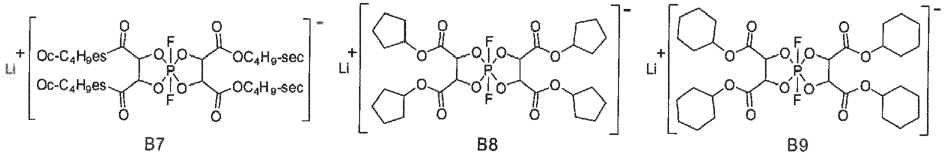

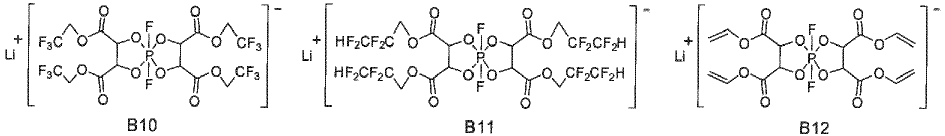

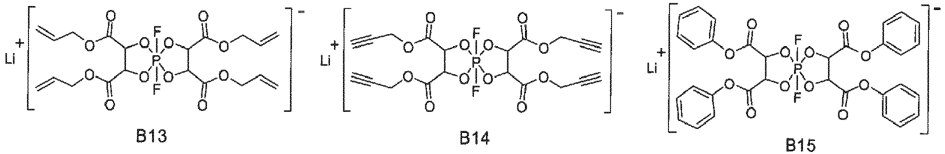

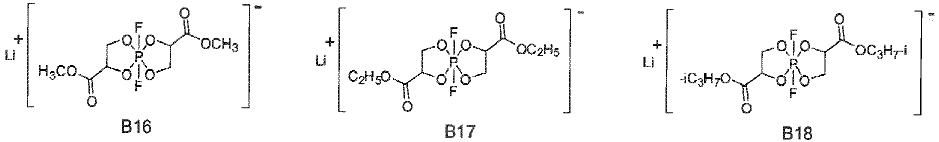

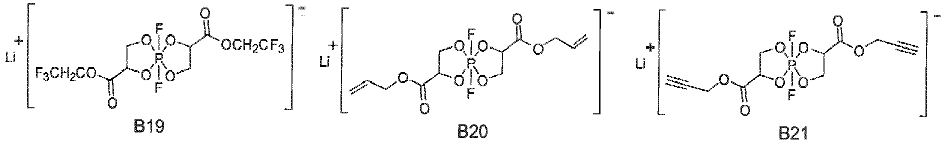

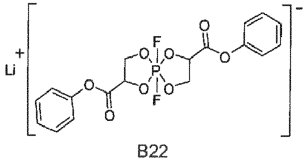

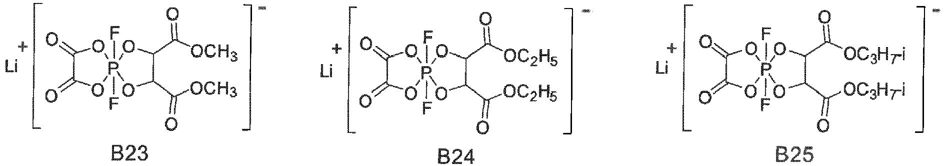

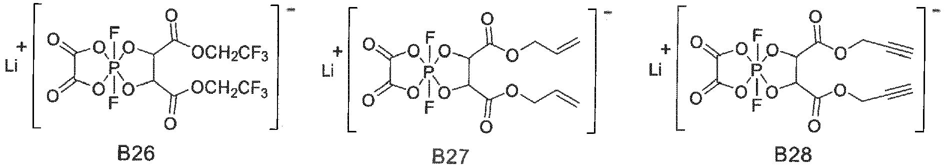

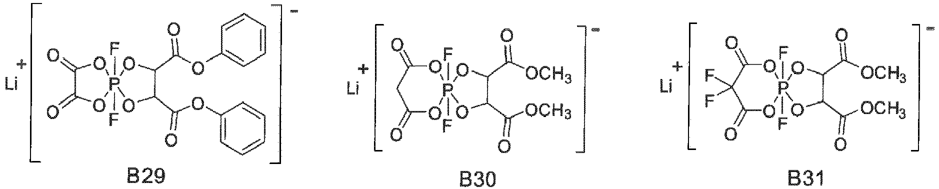

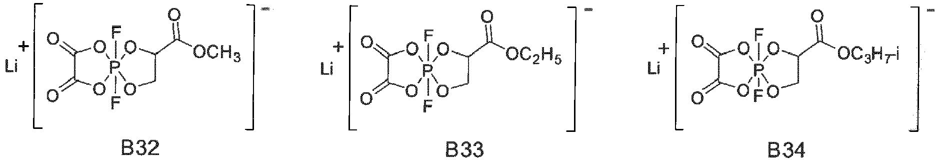

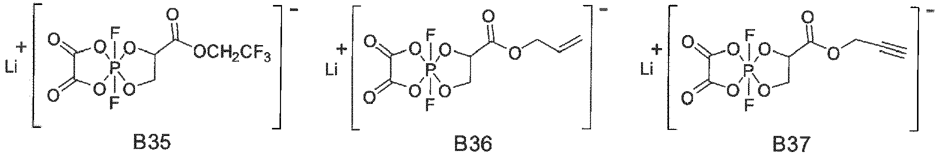

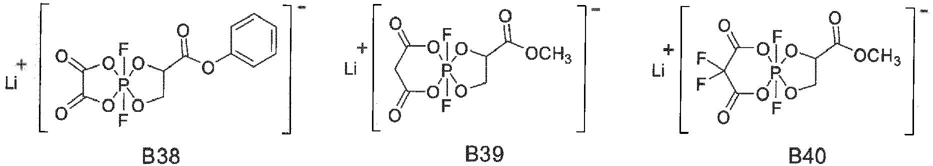

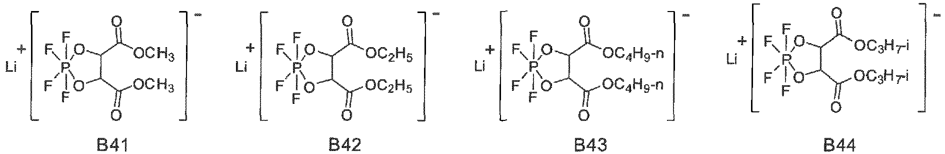

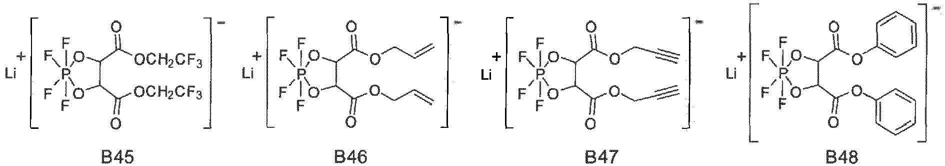

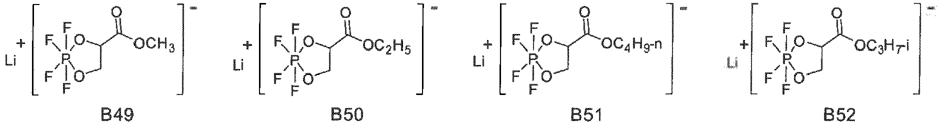

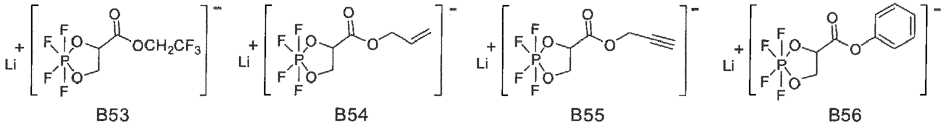

Among the lithium salts described above, the lithium salt having the structural formula of any of A1, A2, A6, A10, A13, A14, A16 to A21, A23 to A28, A31 to A37, A40 to A42, A44 to A47, A49, A50, A52 to A55, B1, B2, B6, B10, B13, B14, B16 to B21, B23 to B28, B31 to B37, B40 to B42, B44 to B47, B49, B50, and B52 to B55 is more preferable, and A1, A2, A10, A23, A24, A26, A31, A41, A42, A45, B1, B2, B10, B23, B24, B26, B31, B41, B42, or B45 is more preferable.

Among these, a particularly preferable lithium salt is one or more selected from lithium bis(dimethyl-2,3-di(hydroxy-kO) butane dioate) borate (structural formula A1), lithium bis(diethyl-2,3-di(hydroxy-kO) butane dioate) borate (structural formula A2), lithium (dimethyl-2,3-di(hydroxy-kO) butane dioate) (oxalate) borate (structural formula A23), lithium (diethyl-2,3-di(hydroxy-kO) butane dioate) (oxalate) borate (structural formula A24), lithium difluoro(dimethyl-2,3-di(hydroxy-kO) butane dioate) borate (structural formula A41), lithium (diethyl-2,3-di(hydroxy-kO) butane dioate) difluoroborate (structural formula A42), lithium bis(dimethyl-2,3-di(hydroxy-kO) butane dioate) difluorophosphate (structural formula B1), lithium bis(diethyl-2,3-di(hydroxy-kO) butane dioate) difluorophosphate (structural formula B2), lithium difluoro(dimethyl-2,3-di(hydroxy-kO) butane dioate) (oxalate) phosphate (structural formula B23), lithium difluoro(diethyl-2,3-di(hydroxy-kO) butane dioate) (oxalate) phosphate (structural formula B24), lithium (dimethyl-2,3-di(hydroxy-kO) butane dioate) tetrafluorophosphate (structural formula B41), and lithium (diethyl-2,3-di(hydroxy-kO) butane dioate) tetrafluorophosphate (structural formula B42).

However, here, "kO" indicates that the metal is coordinated by the O (oxygen) atom.

In the nonaqueous electrolytic solution of the first embodiment of the present invention, the content of the lithium salt represented by the general formula (I) is preferably 0.001 to 10% by mass in the nonaqueous electrolytic solution. If the content is 10% by mass or less, there is less concern that a surface film is excessively formed on an electrode, so that in the case of using a battery at a high temperature and at a high voltage, the storage characteristics are worsened, while if the content is 0.001% by mass or more, the formation of the coating film is sufficient and the effect of improving the storage characteristics is enhanced in a case of using a battery at a high temperature and a high voltage. The content is preferably 0.01% by mass or more and more preferably 0.3% by mass or more in the nonaqueous electrolytic solution. In addition, the upper limit thereof is preferably 5% by mass or less and more preferably 3% by mass or less.

The lithium salt contained in the nonaqueous electrolytic solution of the second embodiment of the present invention is represented by the following general formula (III).

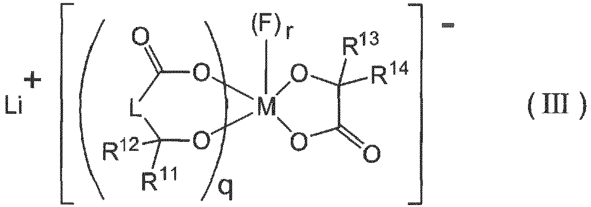

In the formula, R¹¹ and R¹³ each independently represents a hydrogen atom, a fluorine atom, or an alkyl group having 1 to 6 carbon atoms, R¹² represents a hydrogen atom, an alkyl group having 1 to 6 carbon atoms, a -C(=O)-OR¹⁵ group, a -P(=O)(-OR¹⁶)(-OR¹⁷) group, a -P(=O)(-R¹⁸)(-OR¹⁹) group, or a -P(=O)(-R²⁰)(-R²¹) group, R¹⁴ represents a -C(=O)-OR¹⁵ group, a -P(=O)(-OR¹⁶) (-OR¹⁷) group, a -P(=O)(-R¹⁸) (-OR¹⁹) group, or a -P(=O)(-R²⁰) (-R²¹) group, and C(R¹¹)R¹²) may represent a C(=O). R¹⁵, R¹⁶, R¹⁷, R¹⁸, R¹⁹, R²⁰, and R²¹ each independently represents an alkyl group having 1 to 6 carbon atoms, a cycloalkyl group having 3 to 7 carbon atoms, an alkenyl group having 2 to 6 carbon atoms, an alkynyl group having 3 to 6 carbon atoms, or an aryl group having 6 to 12 carbon atoms, and L represents a single bond or an alkylene group having 1 to 4 carbon atoms.

At least one hydrogen atom of the alkyl group, the cycloalkyl group, the alkenyl group, the aryl group, or the alkylene group may be substituted with a halogen atom.

M represents a boron atom or phosphorus atom, q represents 0 or 1, and r represents 0, 2, or 4. In a case where M is a boron atom, 2q + r = 2, and in a case where M is a phosphorus atom, 2q + r = 4.

In the general formula (III), R¹¹ and R¹³ each independently represents a hydrogen atom, a fluorine atom, or an alkyl group having 1 to 6 carbon atoms in which at least one hydrogen atom may be substituted with a halogen atom, preferably a hydrogen atom or an alkyl group having 1 or 2 carbon atoms, and more preferably a hydrogen atom.

R¹² represents a hydrogen atom, an alkyl group having 1 to 6 carbon atoms in which at least one hydrogen atom may be substituted with a halogen atom, a -C(=O)-OR¹⁵ group, a -P(=O)(-OR¹⁶) (-OR¹⁷) group, a -P(=O)(-R¹⁸) (-OR¹⁹) group, or a -P(=O)(-R²⁰) (-R²¹) group, preferably a hydrogen atom, an alkyl group having 1 or 2 carbon atoms, a -C(=O)-OR¹⁵ group, a -P(=O)(-OR¹⁶) (-OR¹⁷) group, a -P(=O)(-R¹⁸) (-OR¹⁹) group, or a -P(=O)(-R²⁰) (-R²¹) group, and more preferably a hydrogen atom or a -P(=O)(-OR¹⁶) (-OR¹⁷) group.

R¹⁴ represents a -C(=O)-OR¹⁵ group, -P(=O)(-OR¹⁶) (-OR¹⁷) group, -P(=O)(-R¹⁸) (-OR¹⁹) group, or a -P(=O)(-R²⁰) (-R²¹) group, preferably a -C(=O)-OR¹⁵ group, or a -P(=O)(-OR¹⁶) (-OR¹⁷) group, and more preferably a -P(=O)(-OR¹⁶) (-OR¹⁷) group.

C(R¹¹)(R¹²) may represent C(=O).

R¹⁵, R¹⁶, R¹⁷, R¹⁸, R¹⁹, R²⁰, and R²¹ each independently represents an alkyl group having 1 to 6 carbon atoms in which at least one hydrogen atom may be substituted with a halogen atom, a cycloalkyl group having 3 to 7 carbon atoms in which at least one hydrogen atom may be substituted with a halogen atom, an alkenyl group having 2 to 6 carbon atoms in which at least one hydrogen atom may be substituted with a halogen atom, an alkynyl group having 3 to 6 carbon atoms, or an aryl group having 6 to 12 carbon atoms in which at least one hydrogen atom may be substituted with a halogen atom, preferably an alkyl group having 1 to 4 carbon atoms in which at least one hydrogen atom may be substituted with a halogen atom, a cycloalkyl group having 3 to 6 carbon atoms in which at least one hydrogen atom may be substituted with a halogen atom, an alkenyl group having 2 to 4 carbon atoms in which at least one hydrogen atom may be substituted with a halogen atom, an alkynyl group having 3 to 5 carbon atoms, or an aryl group having 6 to 8 carbon atoms in which at least one hydrogen atom may be substituted with a halogen atom, and more preferably an alkyl group having 1 to 3 carbon atoms in which at least one hydrogen atom may be substituted with a halogen atom, a cycloalkyl group having 5 to 6 carbon atoms, an alkenyl group having 2 to 3 carbon atoms, an alkynyl group having 3 to 4 carbon atoms, or an aryl group having 6 to 8 carbon atoms.

L represents a single bond, or an alkylene group having 1 to 4 carbon atoms in which at least one hydrogen atom may be substituted with a halogen atom, preferably a single bond, or an alkylene group having 1 or 2 carbon atoms in which at least one hydrogen atom may be substituted with a halogen atom, and more preferably a single bond, or an alkylene group (methylene group) having 1 carbon atom in which at least one hydrogen atom may be substituted with a halogen atom.

M represents a boron atom or phosphorus atom, and a boron atom is preferable.

Suitable examples of R¹¹ and R¹³ include a hydrogen atom, a fluorine atom, straight-chain alkyl groups, such as a methyl group, an ethyl group, a n-propyl group, a n-butyl group, etc.; branched-chain alkyl groups, such as an isopropyl group, a sec-butyl group, a tert-butyl group, etc.; halogenated alkyl groups, such as a fluoromethyl group, a difluoromethyl group, a trifluoromethyl group, a 2-chloroethyl group, a 2-fluoroethyl group, a 2,2,2-trifluoroethyl group, a 2,2,3,3-tetrafluoropropyl group, a 2,2,3,3,3-pentafluoropropyl group, etc., and the like. Among the above, a hydrogen atom, a fluorine atom, a methyl group, an ethyl group, a n-propyl group, an isopropyl group, a trifluoromethyl group, or a 2,2,2-trifluoroethyl group is preferable, and a hydrogen atom is more preferable.

Suitable examples of R¹² include a hydrogen atom, straight-chain alkyl groups, such as a methyl group, an ethyl group, a n-propyl group, a n-butyl group, etc.; branched alkyl groups, such as an isopropyl group, a sec-butyl group, a tert-butyl group, etc.; halogenated alkyl groups, such as a fluoromethyl group, a difluoromethyl group, a trifluoromethyl group, a 2-chloroethyl group, a 2-fluoroethyl group, a 2,2,2-trifluoroethyl group, a 2,2,3,3-tetrafluoropropyl group, a 2,2,3,3,3-pentafluoropropyl group, etc.; a -C(=O)-OR¹⁵ group, a -P(=O)(-OR¹⁶) (-OR¹⁷) group, a -P(=O)(-R¹⁸) (-OR¹⁹) group, a -P(=O)(-R²⁰) (-R²¹) group, and the like. Among the above, a hydrogen atom, a methyl group, an ethyl group, a -C(=O)-OR¹⁵ group, a -P(=O)(-OR¹⁶) (-OR¹⁷) group, a -P(=O)(-R¹⁸) (-OR¹⁹) group, or a -P(=O)(-R²⁰) (-R²¹) group is preferable, and a hydrogen atom, a -C(=O)-OR¹⁵ group, or a -P(=O)(-OR¹⁶) (-OR¹⁷) group is more preferable.

Suitable examples of R¹⁴ include dialkoxyphosphoryl groups, such as a dimethoxyphosphoryl group, a diethoxyphosphoryl group, a dipropoxyphosphoryl group, a dibutoxyphosphoryl group, a di(isopropoxy) phosphoryl group, a di(cyclohexyloxy) phosphoryl group, a di(2,2,2-trifluoroethoxy) phosphoryl group, a di(2-propen-1-yloxy) phosphoryl group, a di(2-propynyloxy) phosphoryl group, etc.; diaryloxyphosphoryl groups, such as a diphenoxyphosphoryl group, etc.; alkoxy (alkyl) phosphoryl groups, such as a methoxy (methyl) phosphoryl group, an ethoxy (ethyl) phosphoryl group, a propoxy (propyl) phosphoryl group, etc.; aryloxy (aryl) phosphoryl groups, such as a phenoxy (phenyl) phosphoryl group, etc.; dialkylphosphoryl groups, such as a dimethylphosphoryl group, a diethylphosphoryl group, a dipropylphosphoryl group, etc.; diarylphosphoryl groups, such as a diphenylphosphoryl group, etc.; alkoxycarbonyl groups, such as a methoxycarbonyl group, an ethoxycarbonyl group, an isopropoxycarbonyl group, a 2,2,2-trifluoroethoxycarbonyl group, a 2-propen-1-yloxycarbonyl group, a 2-propynyloxycarbonyl group, etc.; and aryloxycarbonyl groups, such as a phenoxycarbonyl group, etc.

Among the above, a dimethoxyphosphoryl group, a diethoxyphosphoryl group, a dipropoxyphosphoryl group, a dibutoxyphosphoryl group, a di(isopropoxy) phosphoryl group, a di(2,2,2-trifluoroethoxy) phosphoryl group, a di(2-propen-1-yloxy) phosphoryl group, a di(2-propynyloxy) phosphoryl group, a methoxy (methyl) phosphoryl group, an ethoxy (ethyl) phosphoryl group, a dimethylphosphoryl group, a diethylphosphoryl group, a methoxycarbonyl group, an ethoxycarbonyl group, an isopropoxycarbonyl group, a 2,2,2-trifluoroethoxycarbonyl group, a 2-propen-1-yloxycarbonyl group, or a 2-propynyloxycarbonyl group is preferable, and a dimethoxyphosphoryl group, a diethoxyphosphoryl group, a di(2,2,2-trifluoroethoxy) phosphoryl group, a methoxycarbonyl group, an ethoxycarbonyl group, or a 2,2,2-trifluoroethoxycarbonyl group is more preferable.

Suitable examples of R¹⁵, R¹⁶, R¹⁷, R¹⁸, R¹⁹, R²⁰, and R²¹ include straight-chain alkyl groups, such as a methyl group, an ethyl group, a n-propyl group, a n-butyl group, a n-pentyl group, a n-hexyl group, etc.; branched alkyl groups, such as an isopropyl group, a sec-butyl group, a 2-pentyl group, a 3-pentyl group, a tert-butyl group, a tert-amyl group, etc.; halogenated alkyl groups, such as a 2-chloroethyl group, a 2-fluoroethyl group, a 2,2,2-trifluoroethyl group, a 3,3,3-trifluoropropyl group, a 2,2,3,3-tetrafluoropropyl group, a 2,2,3,3,3-pentafluoropropyl group, etc.; cycloalkyl groups, such as a cyclopropyl group, a cyclobutyl group, a cyclopentyl group, a cyclohexyl group, etc.; alkenyl groups, such as a vinyl group, a 1-propen-1-yl group, a 2-propen-1-yl group, a 2-buten-1-yl group, a 3-buten-1-yl group, a 4-penten-1-yl group, a 5-hexen-1-yl group, a 1-propen-2-yl group, a 1-buten-2-yl group, a 2-methyl-2-propen-1-yl group, etc.; alkynyl groups, such as an ethynyl group, a 2-propynyl group, a 2-butynyl group, a 3-butynyl group, a 1-methyl-2-propynyl group, a 1,1-dimethyl-2-propynyl group, etc.; and aryl groups, such as a phenyl group, a 2-methyl phenyl group, a 3-methyl phenyl group, a 4-methyl phenyl group, a 4-tert-butyl phenyl group, a 2-fluorophenyl group, a 4-fluorophenyl group, a 2-trifluoromethyl phenyl group, a 3-trifluoromethyl phenyl group, a 4-trifluoromethyl phenyl group, etc., and the like.

Among the above, a methyl group, an ethyl group, a n-propyl group, a n-butyl group, an isopropyl group, a 2,2,2-trifluoroethyl group, a 2,2,3,3-tetrafluoropropyl group, a cyclopentyl group, a cyclohexyl group, a vinyl group, a 2-propen-1-yl group, a 2-propynyl group, or a 1-methyl-2-propynyl group is preferable, and a methyl group, an ethyl group, or a 2,2,2-trifluoroethyl group is more preferable.

Suitable examples of L include a single bond, a methylene group, an ethane-1,2-diyl group, a propane-1,3-diyl group, and halogenated alkylene groups, such as a fluoromethylene group, a difluoromethylene group, a 1,1,2,2-tetrafluoroethane-1,2-diyl group, etc., and among the above, a single bond, a methylene group, an ethane-1,2-diyl group, or a difluoromethylene group is preferable, and a single bond, a methylene group, or a difluoromethylene group is more preferable.

In addition, for the phosphono hydroxycarboxylic acid structure or alkoxycarbonyl hydroxycarboxylic acid structure, the compound having one of the structure is preferable to the compound having two of the structure, and furthermore, it is more preferable that the electron-withdrawing group, such as a fluorine atom or -O-C(=O)-C(=O)-O- group, is present on the boron atom or the phosphorus atom as a substituent, since the reactivity of the lithium salt having the α,β-dihydroxy carboxylic acid ester structure according to the present invention is enhanced and the electrochemical characteristics are improved at a high temperature.

Suitable examples of the lithium salt represented by the general formula (III) include the specific lithium salts shown below.

(i) In the case where M is a boron atom and R¹⁴ is -P(=O)(-OR¹⁶)(-OR¹⁷) group, -P(=O)(-R¹⁸) (-OR¹⁹) group, or -P(=O)(-R²⁰)-(R²¹) group, the following compounds can be suitably exemplified.

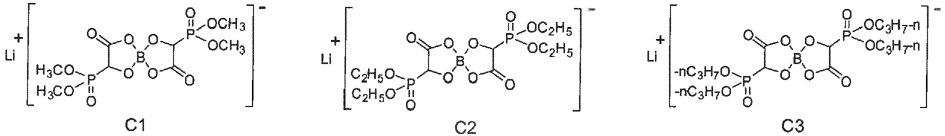

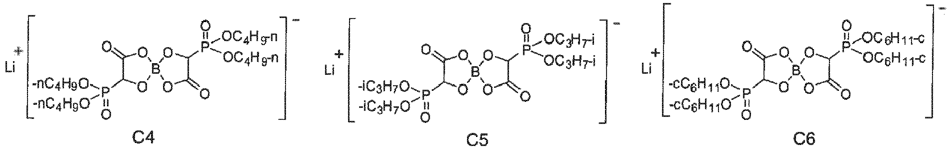

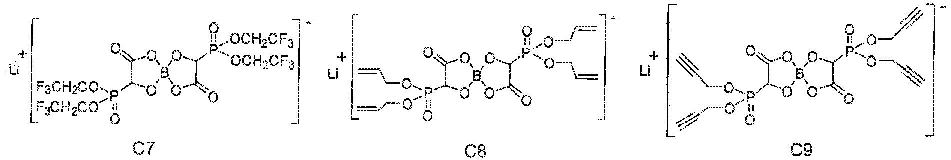

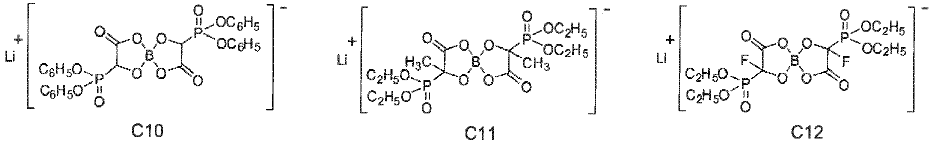

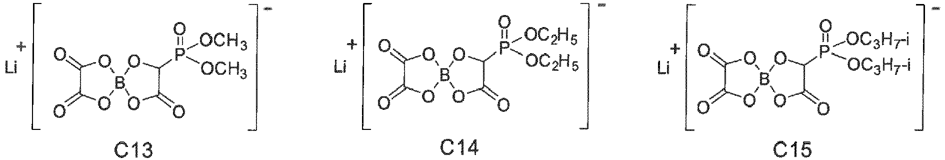

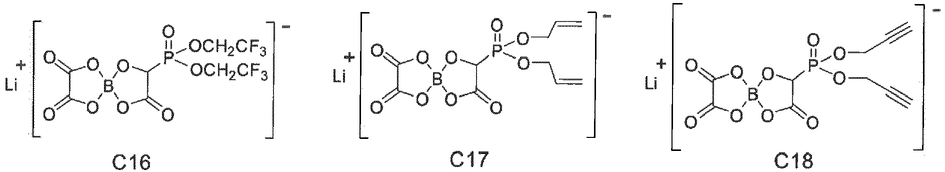

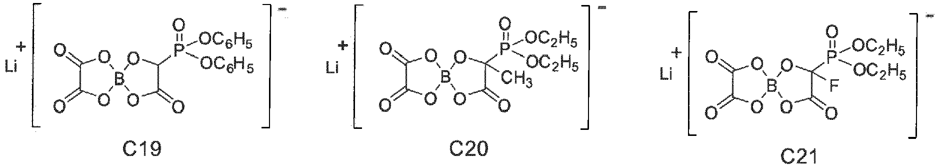

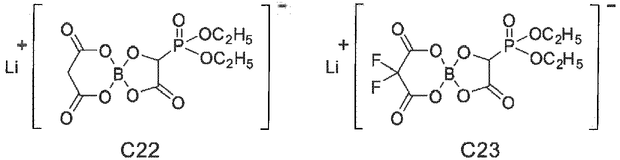

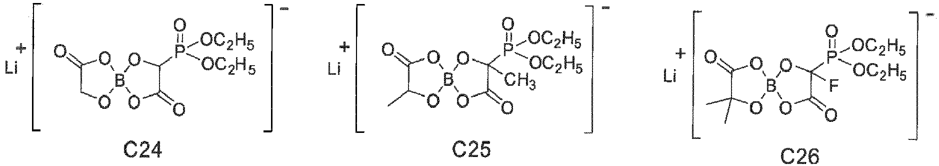

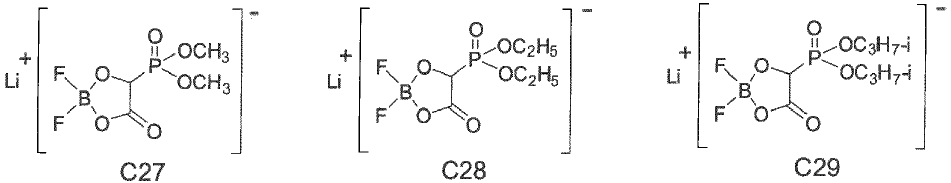

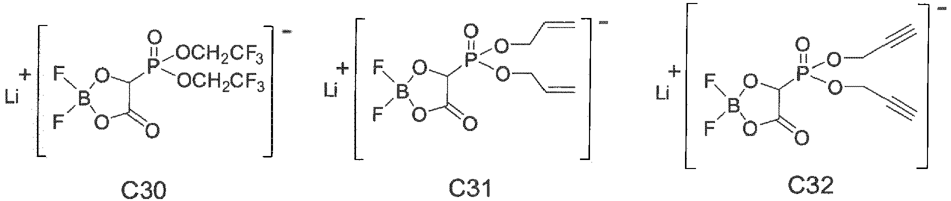

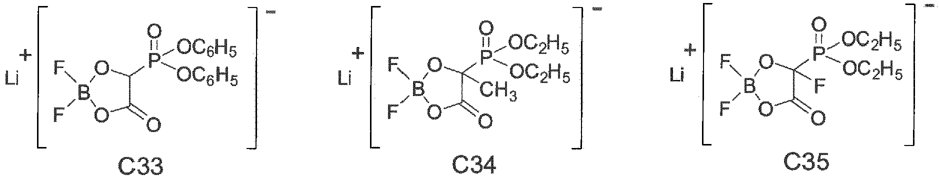

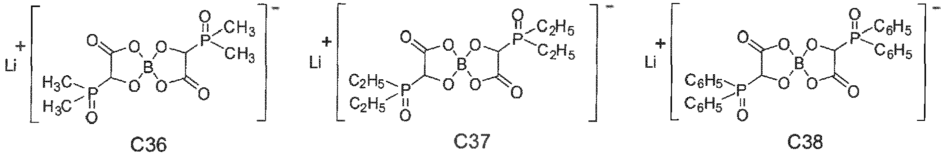

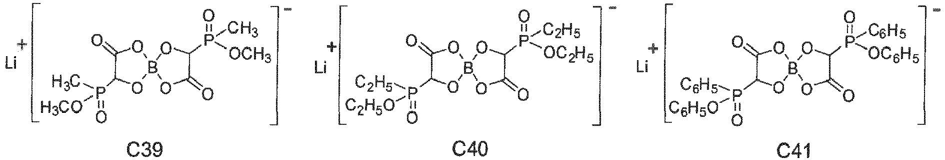

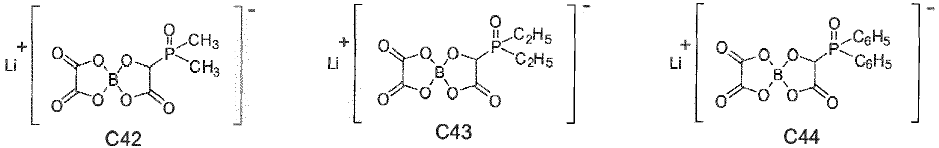

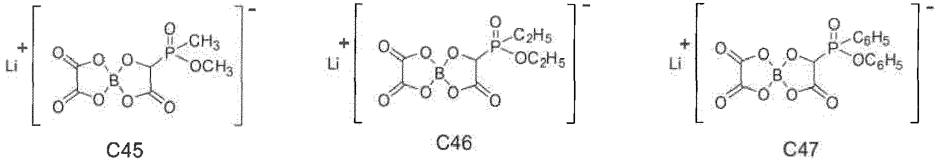

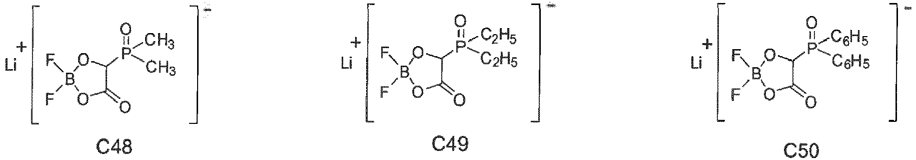

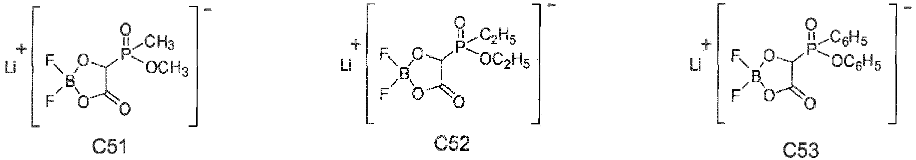

(ii) In the case where M is a boron atom and R¹⁴ represents -C(=O)-OR¹⁵ group, the following compounds can be suitably exemplified.

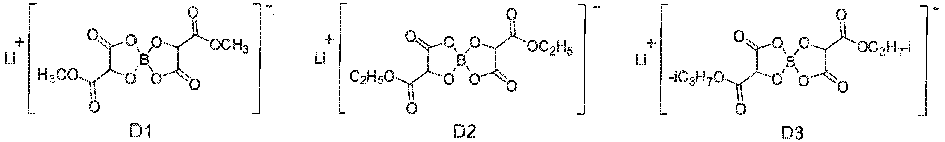

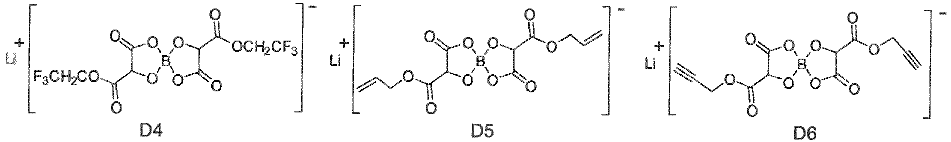

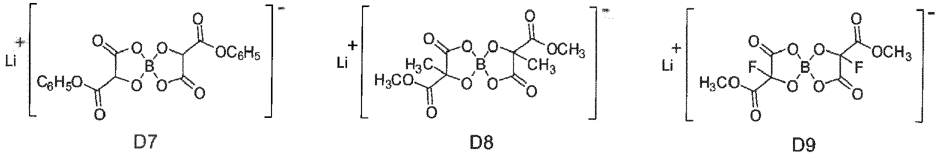

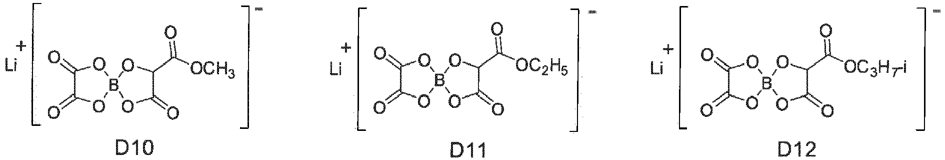

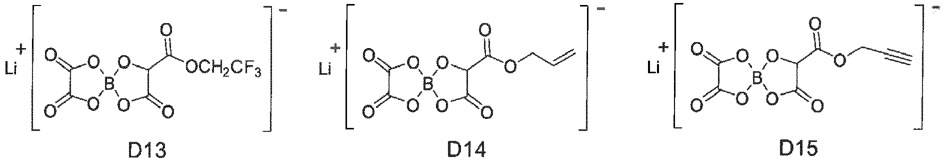

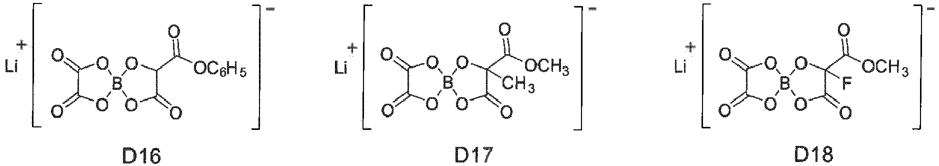

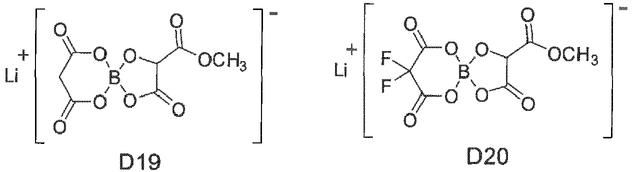

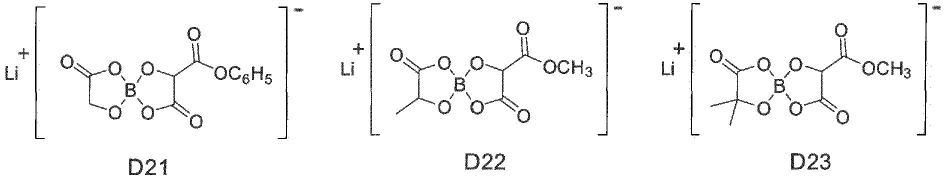

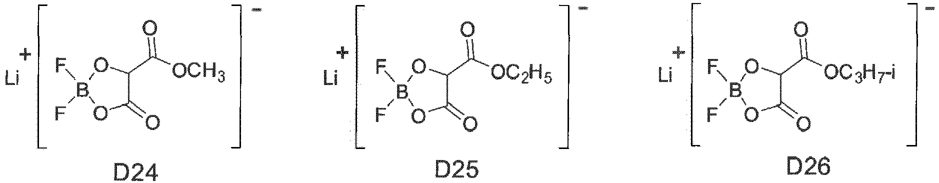

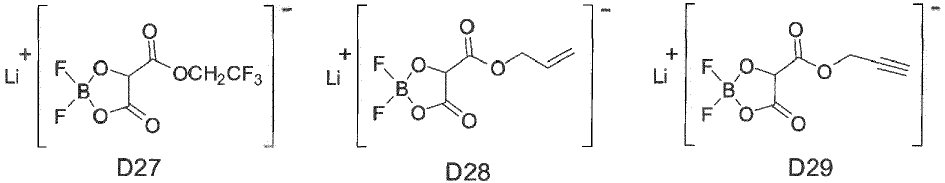

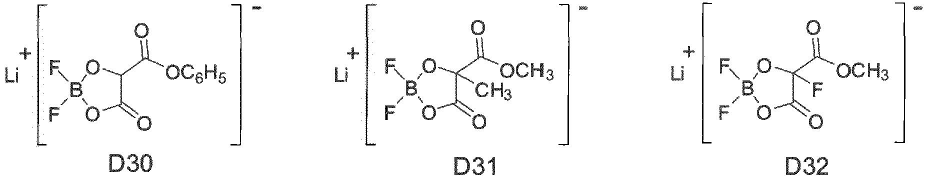

(iii) In the case where M is a phosphorus atom and R¹⁴ represents -P(=O)(-OR¹⁶) (-OR¹⁷) group, -P(=O)(-R¹⁸) (-OR¹⁹) group or -P(=O)(-R²⁰) (-R²¹) group, the following compounds can be suitably exemplified.

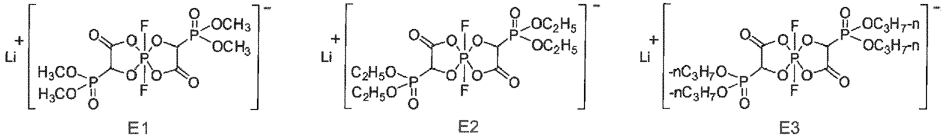

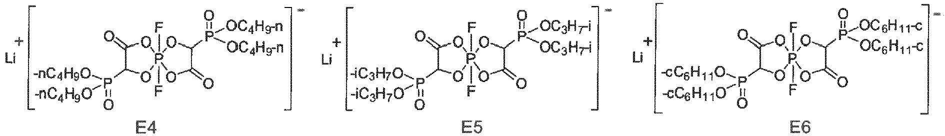

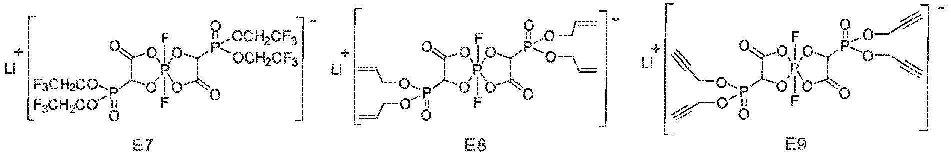

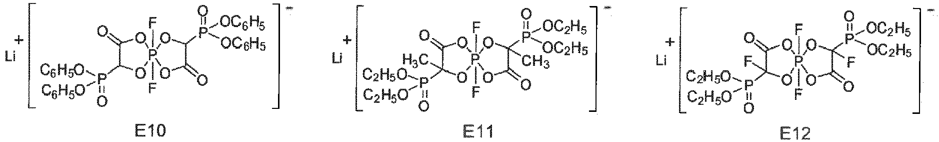

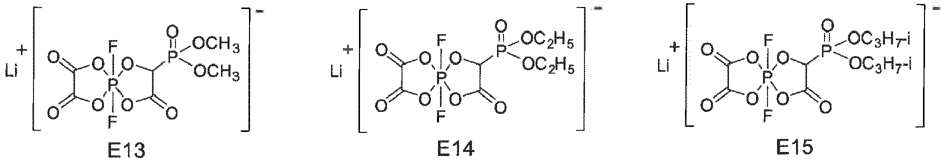

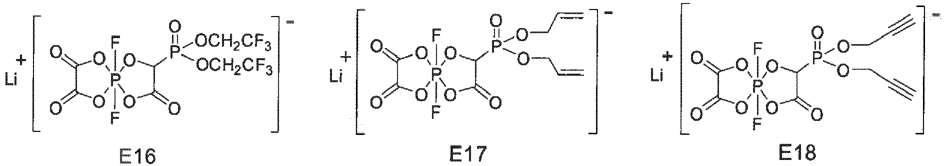

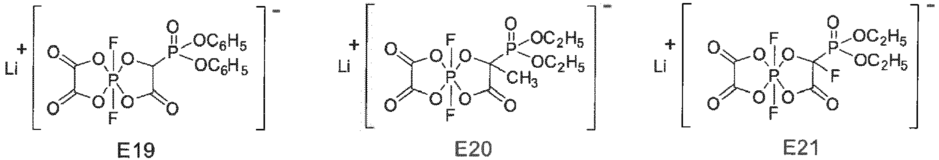

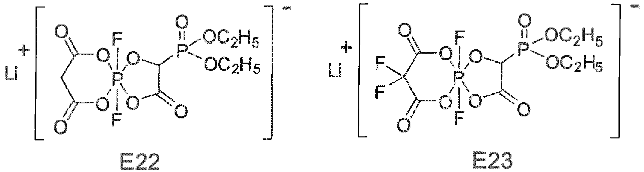

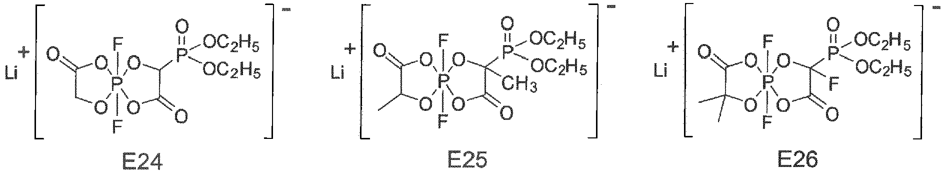

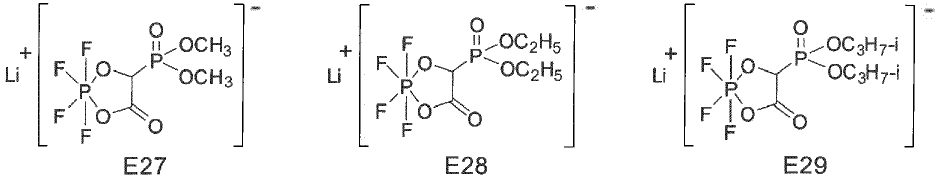

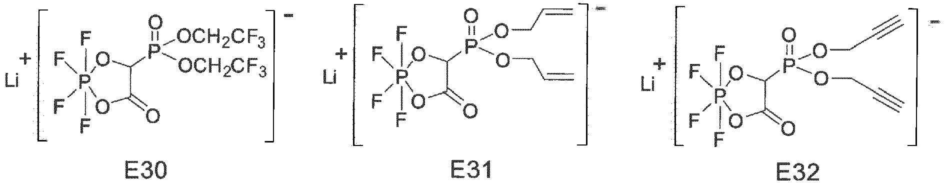

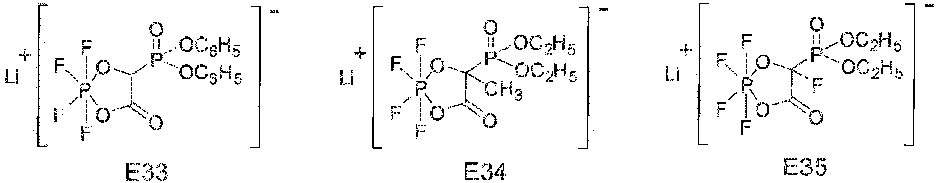

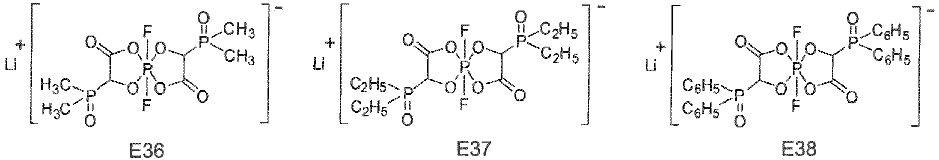

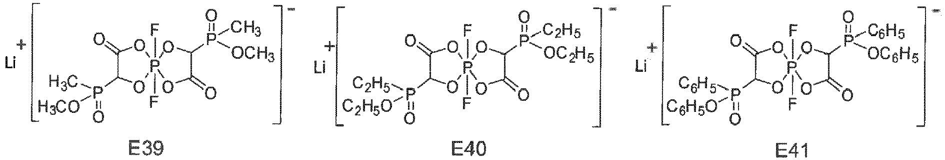

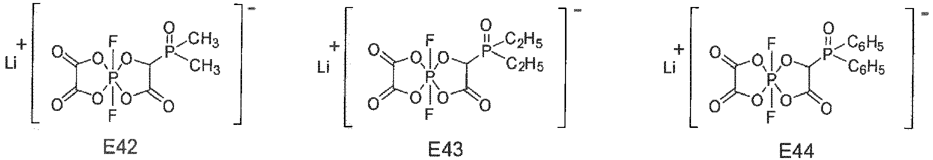

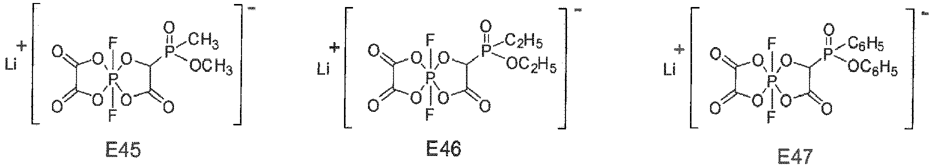

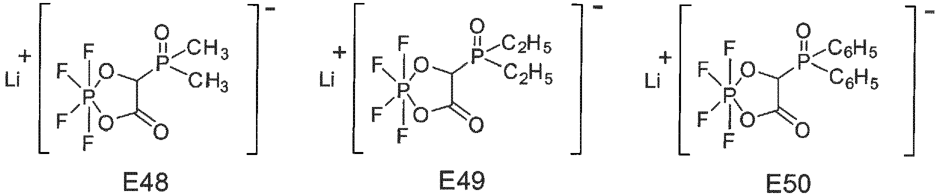

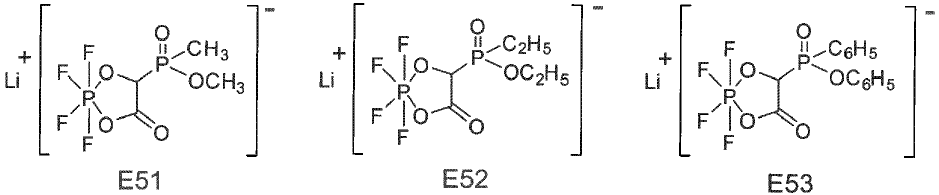

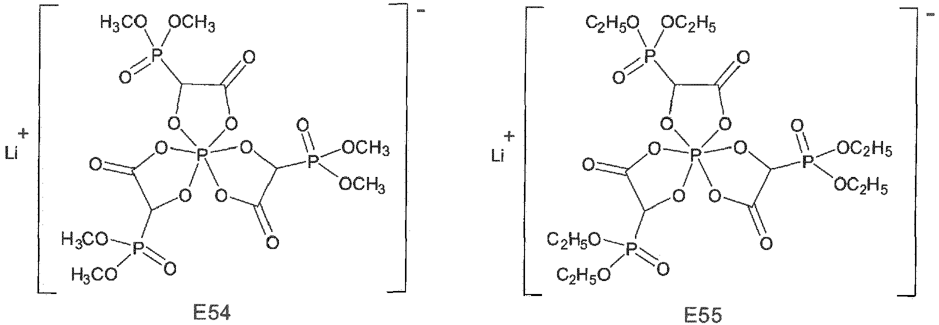

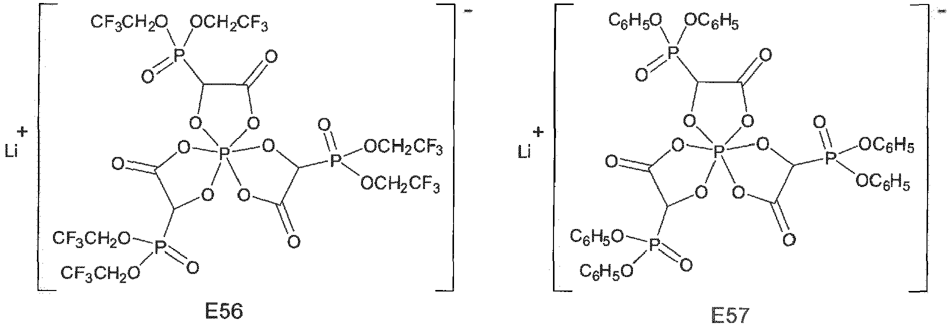

(iv) In the case where M is a phosphorus atom and R¹⁴ represents -C(=O)-OR¹⁵ group, the following compounds can be suitably exemplified.

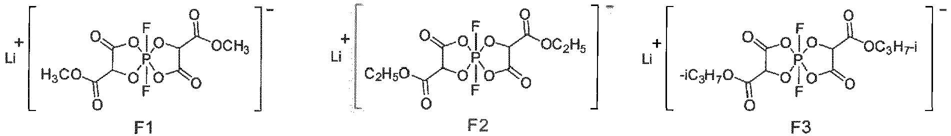

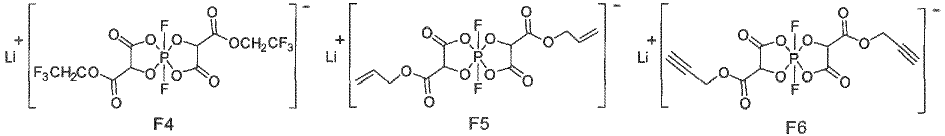

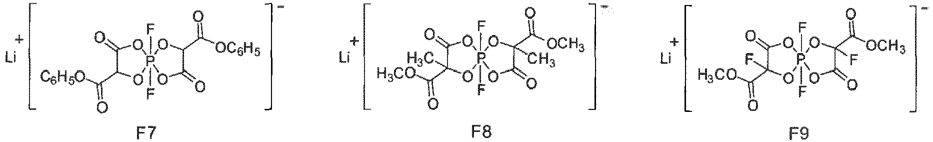

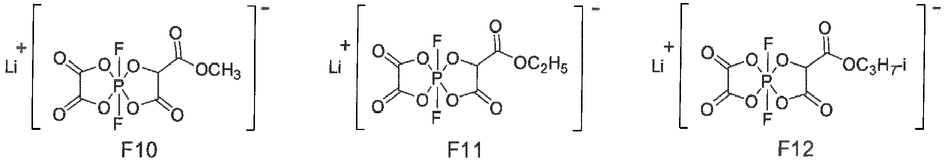

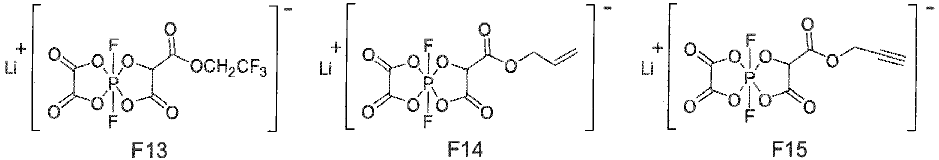

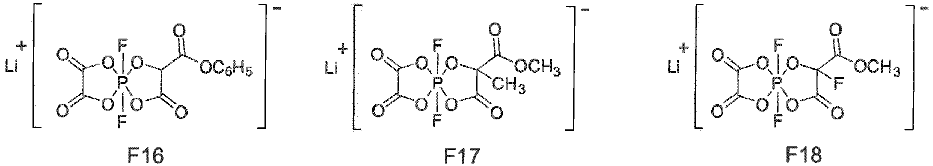

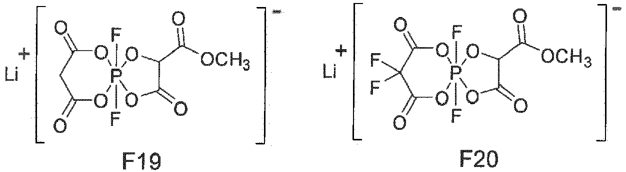

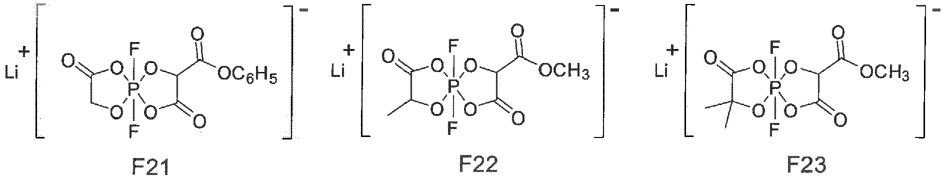

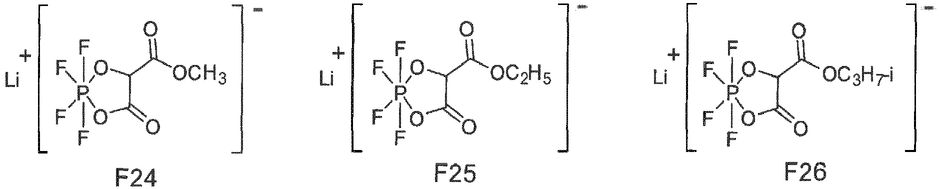

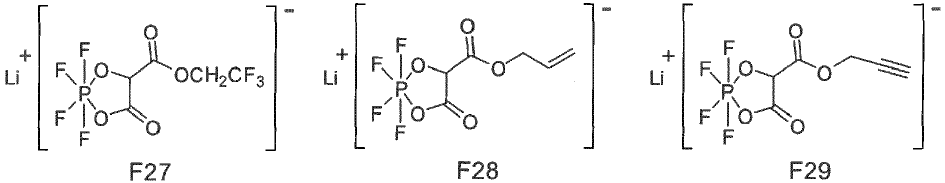

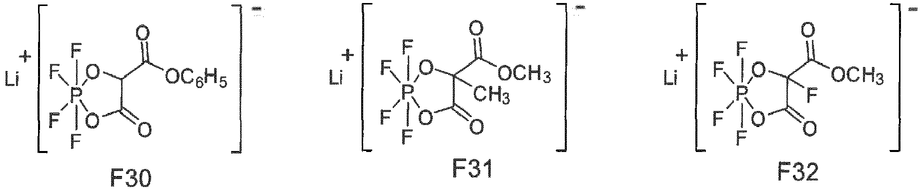

Among the lithium salts described above, the lithium salt having the structural formula of any of C1 to C5, C7 to C9, C11 to C18, C20 to C23, C27 to C32, C34 to C37, C39, C40, C42, C43, C45, C46, C48, C49, C51, C52, D1 to D6, D8 to D15, D17 to D20, D24 to D29, D31, D32, E1 to E5, E7 to E9, E11 to E18, E20 to E23, E27 to E32, E34 to E37, E39, E40, E42, E43, E45, E46, E48, E49, E51, E52, E54 to E57, F1 to F6, F8 to F15, F17 to F20, F24 to F29, F31, and F32 is more preferable, and the lithium salt having the structural formula of any of C1, C2, C7, C13, C14, C16, C20 to C23, C27, C28, C30, C42, C43, C45, C46, D10, D11, D13, D17, D18, D19, D20, E1, E2, E7, E13, E14, E16, E20 to E23, E27, E28, E30, E42, E43, E45, E46, E54 to E56, F10, F11, F13, F17, F18, F19, and F20 is even more preferable.

Among the above, particularly preferable lithium salts are one or more selected from lithium bis(1-dimethoxyphosphoryl-2-oxo-ethanediolate) borate (structural formula C1), lithium bis(1-diethoxyphosphoryl-2-oxo-ethanediolate) borate (structural formula C2), lithium (1-dimethoxyphosphoryl-2-oxo-ethanediolate) (oxalate) borate (structural formula C13), lithium (1-diethoxyphosphoryl-2-oxo-ethanediolate) (oxalate) borate (structural formula C14), lithium (1-(di(2,2,2-trifluoroethoxy) phosphoryl)-2-oxo-ethanediolate) (oxalate) borate (structural formula C16), lithium difluoro(1-dimethoxyphosphoryl-2-oxo-ethanediolate) borate (structural formula C27), lithium (1-diethoxyphosphoryl-2-oxo-ethanediolate) difluoroborate (structural formula C28), lithium (1-methoxycarbonyl-2-oxo-ethanediolate) (oxalate) borate (structural formula D10), lithium (1-ethoxycarbonyl-2-oxo-ethanediolate) (oxalate) borate (structural formula D11), lithium (1-((2,2,2-trifluoroethoxy) carbonyl)-2-oxo-ethanediolate) (oxalate) borate (structural formula D13), lithium bis(1-dimethoxyphosphoryl-2-oxo-ethanediolate) difluorophosphate (structural formula E1), lithium bis(1-diethoxyphosphoryl-2-oxo-ethanediolate) difluorophosphate (structural formula E2), lithium difluoro(1-dimethoxyphosphoryl-2-oxo-ethanediolate) (oxalate) phosphate (structural formula E13), lithium (1-diethoxyphosphoryl-2-oxo-ethanediolate) (oxalate) difluorophosphate (structural formula E14), lithium difluoro(1-(di(2,2,2-trifluoroethoxy) phosphoryl)-2-oxo-ethanediolate) (oxalate) phosphate (structural formula E16), lithium (1-dimethoxyphosphoryl-2-oxo-ethanediolate) tetrafluorophosphate (structural formula E27), lithium (1-diethoxyphosphoryl-2-oxo-ethanediolate) tetrafluorophosphate (structural formula E28), lithium tris (1-dimethoxyphosphoryl-2-oxo-ethanediolate) phosphate (structural formula E54), lithium tris (1-diethoxyphosphoryl-2-oxo-ethanediolate) phosphate (structural formula E55), lithium (1-methoxycarbonyl-2-oxo-ethanediolate) (oxalate) difluorophosphate (structural formula F10), lithium (1-ethoxycarbonyl-2-oxo-ethanediolate) (oxalate) difluorophosphate (structural formula F11), and lithium (1-((2,2,2-trifluoroethoxy) carbonyl)-2-oxo-ethanediolate) (oxalate) difluorophosphate (structural formula F13).

In the nonaqueous electrolytic solution of the second embodiment of the present invention, the content of the lithium salt represented by the general formula (III) is preferably 0.001 to 10% by mass in the nonaqueous electrolytic solution. If the content is 10% by mass or less, there is less concern that a surface film is excessively formed on an electrode, so that in the case of using a battery at a high temperature and at a high voltage, the storage characteristics are worsened, while if the content is 0.001% by mass or more, the formation of the coating film is sufficient and the effect of improving the storage characteristics is enhanced in a case of using a battery at a high temperature and a high voltage. The content is preferably 0.01% by mass or more in the nonaqueous electrolytic solution and more preferably 0.3% by mass or more. In addition, the upper limit thereof is preferably 5% by mass or less and more preferably 3% by mass or less.

In the nonaqueous electrolytic solution of the second embodiment of the present invention, by combining the lithium salt represented by the general formula (III) with the nonaqueous solvent, the electrolyte salt, and other additives which are described below, a peculiar effect of synergistically improving the electrochemical characteristics in a broad temperature range is exhibited.

The lithium salt contained in the nonaqueous electrolytic solution of the third embodiment of the present invention is represented by the following general formula (IV).

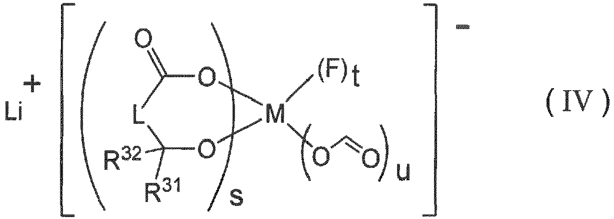

In the formula, R³¹ and R³² each independently represents a hydrogen atom, a halogen atom, or an alkyl group having 1 to 6 carbon atoms, and C(R³¹)(R³²) may represent C(=O). L represents a single bond or an alkylene group having 1 to 4 carbon atoms, M represents a boron atom or phosphorus atom, s represents an integer of 0 to 2, t represents an integer of 0 to 5, and u represents an integer of 1 to 6.

At least one hydrogen atom of the alkyl group or the alkylene group may be substituted with a halogen atom.

In a case where M is a boron atom, s = 1 and 2s + t + u = 4, and in a case where M is a phosphorus atom, 2s + t + u = 6.

In the general formula (IV), R³¹ and R³² each independently represents a hydrogen atom, a halogen atom, or an alkyl group having 1 to 6 carbon atoms in which at least one hydrogen atom may be substituted with a halogen atom, preferably a hydrogen atom or an alkyl group having 1 or 2 carbon atoms in which at least one hydrogen atom may be substituted with a halogen atom, and more preferably a hydrogen atom or an alkyl group having 1 or 2 carbon atoms.

L represents a single bond or an alkylene group having 1 to 4 carbon atoms in which at least one hydrogen atom may be substituted with a halogen atom, preferably a single bond or an alkylene group having 1 or 2 carbon atoms in which at least one hydrogen atom may be substituted with a halogen atom, and more preferably a single bond or an alkylene group having 1 carbon atom (methylene group) in which at least one hydrogen atom may be substituted with a halogen atom.

Suitable examples of R³¹ and R³² include a hydrogen atom; halogen atoms, such as a fluorine atom, a chlorine atom, etc.; straight-chain alkyl groups, such as a methyl group, an ethyl group, a n-propyl group, a n-butyl group, a n-pentyl group, a n-hexyl group, etc.; branched alkyl groups, such as a propyl group, a sec-butyl group, a tert-butyl group, etc.; halogenated alkyl groups, such as a fluoromethyl group, a difluoromethyl group, a trifluoromethyl group, a 2-chloroethyl group, a 2-fluoroethyl group, a 2,2,2-trifluoroethyl group, a 2,2,3,3-tetrafluoropropyl group, a 2,2,3,3,3-pentafluoropropyl group, etc., and the like. Among the above, a hydrogen atom, a fluorine atom, a methyl group, an ethyl group, a n-propyl group, a trifluoromethyl group, or a 2,2,2-trifluoroethyl group is preferable, and a hydrogen atom, a methyl group, or a trifluoromethyl group is more preferable.

Suitable examples of L include a single bond, alkylene groups, such as a methylene group, an ethane-1,2-diyl group, a propane-1,3-diyl group, etc.; halogenated alkylene groups, such as a fluoromethylene group, a difluoromethylene group, a 1,1,2,2-tetrafluoroethane-1,2-diyl group, etc. Among the above, a single bond, a methylene group, an ethane-1,2-diyl group, or a difluoromethylene group is preferable, and a single bond, methylene group, or a difluoromethylene group is more preferable.

In addition, for a formyloxy group, the compound having one or two of a formyloxy group is preferable, and the compound having two formyloxy groups is more preferable, and furthermore, it is more preferable that the electron-withdrawing group, such as a fluorine atom or a -O-C(=O)-C(=O)-O-group, is present on the boron atom as a substituent, since the reactivity of the lithium salt having a formyloxy group according to the present invention is enhanced and the electrochemical characteristics are improved at a high temperature.

Suitable examples of the lithium salt represented by the general formula (IV) include the specific lithium salts shown below.

(i) In the case where M is a boron atom, the following compounds can be suitably exemplified.

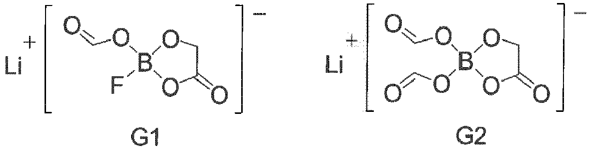

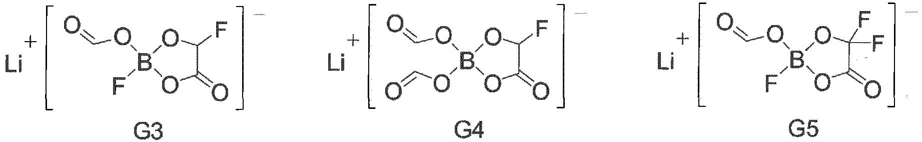

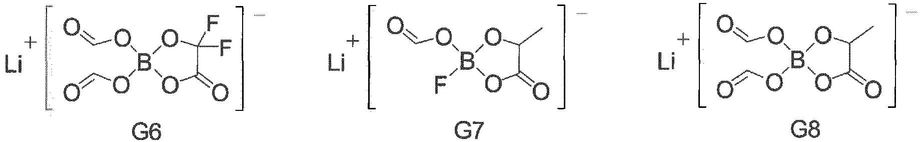

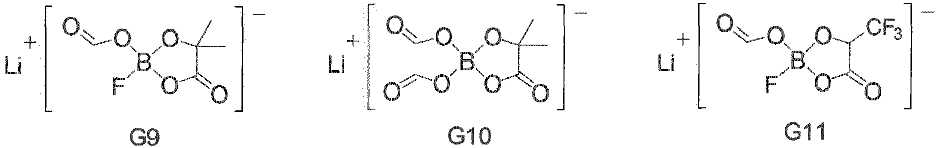

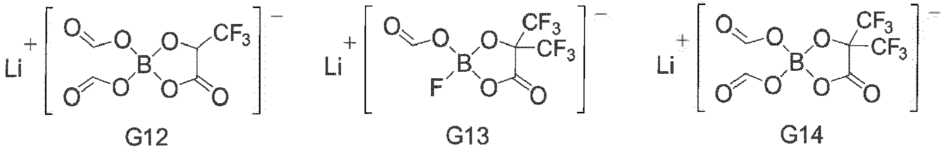

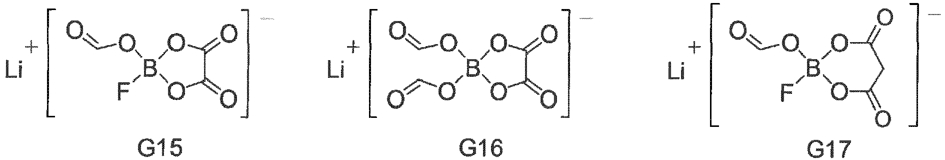

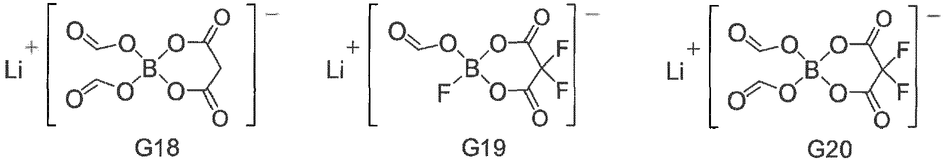

Among the lithium salts described above, the lithium salt having the structural formula of any of G2, G4, G6, G8, G10, G12, and G14 to G20 is more preferable, and one or more selected from lithium bis(formyloxy) (oxalate) borate (structural formula G16), lithium bis(formyloxy) (malonate) borate (structural formula G18), and lithium bis(formyloxy) (2,2-difluoromalonate) borate (structural formula G20) are more preferable.

(ii) In the case where M is a phosphorus atom, the following compounds can be suitably exemplified.

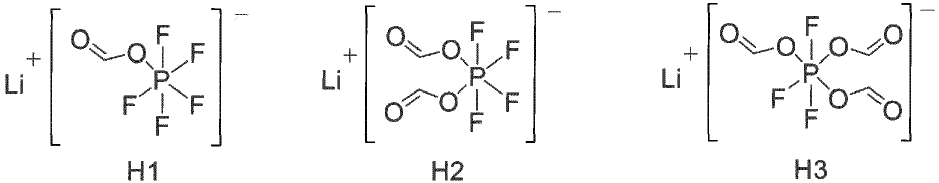

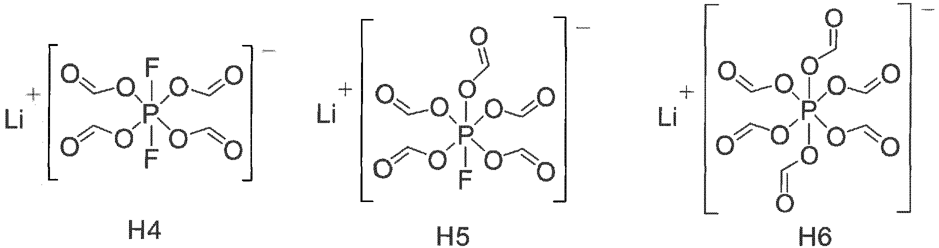

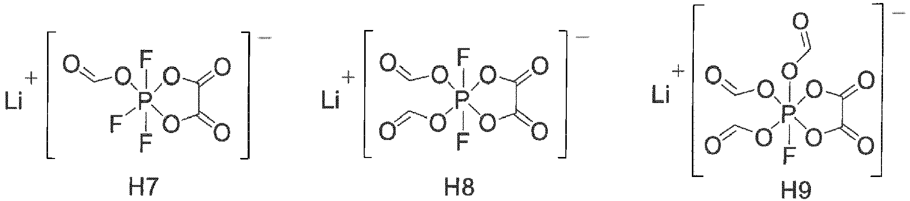

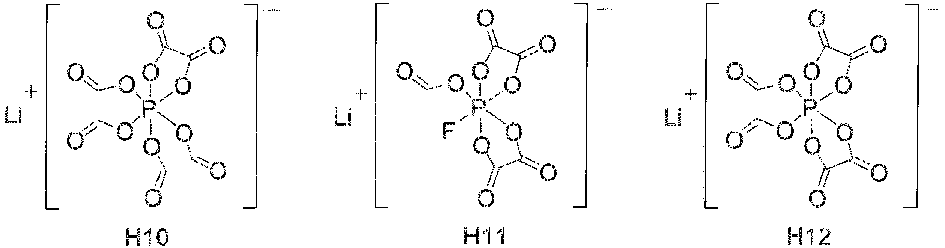

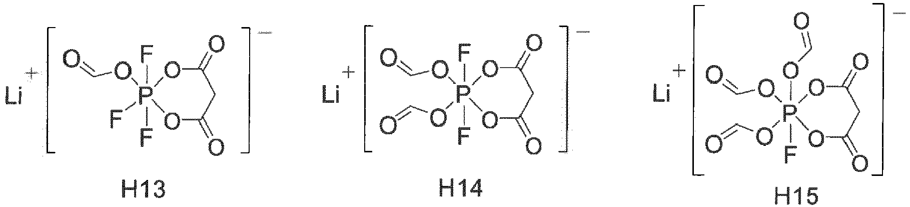

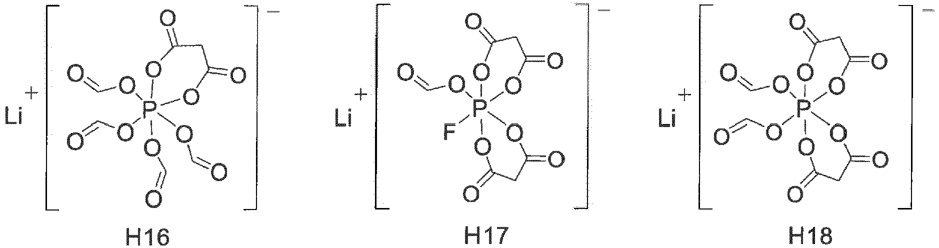

Among the lithium salts described above, the lithium salt having the structural formula of any of H1, H8, H10, H12, H14, H16, and H18 is more preferable, and one or more selected from lithium formyloxy-pentafluorophosphate (structural formula H1), lithium tetrakis(formyloxy) (oxalate) phosphate (structural formula H10), lithium bis(formyloxy) bis(oxalate) phosphate (structural formula H12), lithium tetrakis(formyloxy) (malonate) phosphate (structural formula H16), and lithium bis(formyloxy) bis(malonate) phosphate (structural formula H18) are even more preferable.

In the nonaqueous electrolytic solution of the third embodiment of the present invention, a content of the lithium salt represented by the foregoing general formula (IV) is preferably 0.001 to 10% by mass in the nonaqueous electrolytic solution. So long as the content is 10% by mass or less, there is less concern that a surface film is excessively formed on an electrode, so that in the case of using a battery at a high temperature and at a high voltage, the storage characteristics are worsened. So long as the content is 0.001% by mass or more, the formation of a surface film is sufficient, and in the case of using a battery at a high temperature and at a high voltage, an improving effect of the storage characteristics is enhanced. The content is preferably 0.01% by mass or more, and more preferably 0.3% by mass or more in the nonaqueous electrolytic solution. An upper limit thereof is preferably 5% by mass or less, more preferably 3% by mass or less.

In the nonaqueous electrolytic solution of the third embodiment of the present invention, when both the lithium salt of the general formula (IV) where M is a boron atom and the lithium salt of the general formula (IV) where M is a phosphorus atom are used, effect in improving the storage characteristics in the case of using a battery under a high temperature and a high voltage is more exhibited as compared with the cases where either one of the two is used solely.

### [Nonaqueous Solvent]

As the nonaqueous solvent which is used for the nonaqueous electrolytic solution of the present invention, there are suitably exemplified one or more selected from cyclic carbonates, linear esters, lactones, ethers, and amides. In order that the electrochemical characteristics may be synergistically improved at a high temperature and in a broad temperature range, it is preferred to include a linear ester, it is more preferred to include a linear carbonate, and it is most preferred to include both a cyclic carbonate and a linear carbonate.

The term "linear ester" is used as a concept including a linear carbonate and a linear carboxylic acid ester.

As the cyclic carbonate, there is exemplified one or more selected from ethylene carbonate (EC), propylene carbonate (PC), 1,2-butylene carbonate, 2,3-butylene carbonate, 4-fluoro-1,3-dioxolan-2-one (FEC), trans- or cis-4,5-difluoro-1,3-dioxolan-2-one (the both will be hereunder named generically as "DFEC"), vinylene carbonate (VC), vinyl ethylene carbonate (VEC), and 4-ethynyl-1,3-dioxolan-2-one (EEC). One or more selected from ethylene carbonate, propylene carbonate, 4-fluoro-1,3-dioxolan-2-one, vinylene carbonate, and 4-ethynyl-1,3-dioxolan-2-one (EEC) are more suitable.

Use of at least one of cyclic carbonates having an unsaturated bond, such as a carbon-carbon double bond, a carbon-carbon triple bond, etc., or a fluorine atom is preferred because the electrochemical characteristics at a high temperature and the electrochemical characteristics in a broad temperature range are much more improved, and it is more preferred to contain both a cyclic carbonate having an unsaturated bond, such as a carbon-carbon double bond, a carbon-carbon triple bond, etc., and a cyclic carbonate having a fluorine atom. As the cyclic carbonate having an unsaturated bond, such as a carbon-carbon double bond, a carbon-carbon triple bond, etc., VC, VEC, or EEC is more preferred, and as the cyclic carbonate having a fluorine atom, FEC or DFEC is more preferred.

A content of the cyclic carbonate having an unsaturated bond, such as a carbon-carbon double bond, a carbon-carbon triple bond, etc., is preferably 0.07% by volume or more, more preferably 0.2% by volume or more, and still more preferably 0.7% by volume or more relative to a total volume of the nonaqueous solvent, and when an upper limit thereof is preferably 7% by volume or less, more preferably 4% by volume or less, and still more preferably 2.5% by volume or less, stability of a surface film can be much more improved at a high temperature without impairing Li ion permeability and the electrochemical characteristics in a broad temperature range can be improved, and hence, such is preferred.

A content of the cyclic carbonate having a fluorine atom is preferably 0.07% by volume or more, more preferably 4% by volume or more, and still more preferably 7% by volume or more relative to a total volume of the nonaqueous solvent, and when an upper limit thereof is preferably 35% by volume or less, more preferably 25% by volume or less, and still more preferably 15% by volume or less, stability of a surface film can be much more improved at a high temperature without impairing Li ion permeability and the electrochemical characteristics in a broad temperature range can be improved, and hence, such is preferred.

In the case where the nonaqueous solvent includes both the cyclic carbonate having an unsaturated bond, such as a carbon-carbon double bond, a carbon-carbon triple bond, etc., and the cyclic carbonate having a fluorine atom, the content of the cyclic carbonate having an unsaturated bond, such as a carbon-carbon double bond, a carbon-carbon triple bond, etc., is preferably 0.2% by volume or more, more preferably 3% by volume or more, and still more preferably 7% by volume or more relative to the content of the cyclic carbonate having a fluorine atom, and when an upper limit thereof is preferably 40% by volume or less, more preferably 30% by volume or less, and still more preferably 15% by volume or less, stability of a surface film can be much more improved at a high temperature without impairing Li ion permeability and the electrochemical characteristics in a broad temperature range can be improved, and hence, such is especially preferred.

When the nonaqueous solvent includes both ethylene carbonate and the cyclic carbonate having an unsaturated bond, such as a carbon-carbon double bond, a carbon-carbon triple bond, etc., stability of a surface film to be formed on an electrode at a high temperature is improved and the electrochemical characteristics in a broad temperature range is improved, and hence, such is preferred. A content of ethylene carbonate and the cyclic carbonate having an unsaturated bond, such as a carbon-carbon double bond, a carbon-carbon triple bond, etc., is preferably 3% by volume or more, more preferably 5% by volume or more, and still more preferably 7% by volume relative to a total volume of the nonaqueous solvent. An upper limit thereof is preferably 45% by volume or less, more preferably 35% by volume or less, and still more preferably 25% by volume or less.

These solvents may be used solely; in the case where a combination of two or more of the solvents is used, the electrochemical characteristics at a high temperature are more improved and an improving effect of the electrochemical characteristics in a broad temperature range is more improved, and hence, such is preferred; and use of a combination of three or more thereof is especially preferred. As suitable combinations of these cyclic carbonates, EC and PC; EC and VC; PC and VC; VC and FEC; EC and FEC; PC and FEC; FEC and DFEC; EC and DFEC; PC and DFEC; VC and DFEC; VEC and DFEC; VC and EEC; EC and EEC; EC, PC and VC; EC, PC and FEC; EC, VC and FEC; EC, VC and VEC; EC, VC and EEC; EC, EEC and FEC; PC, VC and FEC; EC, VC and DFEC; PC, VC and DFEC; EC, PC, VC and FEC; EC, PC, VC and DFEC; and the like are preferred. Among the aforementioned combinations, combinations, such as EC and VC; EC and FEC; PC and FEC; EC, PC and VC; EC, PC and FEC; EC, VC and FEC; EC, VC and EEC; EC, EEC and FEC; PC, VC and FEC; EC, PC, VC and FEC; etc., are more preferred.

As the linear ester, there are suitably exemplified one or more asymmetric linear carbonates selected from methyl ethyl carbonate (MEC), methyl propyl carbonate (MPC), methyl isopropyl carbonate (MIPC), methyl butyl carbonate, and ethyl propyl carbonate; one or more symmetric linear carbonates selected from dimethyl carbonate (DMC), diethyl carbonate (DEC), dipropyl carbonate, and dibutyl carbonate; and one or more linear carboxylic acid esters selected from methyl pivalate (MPiv), ethyl pivalate (EPiv), propyl pivalate (PPiv), methyl propionate (MP), ethyl propionate (EP), propyl propionate (PP), methyl acetate (MA), ethyl acetate (EA), and propyl acetate (PA).

Among the linear esters, linear esters having a methyl group selected from dimethyl carbonate (DMC), methyl ethyl carbonate (MEC), methyl propyl carbonate (MPC), methyl isopropyl carbonate (MIPC), methyl butyl carbonate, methyl pivalate (MPiv), methyl propionate (MP), methyl acetate (MA), ethyl acetate (EA), etc., are preferred, and linear carbonates having a methyl group are especially preferred.

In the case of using a linear carbonate, it is preferred to use two or more thereof. Furthermore, it is more preferred that both the symmetric linear carbonate and the asymmetric linear carbonate are contained, and it is still more preferred that a content of the symmetric linear carbonate is more than a content of the asymmetric linear carbonate.

Although the content of the linear ester is not particularly limited, it is preferred to use the linear ester in an amount in the range of from 60 to 90% by volume relative to a total volume of the nonaqueous solvent. When the content is 60% by volume or more, the viscosity of the nonaqueous electrolytic solution does not become excessively high, and when it is 90% by volume or less, there is less concern that an electroconductivity of the nonaqueous electrolytic solution is decreased, whereby the electrochemical characteristics at a high temperature are worsened, and there is less concern that the electrochemical characteristics in a broad temperature range are worsened, and therefore, it is preferred that the content of the linear ester falls within the aforementioned range.

A proportion of the volume occupied by the symmetric linear carbonate in the linear carbonate is preferably 51% by volume or more, and more preferably 55% by volume or more. An upper limit thereof is preferably 95% by volume or less, and more preferably 85% by volume or less. It is especially preferred that dimethyl carbonate is contained as the symmetric linear carbonate. It is more preferred that the asymmetric linear carbonate has a methyl group, and methyl ethyl carbonate is especially preferred. The aforementioned case is preferred because the electrochemical characteristics at a high temperature are much more improved and an improving effect of the electrochemical characteristics in a broad temperature range is more improved.

As for a proportion of the cyclic carbonate and the linear ester, from the viewpoint of improving the electrochemical characteristics at a high temperature, a ratio of the cyclic carbonate to the linear ester (volume ratio) is preferably from 10/90 to 45/55, more preferably from 15/85 to 40/60, and especially preferably from 20/80 to 35/65.

As other nonaqueous solvents, there are suitably exemplified one or more selected from cyclic ethers, such as tetrahydrofuran, 2-methyltetrahydrofuran, 1,4-dioxane, etc.; linear ethers, such as 1,2-dimethoxyethane, 1,2-diethoxyethane, 1,2-butoxyethane, etc.; amides, such as dimethylformamide, etc.; sulfones, such as sulfolane, etc.; and lactones, such as γ-butyrolactone (GBL), γ-valerolactone, α-angelicalactone, etc.

The other nonaqueous solvents are generally mixed and used for the purpose of achieving appropriate physical properties. As for a combination thereof, for example, there are suitably exemplified a combination of a cyclic carbonate and a linear carbonate, a combination of a cyclic carbonate and a linear carboxylic acid ester, a combination of a cyclic carbonate, a linear carbonate, and a lactone, a combination of a cyclic carbonate, a linear carbonate, and an ether, a combination of a cyclic carbonate, a linear carbonate, and a linear carboxylic acid ester, and the like.

A combination of a cyclic carbonate, a linear carbonate, and a lactone is preferable, with the case where γ-butyrolactone (GBL) is used as a lactone being more preferable.

The content of the other nonaqueous solvents is generally 1% or more, preferably 2% or more, and generally 40% or less, preferably 30% or less, more preferably 20% or less, relative to a total volume of the nonaqueous solvent.

For the purpose of much more improving stability of a surface film at a high temperature and the purpose of much more improving the electrochemical characteristics in a broad temperature range, it is preferred to further add other additives in the nonaqueous electrolytic solution.

As specific examples of other additives, there are exemplified compounds of the following (A) to (I).

(A) One or more nitriles selected from acetonitrile, propionitrile, succinonitrile, glutaronitrile, adiponitrile, pimelonitrile, suberonitrile, and sebaconitrile.
(B) Aromatic compounds having a branched alkyl group, such as cyclohexylbenzene, fluorocyclohexylbenzene compounds (e.g., 1-fluoro-2-cyclohexylbenzene, 1-fluoro-3-cyclohexylbenzene, and 1-fluoro-4-cyclohexylbenzene), tert-butylbenzene, tert-amylbenzene, 1-fluoro-4-tert-butylbenzene, etc., and aromatic compounds, such as biphenyl, terphenyl (including o⁻, m⁻, and p-forms), diphenyl ether, fluorobenzene, difluorobenzene (including o⁻, m⁻, and p-forms), anisole, 2,4-difluoroanisole, a partial hydride of terphenyl (e.g., 1,2-dicyclohexylbenzene, 2-phenylbicyclohexyl, 1,2-diphenylcyclohexane, and o-cyclohexylbiphenyl), etc.
(C) One or more isocyanate compounds selected from methyl isocyanate, ethyl isocyanate, butyl isocyanate, phenyl isocyanate, tetramethylene diisocyanate, hexamethylene diisocyanate, octamethylene diisocyanate, 1,4-phenylene diisocyanate, 2-isocyanatoethyl acrylate, and 2-isocyanatoethyl methacrylate.
(D) One or more triple bond-containing compounds selected from 2-propynyl methyl carbonate, 2-propynyl acetate, 2-propynyl formate, 2-propynyl methacrylate, 2-propynyl methanesulfonate, 2-propynyl vinylsulfonate, 2-propynyl 2-(methanesulfonyloxy)propionate, di(2-propynyl) oxalate, methyl 2-propynyl oxalate, ethyl 2-propynyl oxalate, di(2-propynyl) glutarate, 2-butyne-1,4-diyl dimethanesulfonate, 2-butyne-1,4-diyl diformate, and 2,4-hexadiyne-1,6-diyl dimethanesulfonate.
(E) One or more cyclic or linear S=O group-containing compounds selected from sultones, such as 1,3-propanesultone, 1,3-butanesultone, 2,4-butanesultone, 1,4-butanesultone, 1,3-propenesultone, 2,2-dioxide-1,2-oxathiolane-4-yl acetate, 5,5-dimethyl-1,2-oxathiolane-4-one 2,2-dioxide, etc.; cyclic sulfites, such as ethylene sulfite, hexahydrobenzo[1,3,2]dioxathiolane-2-oxide (also called 1,2-cyclohexanediol cyclic sulfite), 5-vinyl-hexahydro-1,3,2-benzodioxathiol-2-oxide, 4-(methylsulfonylmethyl)-1,3,2-dioxathiolane-2-oxide, etc.; sulfonic acid esters, such as butane-2,3-diyl dimethanesulfonate, butane-1,4-diyl dimethanesulfonate, methylene methanedisulfonate, dimethyl methanedisulfonate, pentafluorophenyl methanesulfonate, etc.; and vinylsulfone compounds, such as divinylsulfone, 1,2-bis(vinylsulfonyl)ethane, bis(2-vinylsulfonylethyl) ether, etc.
(F) Cyclic acetal compounds, such as 1,3-dioxolane, 1,3-dioxane, 1,3,5-trioxane, etc.
(G) One or more phosphorus-containing compounds selected from trimethyl phosphate, tributyl phosphate, trioctyl phosphate, tris(2,2,2-trifluoroethyl) phosphate, bis(2,2,2-trifluoroethyl) methyl phosphate, bis(2,2,2-trifluoroethyl) ethyl phosphate, bis(2,2,2-trifluoroethyl) 2,2-difluoroethyl phosphate, bis(2,2,2-trifluoroethyl) 2,2,3,3-tetrafluoropropyl phosphate, bis(2,2-difluoroethyl) 2,2,2-trifluoroethyl phosphate, bis(2,2,3,3-tetrafluoropropyl) 2,2,2-trifluoroethyl phosphate, (2,2,2-trifluoroethyl) (2,2,3,3-tetrafluoropropyl)methyl phosphate, tris(1,1,1,3,3,3-hexafluoropropan-2-yl) phosphate, methyl methylenebisphosphonate, ethyl methylenebisphosphonate, methyl ethylenebisphosphonate, ethyl ethylenebisphosphonate, methyl butylenebisphosphonate, ethyl butylenebisphosphonate, methyl 2-(dimethylphosphoryl)acetate, ethyl 2-(dimethylphosphoryl)acetate, methyl 2-(diethylphosphoryl)acetate, ethyl 2-(diethylphosphoryl)acetate, 2-propynyl 2-(dimethylphosphoryl)acetate, 2-propynyl 2-(diethylphosphoryl)acetate, methyl 2-(dimethoxyphosphoryl)acetate, ethyl 2-(dimethoxyphosphoryl)acetate, methyl 2-(diethoxyphosphoryl)acetate, ethyl 2-(diethoxyphosphoryl)acetate, 2-propynyl 2-(dimethoxyphosphoryl)acetate, 2-propynyl 2-(diethoxyphosphoryl)acetate, methyl pyrophosphate, and ethyl pyrophosphate.
(H) Linear carboxylic acid anhydrides, such as acetic anhydride, propionic anhydride, etc., and cyclic acid anhydrides, such as succinic anhydride, maleic anhydride, 3-allylsuccinic anhydride, glutaric anhydride, itaconic anhydride, 3-sulfo-propionic anhydride, etc.
(I) Cyclic phosphazene compounds, such as methoxypentafluorocyclotriphosphazene, ethoxypentafluorocyclotriphosphazene, phenoxypentafluorocyclotriphosphazene, ethoxyheptafluorocyclotetraphosphazene, etc.

Of the foregoing, when at least one selected from (A) the nitriles, (B) the aromatic compounds, and (C) the isocyanate compounds is contained, the electrochemical characteristics at a high temperature and at a high voltage are much more improved, and hence, such is preferred.

Of (A) the nitriles, one or more selected from succinonitrile, glutaronitrile, adiponitrile, and pimelonitrile are more preferred.

Of (B) the aromatic compounds, one or more selected from biphenyl, terphenyl (including o⁻, m-, and p-forms), fluorobenzene, cyclohexylbenzene, tert-butylbenzene, and tert-amylbenzene are more preferred; and one or more selected from biphenyl, o-terphenyl, fluorobenzene, cyclohexylbenzene, and tert-amylbenzene are especially preferred.

Of (C) the isocyanate compounds, one or more selected from hexamethylene diisocyanate, octamethylene diisocyanate, 2-isocyanatoethyl acrylate, and 2-isocyanatoethyl methacrylate are more preferred.

A content of each of the aforementioned additives (A) to (C) is preferably 0.01 to 7% by mass in the nonaqueous electrolytic solution. When the content falls within this range, a surface film is sufficiently formed without causing an excessive increase of the thickness, and stability of the surface film at a high temperature is much more improved and the electrochemical characteristics in a broad temperature range is much more improved. The content is more preferably 0.05% by mass or more, and still more preferably 0.1% by mass or more in the nonaqueous electrolytic solution, and an upper limited thereof is more preferably 5% by mass or less, and still more preferably 3% by mass or less.

When (D) the triple bond-containing compound, (E) the cyclic or linear S=O group-containing compound selected from sultones, cyclic sulfites, sulfonic acid esters, and vinylsulfones, (F) the cyclic acetal compound, (G) the phosphorus-containing compound, (H) the cyclic acid anhydride, or (I) the cyclic phosphazene compound is contained, stability of a surface film at a high temperature is much more improved, and hence, such is preferred.

As (D) the triple bond-containing compound, one or more selected from 2-propynyl methyl carbonate, 2-propynyl methacrylate, 2-propynyl methanesulfonate, 2-propynyl vinylsulfonate, 2-propynyl 2-(methanesulfonyloxy)propionate, di(2-propynyl) oxalate, methyl 2-propynyl oxalate, ethyl 2-propynyl oxalate, and 2-butyne-1,4-diyl dimethanesulfonate are preferred; and one or more selected from 2-propynyl methanesulfonate, 2-propynyl vinylsulfonate, 2-propynyl 2-(methanesulfonyloxy)propionate, di(2-propynyl) oxalate, and 2-butyne-1,4-diyl dimethanesulfonate are more preferred.

It is preferred to use (E) the cyclic or linear S=O group-containing compound selected from sultones, cyclic sulfites, sulfonic acid esters, and vinylsulfones, provided that triple bond-containing compounds are not included.

As the cyclic S=O group-containing compound, there are suitably exemplified one or more selected from sultones, such as 1,3-propanesultone, 1,3-butanesultone, 1,4-butanesultone, 2,4-butanesultone, 1,3-propenesultone, 2,2-dioxide-1,2-oxathiolane-4-yl acetate, 5,5-dimethyl-1,2-oxathiolane-4-one 2,2-dioxide, etc.; sulfonic acid esters, such as methylene methanedisulfonate, etc.; and cyclic sulfites, such as ethylene sulfite, 4-(methylsulfonylmethyl)-1,3,2-dioxathiolane 2-oxide, etc.

As the linear S=O group-containing compound, there are suitably exemplified one or more selected from butane-2,3-diyl dimethanesulfonate, butane-1,4-diyl dimethanesulfonate, dimethyl methanedisulfonate, pentafluorophenyl methanesulfonate, divinylsulfone, and bis(2-vinylsulfonylethyl) ether.

Of the aforementioned cyclic or linear S=O group-containing compounds, one or more selected from 1,3-propanesultone, 1,4-butanesultone, 2,4-butanesultone, 2,2-dioxide-1,2-oxathiolane-4-yl acetate, 5,5-dimethyl-1,2-oxathiolane-4-one 2,2-dioxide, butane-2,3-diyl dimethanesulfonate, pentafluorophenyl methanesulfonate, and divinylsulfone are more preferred.

As (F) the cyclic acetal compound, 1,3-dioxolane and 1,3-dioxane are preferred, and 1,3-dioxane is more preferred.

As (G) the phosphorus-containing compound, tris(2,2,2-trifluoroethyl) phosphate, tris(1,1,1,3,3,3-hexafluoropropane-2-yl) phosphate, methyl 2-(dimethylphosphoryl)acetate, ethyl 2-(dimethylphosphoryl)acetate, methyl 2-(diethylphosphoryl)acetate, ethyl 2-(diethylphosphoryl)acetate, 2-propynyl 2-(dimethylphosphoryl)acetate, 2-propynyl 2-(diethylphosphoryl)acetate, methyl 2-(dimethoxyphosphoryl)acetate, ethyl 2-(dimethoxyphosphoryl)acetate, methyl 2-(diethoxyphosphoryl)acetate, ethyl 2-(diethoxyphosphoryl)acetate, 2-propynyl 2-(dimethoxyphosphoryl)acetate, and 2-propynyl 2-(diethoxyphosphoryl)acetate are preferred; and tris(2,2,2-trifluoroethyl) phosphate, tris(1,1,1, 3,3,3-hexafluoropropane-2-yl) phosphate, ethyl 2-(diethylphosphoryl) acetate, 2-propynyl 2-(dimethylhosphoryl) acetate, 2-propynyl 2-(diethylphosphoryl)acetate, ethyl 2-(diethoxyphosphoryl)acetate, 2-propynyl 2-(dimethoxyphosphoryl)acetate, and 2-propynyl 2-(diethoxyphosphoryl)acetate are more preferred.

As (H) the cyclic acid anhydride, succinic anhydride, maleic anhydride, and 3-allylsuccinic anhydride are preferred, and succinic anhydride and 3-allylsuccinic anhydride are more preferred.

As (I) the cyclic phosphazene compound, cyclic phosphazene compounds, such as methoxypentafluorocyclotriphosphazene, ethoxypentafluorocyclotriphosphazene, phenoxypentafluorocyclotriphosphazene, etc., are preferred, and methoxypentafluorocyclotriphosphazene and ethoxypentafluorocyclotriphosphazene are more preferred.

A content of each of the aforementioned additives (D) to (I) is preferably 0.001 to 5% by mass in the nonaqueous electrolytic solution. When the content falls within this range, a surface film is sufficiently formed without causing an excessive increase of the thickness, and stability of the surface film at a high temperature is much more improved and the electrochemical characteristics is much more improved in a broad temperature range. The content is more preferably 0.01% by mass or more, and still more preferably 0.1% by mass or more in the nonaqueous electrolytic solution, and an upper limited thereof is more preferably 3% by mass or less, and still more preferably 2% by mass or less.

For the purpose of much more improving stability of a surface film at a high temperature and much more improving the electrochemical characteristics in a broad temperature range, it is preferred that at least one selected from lithium salts having an oxalate skeleton, lithium salts having a phosphate skeleton, and lithium salts having an S=O group is contained in the nonaqueous electrolytic solution.

As specific examples of the lithium salt, there are suitably exemplified at least one lithium salt having an oxalate skeleton, which is selected from lithium bis(oxalate)borate (LiBOB), lithium difluoro(oxalate)borate (LiDFOB), lithium tetrafluoro(oxalate)phosphate (LiTFOP), and lithium difluorobis(oxalate)phosphate (LiDFOP); a lithium salt having a phosphate skeleton, such as LiPO₂F₂, Li₂PO₃F, etc.; and at least one lithium salt having an S=O group, which is selected from lithium trifluoro((methanesulfonyl)oxy)borate (LiTFMSB), lithium pentafluoro((methanesulfonyl)oxy)phosphate (LiPFMSP), lithium methyl sulfate (LMS), lithium ethyl sulfate (LES), lithium 2,2,2-trifluoroethyl sulfate (LFES), and FSO₃Li.

Among those, it is more preferred that a lithium salt selected from LiBOB, LiDFOB, LiTFOP, LiDFOP, LiPO₂F₂, LiTFMSB, LMS, LES, LFES, and FSO₃Li is contained.

A total content of at least one selected from lithium salts having an oxalate skeleton, lithium salts having a phosphate skeleton, and lithium salts having an S=O group is preferably 0.001 to 10% by mass in the nonaqueous electrolytic solution. When the content is 10% by mass or less, there is less concern that a surface film is excessively formed on an electrode, so that the storage characteristics are worsened, and when it is 0.001% by mass or more, the formation of a surface film is sufficient, and in the case of using a battery at a high temperature and at a high voltage, an improving effect of the characteristics is enhanced. The content is preferably 0.05% by mass or more, more preferably 0.1% by mass or more, and still more preferably 0.3% by mass or more in the nonaqueous electrolytic solution. An upper limit thereof is preferably 5% by mass or less, more preferably 3% by mass or less, and especially preferably 2% by mass or less.

### (Lithium Salt)

As the electrolyte salt which is used in the present invention, there are suitably exemplified the following lithium salts.

As the lithium salt, there are suitably exemplified inorganic lithium salts, such as LiPF₆, LiBF₄, LiClO₄, etc.; linear fluoroalkyl group-containing lithium salts, such as LiN(SO₂F)₂ (hereinafter abbreviated as FSI), LiN(SO₂CF₃)₂ (hereinafter abbreviated as TFSI), LiN(SO₂C₂F₅)₂, LiCF₃SO₃, LiC(SO₂CF₃)₃, LiPF₄(CF₃)₂, LiPF₃(C₂F₅)₃, LiPF₃(CF₃)₃, LiPF₃(iso-C₃F₇)₃, LiPF₅(iso-C₃F₇), etc.; and cyclic fluoroalkylene chain-containing lithium salts, such as (CF₂)₂(SO₂)₂NLi, (CF₂)₃(SO₂)₂NLi, etc.; and the like. At least one lithium salt selected from these lithium salts is suitably exemplified, and one or more thereof may be used solely or in admixture.

Among those, one or more selected from LiPF₆, LiBF₄, LiN(SO₂F)₂ (FSI), LiN(SO₂CF₃)₂ (TFSI), LiN(SO₂C₂F₅)₂ and LiN(SO₂C₂F₅)₂ are preferred, and it is most preferred to use LiPF₆. In general, a concentration of the lithium salt is preferably 0.3 M or more, more preferably 0.7 M or more, and still more preferably 1.1 M or more relative to the nonaqueous solvent. An upper limit thereof is preferably 2.5 M or less, more preferably 2.0 M or less, and still more preferably 1.6 M or less.

As for a suitable combination of these lithium salts, the case of including LiPF₆ and further including at least one lithium salt selected from LiBF₄. LiN(SO₂CF₃))₂ (TFSI), and LiN(SO₂F)₂ (FSI) in the nonaqueous electrolytic solution is preferred.

When a proportion of the lithium salt other than LiPF₆ occupying in the nonaqueous solvent is 0.001 M or more, an improving effect of the electrochemical characteristics in the case of using the battery at a high temperature is likely to be exhibited and an improving effect of the electrochemical characteristics in a broad temperature range is likely to be exhibited, and when it is 1.0 M or less, especially 0.8 M or less, further 0.6 M or less, there is less concern that the improving effect of the electrochemical characteristics in a broad temperature range is worsened, and hence, such is preferred. The proportion is preferably 0.01 M or more, especially preferably 0.03 M or more, and most preferably 0.04 M or more. An upper limit thereof is preferably 0.8 M or less, more preferably 0.6 M or less, further preferably 0.4 M or less, and especially preferably 0.2 M or less.

### [Production of Nonaqueous Electrolytic Solution]

The nonaqueous electrolytic solution of the present invention can be obtained, for example, by mixing the aforementioned nonaqueous solvent, adding the aforementioned electrolyte salt thereto, and further adding the lithium salt represented by the general formula (I), (III), or (IV) to the resulting nonaqueous electrolytic solution.

At this time, the nonaqueous solvent to be used and the compounds to be added to the nonaqueous electrolytic solution are preferably purified in advance to decrease impurities as far as possible as long as the productivity is not remarkably worsened.

The nonaqueous electrolytic solution of the present invention may be used in the following first to fourth energy storage devices, and the nonaqueous electrolyte for the nonaqueous electrolytic solution is not only in the form of a liquid but also in the form of gel. Furthermore, the nonaqueous electrolytic solution of the present invention may also be used for a solid polymer electrolyte. Above all, the nonaqueous electrolytic solution is preferably used in the first energy storage device using a lithium salt as the electrolyte salt (namely, for a lithium battery) or in the fourth energy storage device (namely, for a lithium ion capacitor), more preferably used in a lithium battery, and still more preferably used in a lithium secondary battery.

### [First Storage Device (Lithium Battery)]

The lithium battery as referred to in the present specification is a generic name for a lithium primary battery and a lithium secondary battery. In the present specification, the term "lithium secondary battery" is used as a concept also including a so-called lithium ion secondary battery. The lithium battery of the present invention includes a positive electrode, a negative electrode, and the aforementioned nonaqueous electrolytic solution having an electrolyte salt dissolved in a nonaqueous solvent. Other constitutional members than the nonaqueous electrolytic solution, such as the positive electrode, the negative electrode, etc., may be used without being particularly limited.

For example, examples of a positive electrode active material used for a lithium secondary battery include a complex metal oxide containing lithium and one or more selected from cobalt, manganese, and nickel. These positive electrode active materials may be used solely or in combination of two or more thereof.

Examples of the lithium complex metal oxide include one or more selected from LiCoO₂, LiMn₂O₄, LiNiO₂, LiCo₁₋ₓNiₓO₂ (0.01 < x < 1), LiCo_{1/3}Ni_{1/3}Mn_{1/3}O₂, LiNi_{1/2}Mn_{3/2}O₄, and LiCo_{0.98}Mg_{0.02}O₂. These materials may be used as a combination, such as a combination of LiCoO₂ and LiMn₂O₄, a combination of LiCoO₂ and LiNiO₂, and a combination of LiMn₂O₄ and LiNiO₂.

For improving the safety on overcharging and the cycle characteristics, and for enabling the use at a charge potential of 4.3 V or more, a part of the lithium complex metal oxide may be substituted with other elements. For example, a part of cobalt, manganese, or nickel may be substituted with at least one element selected from Sn, Mg, Fe, Ti, Al, Zr, Cr, V, Ga, Zn, Cu, Bi, Mo, and La, a part of O may be substituted with S or F, or the oxide may be coated with a compound containing any of such other elements.

Among those, a lithium complex metal oxide capable of being used at a charge potential of the positive electrode in a fully-charged state of 4.3 V or more based on Li, such as LiCoO₂, LiMn₂O₄, and LiNiO₂, is preferred; and a lithium complex metal oxide capable of being used at 4.4 V or more, such as LiCo₁₋ₓMₓO₂ (wherein M represents one or more elements selected from Sn, Mg, Fe, Ti, Al, Zr, Cr, V, Ga, Zn, and Cu, and 0.001 ≤ x ≤ 0.05), LiCo_{1/3}Ni_{1/3}Mn_{1/3}O₂, LiNi_{1/2}Mn_{3/2}O₄, and a solid solution of Li₂MnO₃ and LiMO₂ (wherein M represents a transition metal, such as Co, Ni, Mn, Fe, etc.), is more preferred. The use of the lithium complex metal oxide capable of acting at a high charge voltage is liable to worsen the electrochemical characteristics particularly in a broad temperature range due to the reaction with the electrolytic solution on charging, but in the lithium secondary battery according to the present invention, worsening of the electrochemical characteristics can be inhibited. In particular, a battery with a positive electrode containing Mn tends to have an increased resistance due to elution of Mn ions from the positive electrode, thereby providing the tendency of worsening the electrochemical characteristics in the case of using in a broad temperature range. However, the lithium secondary battery according to the present invention is preferred because worsening of the electrochemical characteristics can be inhibited.

Furthermore, a lithium-containing olivine-type phosphate may also be used as the positive electrode active material. In particular, a lithium-containing olivine-type phosphate including one or more selected from iron, cobalt, nickel, and manganese is preferred. As specific examples thereof, there are exemplified one or more selected from LiFePO₄, LiCoPO₄, LiNiPO₄, and LiMnPO₄. A part of such a lithium-containing olivine-type phosphate may be substituted with other element. Apart of iron, cobalt, nickel, or manganese may be substituted with one or more elements selected from Co, Mn, Ni, Mg, Al, B, Ti, V, Nb, Cu, Zn, Mo, Ca, Sr, W, Zr, and the like, or the phosphate may be coated with a compound containing any of these other elements or with a carbon material. Among those, LiFePO₄ and LiMnPO₄ are preferred. The lithium-containing olivine-type phosphate may also be used, for example, in admixture with the aforementioned positive electrode active material.

Examples of the positive electrode for a lithium primary battery include oxides or chalcogen compounds of one or more metal elements, such as CuO, Cu₂O, Ag₂O, Ag₂CrO₄, CuS, CuSO₄, TiO₂, TiS₂, SiO₂, SnO, V₂O₅, V₆O₁₂, VOₓ, Nb₂O₅, Bi₂O₃, Bi₂Pb₂O₅, Sb₂O₃, CrO₃, Cr₂O₃, MoO₃, WO₃, SeO₂, MnO₂, Mn₂O₃, Fe₂O₃, FeO, Fe₃O₄, Ni₂O₃, NiO, CoO₃, CoO, and the like; a sulfur compound, such as SO₂, SOCl₂, etc.; and a carbon fluoride (graphite fluoride) represented by a general formula (CFₓ)ₙ. Among those, MnO₂, V₂O₅, graphite fluoride, and the like are preferred.

In the case where when 10 g of the aforementioned positive electrode active material is dispersed in 100 mL of distilled water, a pH of a supernatant thereof is 10.0 to 12.5, the improving effect of the electrochemical characteristics in a broad temperature range is likely to be much more exhibited, and hence, such is preferred. The case where the pH is 10.5 to 12.0 is more preferred.

In the case where Ni is contained as an element in the positive electrode, the content of impurities, such as LiOH, etc., in the positive electrode active material tends to increase, and the improving effect of the electrochemical characteristics in a broad temperature range is likely to be much more exhibited, and hence, such is preferred. The case where an atomic concentration of Ni in the positive electrode active material is 5 to 25 atomic% is more preferred, and the case where the atomic concentration of Ni is 8 to 21 atomic% is especially preferred.

An electroconductive agent of the positive electrode is not particularly limited as far as it is an electron-conductive material that does not undergo chemical change. Examples thereof include graphite, such as natural graphite (e.g., flaky graphite, etc.), artificial graphite, etc.; one or more carbon blacks selected from acetylene black, Ketjen black, channel black, furnace black, lamp black, and thermal black; and the like. The graphite and the carbon black may be appropriately mixed and used. An amount of the electroconductive agent added to a positive electrode mixture is preferably from 1 to 10% by mass, and especially preferably from 2 to 5% by mass.

The positive electrode can be produced in such a manner that the positive electrode active material is mixed with an electroconductive agent, such as acetylene black, carbon black, etc., and then mixed with a binder, such as polytetrafluoroethylene (PTFE), polyvinylidene fluoride (PVDF), a copolymer of styrene and butadiene (SBR), a copolymer of acrylonitrile and butadiene (NBR), carboxymethyl cellulose (CMC), an ethylene-propylene-diene terpolymer, etc., to which is then added a high-boiling point solvent, such as 1-methyl-2-pyrrolidone, etc., followed by kneading to provide a positive electrode mixture, and the positive electrode mixture is applied onto a collector, such as an aluminum foil, a stainless steel-made lath plate, etc., dried, shaped under pressure, and then heat-treated in vacuum at a temperature of about 50°C to 250°C for about 2 hours.

A density of the positive electrode except for the collector is generally 1.5 g/cm³ or more, and for the purpose of further increasing a capacity of the battery, the density is preferably 2 g/cm³ or more, more preferably 3 g/cm³ or more, and still more preferably 3.6 g/cm³ or more. An upper limit thereof is preferably 4g/cm³ or less.

As a negative electrode active material for a lithium secondary battery, one or more selected from lithium metal, a lithium alloy, a carbon material capable of absorbing and releasing lithium [e.g., graphitizable carbon, non-graphitizable carbon having a spacing of a (002) plane of 0.37 nm or more, graphite having a spacing of the (002) plane of 0.34 nm or less, etc.], tin (elemental substance), a tin compound, silicon (elemental substance), a silicon compound, and a lithium titanate compound, such as Li₄Ti₅O₁₂, etc., may be used.

Among the aforementioned negative electrode active materials, in the ability of absorbing and releasing lithium ions, the use of a high-crystalline carbon material, such as artificial graphite, natural graphite, etc., is more preferred, and the use of a carbon material having a graphite-type crystal structure in which a lattice (002) spacing (d₀₀₂) is 0.340 nm (nanometers) or less, and especially from 0.335 to 0.337 nm, is still more preferred. In particular, the use of artificial graphite particles having a bulky structure containing plural flattened graphite fine particles that are aggregated or bonded non-parallel to each other, or graphite particles produced through a spheroidizing treatment of flaky natural graphite particles by repeatedly applying a mechanical action, such as a compression force, a friction force, a shear force, etc., is preferred.

When a ratio I(110)/I(004) of a peak intensity I(110) of the (110) plane to a peak intensity I(004) of the (004) plane of the graphite crystal obtained through X-ray diffractometry of a negative electrode sheet that is shaped under pressure to such an extent that a density of the negative electrode except for the collector is 1.5 g/cm³ or more, is 0.01 or more, the electrochemical characteristics are much more improved in a broad temperature range, and hence, such is preferred. The ratio I(110)/I(004) is more preferably 0.05 or more, and still more preferably 0.1 or more. An upper limit of the ratio I(110)/I(004) of the peak intensity is preferably 0.5 or less, and more preferably 0.3 or less because there may be the case where the crystallinity is worsened to lower the discharge capacity of the battery due to an excessive treatment.

When the high-crystalline carbon material (core material) is coated with a carbon material having lower crystallinity than the core material, the electrochemical characteristics in a broad temperature range become much more favorable, and hence, such is preferred. The crystallinity of the carbon material in the coating may be confirmed through TEM.

When the high-crystalline carbon material is used, there is a tendency that it reacts with the nonaqueous electrolytic solution on charging, thereby worsening the electrochemical characteristics at a low temperature or a high temperature due to an increase of interfacial resistance. However, in the lithium secondary battery according to the present invention, the electrochemical characteristics in a broad temperature range become favorable.

As the metal compound capable of absorbing and releasing lithium as a negative electrode active material, there are suitably exemplified compounds containing at least one metal element, such as Si, Ge, Sn, Pb, P, Sb, Bi, Al, Ga, In, Ti, Mn, Fe, Co, Ni, Cu, Zn, Ag, Mg, Sr, Ba, etc. The metal compound may be in any form including an elemental substance, an alloy, an oxide, a nitride, a sulfide, a boride, an alloy with lithium, and the like, and any of an elemental substance, an alloy, an oxide, and an alloy with lithium is preferred because the battery capacity can be increased. Above all, compounds containing at least one element selected from Si, Ge, and Sn are preferred, and compounds containing at least one element selected from Si and Sn are more preferred because the battery capacity can be increased.

The negative electrode can be produced in such a manner that the same electroconductive agent, binder, and high-boiling point solvent as in the production of the positive electrode as described above are used and kneaded to provide a negative electrode mixture, and the negative electrode mixture is then applied on a collector, such as a copper foil, etc., dried, shaped under pressure, and then heat-treated in vacuum at a temperature of about from 50°C to 250°C for about 2 hours.

A density of the negative electrode except for the collector is generally 1.1 g/cm³ or more, and for the purpose of further increasing a capacity of the battery, the density is preferably 1.5 g/cm³ or more, and more preferably 1.7 g/cm³ or more. An upper limit thereof is preferably 2 g/cm³ or less.

Examples of the negative electrode active material for a lithium primary battery include lithium metal and a lithium alloy.

The structure of the lithium battery is not particularly limited, and may be a coin-type battery, a cylinder-type battery, a prismatic battery, a laminate-type battery, or the like, each having a single-layered or multi-layered separator.

The separator for the battery is not particularly limited, and a single-layered or laminated micro-porous film of a polyolefin, such as polypropylene, polyethylene, etc., a woven fabric, a nonwoven fabric, and the like may be used.

The lithium secondary battery in the present invention has excellent electrochemical characteristics in a broad temperature range even when a final charging voltage is 4.2 V or more, particularly 4.3 V or more, and furthermore, the characteristics are favorable even at 4.4 V or more. A final discharging voltage may be generally 2.8 V or more, and further 2.5 V or more, and the final discharging voltage of the lithium secondary battery in the present invention may be 2.0 V or more. An electric current is not particularly limited, and in general, the battery may be used within a range of from 0.1 to 30 C. The lithium battery in the present invention may be charged and discharged at from -40 to 100°C, and preferably from -10 to 80°C.

In the present invention, as a countermeasure against the increase in the internal pressure of the lithium battery, there may also be adopted such a method that a safety valve is provided in a battery cap, or a cutout is provided in a component, such as a battery can, a gasket, etc. As a safety countermeasure for prevention of overcharging, a circuit cut-off mechanism capable of detecting the internal pressure of the battery to cut off the current may be provided in the battery cap.

### [Second Energy Storage Device (Electric Double Layer Capacitor)]

The second energy storage device of the present invention is an energy storage device including the nonaqueous electrolytic solution of the present invention and storing energy by utilizing an electric double layer capacitance in an interface between the electrolytic solution and the electrode. One example of the present invention is an electric double layer capacitor. A most typical electrode active material which is used in this energy storage device is active carbon. The double layer capacitance increases substantially in proportion to a surface area.

### [Third Energy Storage Device]

The third energy storage device of the present invention is an energy storage device including the nonaqueous electrolytic solution of the present invention and storing energy by utilizing a doping/dedoping reaction of the electrode. Examples of the electrode active material which is used in this energy storage device include a metal oxide, such as ruthenium oxide, iridium oxide, tungsten oxide, molybdenum oxide, copper oxide, etc., and a π-conjugated polymer, such as polyacene, a polythiophene derivative, etc. A capacitor using such an electrode active material is capable of storing energy following the doping/dedoping reaction of the electrode.

### [Fourth Energy Storage Device (Lithium Ion Capacitor)]

The fourth energy storage device of the present invention is an energy storage device including the nonaqueous electrolytic solution of the present invention and storing energy by utilizing intercalation of lithium ions into a carbon material, such as graphite, etc., as the negative electrode. This energy storage device is called a lithium ion capacitor (LIC). Examples of the positive electrode include one utilizing an electric double layer between an active carbon electrode and an electrolytic solution, one utilizing a doping/dedoping reaction of a π-conjugated polymer electrode, and the like. The electrolytic solution contains at least a lithium salt, such as LiPF₆, etc.

In the configuration example of the energy storage device described above, description was given of an example in which the lithium salt represented by the general formula (I), (III), or (IV) is contained in the electrolytic solution; however, the lithium salt may be contained in other constituent elements than the electrolytic solution of the energy storage device.

Examples of an aspect adding the lithium salt to other constituent elements than the electrolytic solution include an aspect of adding the lithium salt to a positive electrode or a negative electrode, in which the lithium salt is kneaded with a positive electrode active material or a negative electrode active material, an electroconductive agent, a binder, and a high-boiling point solvent to prepare a positive electrode mixture slurry or a negative electrode mixture slurry, and the positive electrode mixture slurry or the negative electrode mixture slurry is coated onto a collector, dried, pressure molded, and heat treated. In addition, examples thereof include an aspect of adding the lithium salt to a separator, in which a separator is immersed in a solution in which the lithium salt is dissolved in an organic solvent or a water to perform impregnation, and then dried, or in which a coating solution in which the lithium salt is dispersed in an organic solvent or water is prepared and the entire surface of the separator is coated with the coating solution.

### [Novel Compounds]

Description will be given below of the lithium salt of the present invention which is a novel compound.

When the lithium salt of the present invention is added to the energy storage device, it is possible not only to improve the electrochemical characteristics when an energy storage device is used at a high temperature and a high voltage and the capacity retention rate after high-voltage and high-temperature storage, but also to suppress gas generation.

In addition, the lithium salt of the present invention is particularly effective as an additive for an energy storage device; however, from the special structure thereof, in the field of general chemistry, in particular, in organic chemistry, electrochemistry, biochemistry, and polymer chemistry, the lithium salt of the present invention is also effective as a material for electrolyte applications, heat-resistant applications, and the like, and as an intermediate raw material for a pharmaceutical, a pesticide, an electronic material, a polymer material, and the like.

The lithium salt, which is a novel compound and is related to the first embodiment of the present invention, is represented by the following general formula (II).

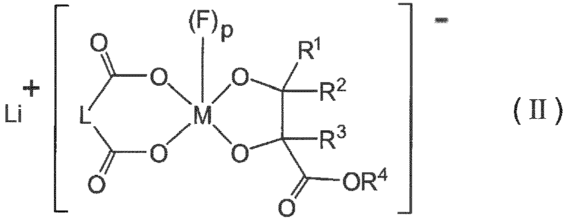

In the formula, R¹, R², R³, R⁴, L, and M have the same meaning as in the general formula (II) described above, p represents 0 or 2, in a case where M is a boron atom, p represents 0, and in a case where M is a phosphorus atom, p represents 2.

Examples of R¹, R², R³, R⁴, L, and M are the same as the examples of R¹, R², R³, R⁴, L, and M in the general formula (I) described above.

In addition, for the compound which is represented by the general formula (II), specifically, the compound having the structural formula of any of A23 to A40 is preferable, the compound having the structural formula of any of A23, A24, A26, and A31 is more preferable, and lithium (dimethyl-2,3-di(hydroxy-kO) butane dioate) (oxalate) borate (structural formula A23), lithium (diethyl-2,3-di(hydroxy-kO) butane dioate) (oxalate) borate (structural formula A24), and lithium difluoro(dimethyl-2,3-di(hydroxy-kO) butane dioate) borate (structural formula A31) are even more preferable.

The compound represented by the general formula (II) can be synthesized by the methods (P1) and (P2) described below; however, the method of synthesizing the compound is not limited to these methods.

The method (P1) is a method for reacting lithium difluoro(oxalate) borate and the α,β-dlhydroxy carboxylic acid ester compound in the presence of silicon tetrachloride. Here, lithium difluoro(oxalate) borate can be obtained by the method described in Journal of Fluorine Chemistry, 2007, vol.128, No.6 p.612 - 618.

The method (P2) is a method for reacting lithium tetrafluoro(oxalate) phosphate and the α,β-dihydroxy carboxylic acid ester compound in the presence of silicon tetrachloride. Here, lithium tetrafluoro(oxalate) phosphate can be obtained by the method described in JP-A-2013-249261.

The lithium salt, which is a novel compound and is related to the second embodiment of the present invention, is represented by the following general formula (III).

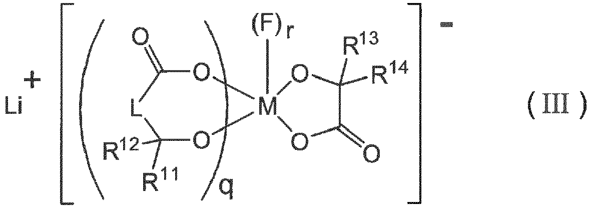

In the formula, R¹¹ to R¹⁴, L, M, q, and r have the same meaning as in the general formula (III) described above.

Suitable examples of the compound which is represented by the general formula (III) include the compounds described in the explanation of the compounds represented by the general formula (III) described above.

The compound represented by the general formula (III) can be synthesized by the methods (P3) and (P2) described below; however, the method of synthesizing the compound is not limited to these methods.

The method (P3) is a method for reacting lithium tetrafluoroborate or lithium difluoro(oxalate) borate and a (phosphoryl) hydroxyacetic acid compound or an (alkoxycarbonyl) hydroxyacetic acid compound in the presence of silicon tetrachloride. Here, the (phosphoryl) hydroxyacetic acid compound can be obtained by the method described in the Journal of American Chemical Society, 1998, 120, 4345-4353 and the lithium difluoro(oxalate) borate can be obtained by the method described in the Journal of Fluorine Chemistry, 2007, Vol.128, (6) p.612-618.

The method (P2) is a method for reacting lithium tetrafluoro(oxalate) phosphate and α,β-dihydroxy carboxylic acid ester compound in the presence of silicon tetrachloride. Here, lithium tetrafluoro(oxalate) phosphate can be obtained with the method described in JP-A-2013-249261.

The lithium salt, which is a novel compound and is related to the third embodiment of the present invention, is represented by the following general formula (IV).

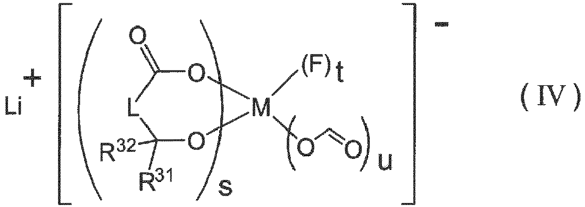

In the formula, R³¹ and R³² each independently represents a hydrogen atom, a halogen atom, or an alkyl group having 1 to 6 carbon atoms, and C(R³¹)(R³²) may represent C(=O). L represents a single bond or an alkylene group having 1 to 4 carbon atoms, M represents a boron atom or phosphorus atom, s represents an integer of 0 to 2, t represents an integer of 0 to 5, and u represents an integer of 1 to 6.

At least one hydrogen atom of the alkyl group or the alkylene group may be substituted with a halogen atom.

In a case where M is a boron atom, s = 1 and 2s + t + u = 4, and in a case where M is a phosphorus atom, 2s + t + u = 6.

Examples of R³¹, R³², L, M, s, t, and u are the same as the examples of R³¹, R³², L, M, s, t, and u in the general formula (IV) described above.

In addition, suitable examples of the lithium salt represented by the general formula (IV) include compounds having structural formulae of G1 to G20 and H1 to H18.

The lithium salt represented by the general formula (IV) can be synthesized by a method for reacting lithium tetrafluoroborate (LiBF₄) or lithium difluoro(oxalate) borate (LiDFOB) with formic acid in the presence of silicon tetrachloride; however, the method of synthesizing the compound is not limited to these methods.

Here, the lithium difluoro(oxalate) borate can be obtained with the method described in the Journal of Fluorine Chemistry, 2007, vol.128, No.6 p.612-618.

In the reaction described above, the amount of formic acid to be used is preferably 0.80 equivalents to 1.20 equivalents of a theoretical amount with respect to the LiBF₄ or LiDFOB, more preferably 0.90 equivalents to 1.10 equivalents, and even more preferably 0.95 equivalents to 1.05 equivalents. The amount of silicon tetrachloride to be used per mole of formic acid is preferably 0.15 to 0.50 mol, more preferably 0.20 to 0.40 mol, and more preferably 0.24 to 0.40 mol.

In the reaction described above, the reaction proceeds in the absence of a solvent; however, it is possible to use a solvent in the reaction if the solvent is inert. Examples of the solvents used include aliphatic hydrocarbons, such as heptane, cyclohexane, etc., halogenated hydrocarbons, such as dichloromethane, dichloroethane, etc., aromatic hydrocarbons, such as toluene, xylene, etc., halogenated aromatic hydrocarbons, such as chlorobenzene, fluorobenzene, etc., ethers, such as diisopropyl ether, dioxane, dimethoxyethane, etc., esters, such as ethyl acetate, butyl acetate, dimethyl carbonate, diethyl carbonate, etc., nitriles, such as acetonitrile, propionitrile, etc., sulfoxides, such as dimethyl sulfoxide, sulfolane, etc., and amides, such as N,N-dimethylformamide, N,N-dimethylacetamide, etc., or mixtures thereof. Among these, esters, such as ethyl acetate, dimethyl carbonate, etc., are preferable.

The amount of the solvent to be used is preferably 0 to 30 parts by mass, and more preferably 1 to 10 parts by mass with respect to 1 part by mass of LiBF₄ or LiDFOB.

In the reaction described above, the lower limit of the reaction temperature is preferably -20°C or more from the viewpoint of not decreasing the reactivity, and more preferably -10°C or more. In addition, from the viewpoint of suppressing side reactions or the decomposition of the products, the upper limit of the reaction temperature is preferably 60°C or less and more preferably 40°C or less.

In addition, the reaction time can be appropriately changed according to the reaction temperature or the scale; however, since unreacted substances remain if the reaction time is excessively short and, conversely, there is a risk of decomposition of the reaction product or side reactions if the reaction time is excessively long, the reaction time is preferably 1 to 36 hours, and more preferably 6 to 18 hours.

When the lithium salt represented by the general formula (II), (III), or (IV) is, for example, used as an additive for an energy storage device shown in the following examples, it is possible to obtain an excellent effect in that the electrochemical characteristics at a high temperature are improved and the effect of improving the electrochemical characteristics in a broad temperature range is enhanced; however, the present invention is not limited solely thereto.

The lithium salts represented by the general formula (II), (III), or (IV) are novel compounds and from the special structures thereof, in the field of general chemistry, in particular, in organic chemistry, electrochemistry, biochemistry, and polymer chemistry, there are applications as electrolytes, and, other than this, use is also possible as a material for heat-resistant applications and the like.

Accordingly, the compounds represented by the general formula (II), (III), or (IV) are compounds which are useful as an intermediate material for a pharmaceutical, a pesticide, an electronic material, a polymer material, and the like, or as a battery material.

### EXAMPLES

Synthesis Examples of the lithium salt used in the present invention and Examples of the electrolytic solution of the present invention are shown below; however, the present invention is not limited to these Synthesis Examples and Examples.

### [Relating to First embodiment of Present Invention]

### Synthesis Example I-1

### Synthesis of lithium (dimethyl-2,3-di(hydroxy-kO) butane dioate) (oxalate) borate (Synthetic Compound I-1)

4.96 g (27.8 mmol) of dimethyl L-tartate, 32 ml of dimethyl carbonate, and 4.0 g (27.8 mmol) of lithium difluoro(oxalate) borate were charged into a 100 ml reaction container under an argon atmosphere. With stirring at room temperature, 2.63 g (15.5 mmol) of silicon tetrachloride was added dropwise thereto. During the dropwise addition, an acidic gas was generated and a white solid was precipitated. After stirring for 3 hours at room temperature, the dissolved acidic gas was removed by reducing pressure inside the reaction container. The obtained reaction solution was filtered and the residue was washed with dimethyl carbonate, and dried under reduced pressure. Thus, 5.47 g (yield^{:} 70%) of the desired compound was obtained as a white solid.

For the obtained lithium (dimethyl-2,3-di(hydroxyl-kO) butane dioate (oxalate) borate, ¹H-NMR measurement was performed and the structure thereof was confirmed. The results are shown below.
¹H-NMR (400 MHz, DMSO-d₆): δ=4.50 (s, 2H), 3.67 (s, 6H).

### Synthesis Example I-2 [Synthesis of Lithium(diethyl-2,3-di(hydroxy-kO) butane dioate) (oxalate) borate (Synthetic Compound I-2)]

In the same manner as in Synthesis Example I-1 except for using diethyl L-tartarate instead of dimethyl L-tartarate, 5.42 g (yield: 61%) of the desired compound was obtained as a white solid.

For the obtained lithium (diethyl-2,3-di(hydroxyl-kO) butane dioate) (oxalate) borate, ¹H-NMR measurement was performed and the structure thereof was confirmed. The results are shown below.
¹H-NMR (400 MHz, DMSO-d₆): δ=4.42 (s, 2H), 4.0 - 4.2 (m, 4H), 1.1 - 1.3 (m, 6H).

### Examples I-1 to I-18 and Comparative Examples I-1 to I-2

### [Production of Lithium Ion Secondary Battery]

94% by mass of LiNi_{1/3}Mn_{1/3}Co_{1/3}O₂ and 3% by mass of acetylene black (electroconductive agent) were mixed and then added to and mixed with a solution which had been prepared by dissolving 3% by mass of polyvinylidene fluoride (binder) in 1-methyl-2-pyrrolidone in advance, thereby preparing a positive electrode mixture paste. This positive electrode mixture paste was applied onto one surface of an aluminum foil (collector), dried, and treated under pressure, followed by cutting into a predetermined size, thereby producing a positive electrode sheet in a belt-like form. A density of the positive electrode except for the collector was 3.6 g/cm³.

10% by mass of silicon (elemental substance), 80% by mass of artificial graphite (d₀₀₂ = 0.335 nm, negative electrode active material), and 5% by mass of acetylene black (electroconductive agent) were mixed and then added to and mixed with a solution which had been prepared by dissolving 5% by mass of polyvinylidene fluoride (binder) in 1-methyl-2-pyrrolidone in advance, thereby preparing a negative electrode mixture paste. This negative electrode mixture paste was applied onto one surface of a copper foil (collector), dried, and treated under pressure, followed by cutting into a predetermined size, thereby producing a negative electrode sheet. A density of the negative electrode except for the collector was 1.5 g/cm³.

The electrode sheet was analyzed by X-ray diffractometry, and a ratio [I(110)/I(004)] of the peak intensity I(110) of the (110) plane to the peak intensity I(004) of the (004) plane of the graphite crystal was 0.1.

The above-obtained positive electrode sheet, a micro-porous polyethylene-made film separator and the above-obtained negative electrode sheet were laminated in this order, and the nonaqueous electrolytic solution having each of compositions shown in Tables 1 and 2 was added, thereby producing a laminate-type battery.

### [Discharge Capacity Retention Rate after High-Temperature Charged Storage]

### <Initial Discharge Capacity>

In a thermostatic chamber at 25°C, the laminate-type battery produced by the aforementioned method was charged up to a final voltage of 4.35 V with a constant current of 1 C and under a constant voltage for 3 hours and then discharged down to a final voltage of 2.75 V with a constant current of 1 C, thereby determining an initial discharge capacity.

### <High-Temperature Charged Storage Test>

Subsequently, in a thermostatic chamber at 55°C, this laminate-type battery was charged up to a final voltage of 4.35 V with a constant current of 1 C and under a constant voltage for 3 hours, and then stored for 7 days while being kept at 4.35 V. Thereafter, the battery was placed in a thermostatic chamber at 25°C, and once discharged under a constant current of 1 C to a final voltage of 2.75 V.

### <Discharge Capacity after High-Temperature Charged Storage>

Further thereafter, the discharge capacity after the high-temperature charged storage was determined in the same manner as in the measurement of the initial discharge capacity.

### <Discharge Capacity Retention Rate after High-Temperature Charged Storage>

A discharge capacity retention rate (%) after the high-temperature charged storage was determined according to the following equation. $Discharge capacity retention rate \left(%\right) after high - temperature charged storage = \left(Discharge capacity after high-temperature charged storage\right) / \left(Initial discharge capacity\right) \times 100$

### [Evaluation of Gas Generation Amount after High-Temperature Charged Storage]

A gas generation amount after the high-temperature charged storage was measured by the Archimedean method. As for the gas generation amount, a relative gas generation amount was evaluated on the basis of defining the gas generation amount of Comparative Example I-1 as 100%.

In addition, the production condition and battery characteristics of each of the batteries are shown in Tables 1 and 2.

**Table 1**

| | Composition of electrolyte salt Composition of nonaqueous electrolytic solution (volume ratio of solvent) | Lithium salt (I) | | Discharge capacity retention rate after high-temperature charged storage (%) | Gas generation amount after high -temperature charged storage (%) |
|---|---|---|---|---|---|
| | | Kind | Content in nonaqueous electrolytic solution (% by mass) | | |
| Example I-1 | 1.15M LiPF6 EC/DMC/MEC (30/45/25) | | 1 | 71 | 72 |
| Example I-2 | 1.15M LiPF6 EC/MEC (30/70) | 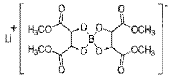 | 1 | 68 | 75 |
| Example I-3 | 1.15M LiPF6 EC/VC/DMC/MEC (29/1/45/25) | | 0.05 | 64 | 76 |
| Example I-4 | 1.15M LiPF6 EC/VC/DMC/MEC (29/1/45/25) | | 1 | 75 | 60 |
| Example I-5 | 1.15M LiPF6 EC/VC/DMC/MEC (29/1/45/25) | | 4 | 67 | 65 |
| Example I-6 | 1.15M LiPF6 EC/VC/DMC/MEC (29/1/45/25) | 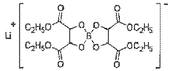 | 1 | 74 | 58 |
| Example I-7 | 1.15M LiPF6 EC/VC/DMC/MEC (29/1/45/25) | 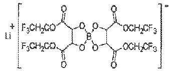 | 1 | 72 | 59 |
| Example I-8 | 1.15M LiPF6 EC/VC/DMC/MEC (29/1/45/25) | 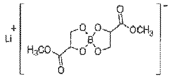 | 1 | 70 | 65 |

**Table 2**

| | Composition of electrolyte salt Composition of nonaqueous electrolytic solution (volume ratio of solvent) | Lithium salt (I) | | Discharge capacity retention rate after high-temperature charged storage (%) | Gas generation amount after high-temperature charged storage (%) |
|---|---|---|---|---|---|
| | | Kind | Content in nonaqueous electrolytic solution (% by mass) | | |
| Example I-9 | 1.15M LiPF6 EC/VC/DMC/MEC (29/1/45/25) | 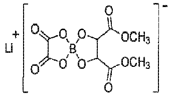 | 1 | 81 | 70 |
| Example I-10 | 1.15M LiPF6 EC/VC/DMC/MEC (29/1/45/25) | 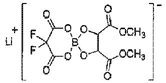 | 1 | 77 | 62 |
| Example I-11 | 1.15M LiPF6 EC/VC/DMC/MEC (29/1/45/25) | 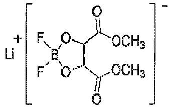 | 1 | 79 | 56 |
| Example I-12 | 1.15M LiPF6 EC/VC/DMC/MEC (29/1/45/25) | 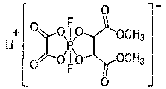 | 1 | 80 | 68 |
| Example I-13 | 1.15M LiPF6 EC/VC/DMC/MEC (29/1/45/25) | 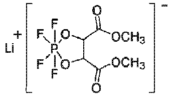 | 1 | 78 | 56 |
| Example I-14 | 1.15M LiPF6 + 0.05M LiFOP EC/FEC/VC/DMC/MEC (19/10/1/45/25) | 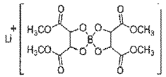 | 1 | 78 | 65 |
| Example I-15 | 1.15M LiPF6 + 0.05M LiFO2F2 EC/VC/DMC/MEC/GBL (29/1/42/25/3) | | 1 | 79 | 55 |
| Example I-16 | 0.7M LiPF6 + 0.45M LiFSI EC/VC/DMC/MEC (29/1/45/25) | | 1 | 81 | 52 |
| Example I-17 | 1.15M LiPF6 + 0.05M LES EC/VC/DMC/MEC/EA (29/1/40/25/5) | 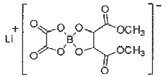 | 1 | 83 | 68 |
| Example I-18 | 1.15M LiPF₆ + 0.05M LMS EC/VC/DMC/MEC/MPiv (29/1/40/25/5) | 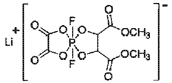 | 1 | 82 | 66 |
| Comparative Example I-1 | 1.15M LiPF6 EC/VC/DMC/MEC (29/1/45/25) | None | - | 53 | 100 |
| Comparative Example I-2 | 1.15M LiPF6 EC/VC/DMC/MEC (29/1/45/25) | 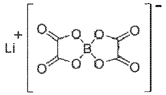 | 1 | 60 | 145 |

### Example I-19 and Comparative Example I-3

A positive electrode sheet was produced by using lithium nickel manganate (LiNi_{1/2}Mn_{3/2}O₄: positive electrode active material) in place of the positive electrode active material used in Example I-1 and Comparative Example I-1.

94% by mass of the lithium nickel manganate and 3% by mass of acetylene black (electroconductive agent) were mixed and then added to and mixed with a solution which had been prepared by dissolving 3% by mass of polyvinylidene fluoride (binder) in 1-methyl-2-pyrrolidone in advance, thereby preparing a positive electrode mixture paste. A laminate-type battery was produced and subjected to battery evaluation in the same manners as in Example I-1 and Comparative Example I-1, except that this positive electrode mixture paste was applied onto one surface of an aluminum foil (collector), dried, and treated under pressure, followed by cutting into a predetermined size, thereby producing a positive electrode sheet; and that in evaluating the battery, the final charging voltage and the final discharging voltage were set to 4.9 V and 2.7 V, respectively. The results are shown in Table 3.

**Table 3**

| | Composition of electrolyte salt Composition of nonaqueous electrolytic solution (volume ratio of solvent) | Lithium salt (I) | | Discharge capacity retention rate after high-temperature charged storage (%) | Gas generation amount after high-temperature charged storage (%) |
|---|---|---|---|---|---|
| | | Kind | Content in nonaqueous electrolytic solution (% by mass) | | |
| Example I-19 | 1.1M LiPF6 EC/FEC/MEC/DEC (20/10/45/25) | 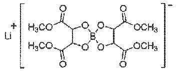 | 1 | 75 | 67 |
| Comparative Example I-3 | | None | - | 45 | 100 |

### Example I-20 and Comparative Example I-4

A negative electrode sheet was produced by using lithium titanate Li₄Ti₅O₁₂ (negative electrode active material) in place of the negative electrode active material used in Example I-1 and Comparative Example I-1.

80% by mass of the lithium titanate and 15% by mass of acetylene black (electroconductive agent) were mixed and then added to and mixed with a solution which had been prepared by dissolving 5% by mass of polyvinylidene fluoride (binder) in 1-methyl-2-pyrrolidone in advance, thereby preparing a negative electrode mixture paste. A laminate-type battery was produced and subjected to battery evaluation in the same manners as in Example I-1 and Comparative Example I-1, except that this negative electrode mixture paste was applied onto one surface of a copper foil (collector), dried, and treated under pressure, followed by cutting into a predetermined size, thereby producing a negative electrode sheet; that in evaluating the battery, the final charging voltage and the final discharging voltage were set to 2.8 V and 1.2 V, respectively; and that the composition of the nonaqueous electrolytic solution was changed to a predetermined composition. The results are shown in Table 4.

**Table 4**

| | Composition of electrolyte salt Composition of nonaqueous electrolytic solution (volume ratio of solvent) | Lithium salt (I) | | Discharge capacity retention rate after high-temperature charged storage (%) | Gas generation amount after high-temperature charged storage (%) |
|---|---|---|---|---|---|
| | | Kind | Content in nonaqueous electrolytic solution (% by mass) | | |
| Example I-20 | 1.1M LiPF6 PC/DEC (30/70) | 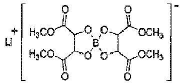 | 1 | 85 | 57 |
| Comparative Example I-4 | | None | - | 75 | 100 |

### Example I-21

A lithium secondary battery was produced in the same manner as in Comparative Example I-1 except for using a positive electrode produced by adding a predetermined amount of the compound represented by the general formula (I) with the total mass of the positive electrode active material being taken as 100, and the battery was evaluated. The results are shown in Table 5.

### Example I-22

A lithium secondary battery was produced in the same manner as in Comparative Example I-1 except for using a negative electrode produced by adding a predetermined amount of the compound represented by the general formula (I) with the total mass of the negative electrode active material being taken as 100 without adding the compound to the positive electrode, and the battery was evaluated. The results are shown in Table 5.

**Table 5**

| | Composition of electrolyte salt Composition of nonaqueous electrolytic solution (volume ratio of solvent) | Compound represented by formula (I) | | | Discharge capacity retention rate after high- temperature charged storage (%) | Gas generation amount after high-temperature charged storage (%) |
|---|---|---|---|---|---|---|
| | | Kind | Addition Part | Content in electrode active material (% by mass) | | |
| Example I-21 | 1.15M LiPF6 EC/VC/DMC/MEC (29/1/45/25) | 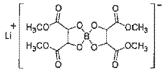 | Positive electrode | 0.3 | 72 | 66 |
| Example I-22 | | | Negative electrode | 0.3 | 67 | 72 |

All lithium secondary batteries of Examples I-1to I-18 relating to the first embodiment of the present invention described above improve the high-temperature and high-voltage storage characteristics and suppress the gas generation amount in comparison with the lithium secondary batteries of Comparative Example I-1 where the lithium salt represented by the general formula (I) is not added and Comparative Example I-2 where the compound described in PTL 1 was added. From the above, the effect in a case of using the energy storage device of the present invention at a high voltage was found to be a peculiar effect in a case where the lithium salt represented by the general formula (I) is contained in the nonaqueous electrolytic solution.

In addition, the same effect was seen in a case of using lithium nickel manganate (LiNi_{1/2}Mn_{3/2}O₄) in the positive electrode from the comparison of Example I-19 and Comparative Example I-3 and in a case of using lithium titanate (Li₄Ti₅O₁₂) in the negative electrode from the comparison of Example I-20 and Comparative Example I-4. Accordingly, the effect of the present invention is clearly not an effect depending on a specific positive electrode or negative electrode.

From the comparison of Examples I-21 and I-22 and Comparative Example I-1, it was found that the effect of the present invention was exhibited even in a case where the lithium salt represented by the general formula (I) is included in a part other than an electrolytic solution.

Furthermore, the nonaqueous electrolytic solution of the first embodiment of the present invention also has an effect of improving the discharging characteristics in a case of using a lithium primary battery at a high voltage.

### [Relating to Second Embodiment of Present Invention]

### Synthesis Example II-1

### Synthesis of lithium (1-diethoxyphosphoryl-2-oxo-ethanediolate) (oxalate) borate (Synthetic Compound II-1)

Under a nitrogen atmosphere, 3.02 g (21.0 mmol) of difluoro(oxalate) lithium borate and 8.60 g of a dimethyl carbonate solution of 2-(diethoxyphosphoryl)-2-hydroxy acetic acid (content: 51 wt%, 20.7 mmol), and 20 ml of dimethyl carbonate were added in a 100 ml reaction container. The 2.00 g (11.8 mmol) of silicon tetrachloride was added dropwise to this solution over 20 minutes at an internal temperature of 30°C or less. After finishing the dropwise addition, a white solid was precipitated, and after stirring for 4 hours at room temperature, acidic gas dissolved in the reaction container was removed under reduced pressure. The obtained reaction solution was filtered, and the residue was washed with dimethyl carbonate, and dried under reduced pressure. Thus, 5.21 g (content: 68 wt%, yield: 54%) of the desired lithium (1-diethoxyphosphoryl-2-oxo-ethanediolate) (oxalate) borate was obtained as a white solid.

For the obtained lithium (1-diethoxyphosphoryl-2-oxo-ethanediolate) (oxalate) borate, ¹H-NMR and ¹³C-NMR measurement was performed and the structure thereof was confirmed. The results are shown below.
¹H-NMR (400 MHz, DMSO -d₆): δ=4.80 (d, J=12.3 Hz, 1H), 4.13-4.03 (m, 4H), 1.24 (t, J=7.0 Hz, 3H), 1.23 (t, J=7.0 Hz, 3H)
¹³C-NMR (100 MHz, DMSO-d₆): δ=171.2, 159.2, 159.1, 72.8 (d, J=160 Hz), 62.7 (d, J=6.52 Hz), 62.6 (d, J=6.52 Hz), 16.3 (d, J=5.34 Hz), 16.2 (d, J=5.53 Hz)

### Synthesis Example II-2

### Synthesis of lithium (1-diethoxyphosphoryl-2-oxo-ethanediolate) tetrafluorophosphate (Synthetic Compound II-2)

Under a nitrogen atmosphere, 3.00 g (19.7 mmol) of hexafluorolithium phosphate and 7.52 g (content: 50 wt%, 17.7 mmol) of a dimethyl carbonate solution of 2-(diethoxyphosphoryl)-2-hydroxy acetic acid, and 20 ml of dimethyl carbonate were added in a 100 ml reaction container. 1.50 g (8.83 mmol) of silicon tetrachloride was added dropwise to this solution over 25 minutes at an internal temperature of 30°C or less. After finishing the dropwise addition, stirring was carried out for 4 hours at room temperature (20°C to 30°C) and dissolved acidic gas was removed by reducing pressure inside the reaction container and the obtained reaction solution was concentrated under reduced pressure. After further adding 20 ml of dimethyl carbonate, vacuum concentration was carried out. This operation was repeated twice, the dissolved acidic gas was almost completely removed, and thus, 10.87 g (purity: 21 wt%, yield: 39%) of a dimethyl carbonate solution of the desired lithium (1-diethoxyphosphoryl-2-oxo-ethanediolate) tetrafluorophosphate was obtained as a clear liquid.

For the obtained lithium (1-diethoxyphosphoryl-2-oxo-ethanediolate) tetrafluorophosphate, ¹H-NMR and ¹⁹F-NMR measurement was performed and the structure thereof was confirmed. The results are shown below.
¹H-NMR (400 MHz, CH₃CN-d₃): δ=4.85-4.55 (m, 1H), 4.30-4.05 (m, 4H), 1.40-1.10 (m, 6H)
¹⁹F-NMR (376.5 Hz, CH₃CN-d₃): δ=-56.9 (dt, J=734, 41 Hz, 1F), -62.5 (dddd, J=771, 52, 45, 7 Hz, 1F), -70.7 (dddd, J=730, 80, 45, 35 Hz, 1F), -78.7 (dddd, J=745, 90, 50, 40 Hz, 1F)

### Synthesis Example II-3

### Synthesis of lithium bis(1-diethoxyphosphoryl-2-oxo-ethanediolate) borate (Synthetic Compound II-3)

Under a nitrogen atmosphere, 0.93 g (22.26 mmol) of lithium hydroxide monohydrate, 1.37 g (22.26 mmol) of boric acid, 35 ml of water, and 9.5 g (42.0 mmol) of 2-(diethoxyphosphoryl)-2-hydroxyacetic acid were added in a 200 ml reaction container. After dehydration under reduced pressure at a bath temperature of 60°C, 80 ml of dimethyl carbonate was added thereto and dehydration was performed using Dean-Stark. 60 ml of dimethyl carbonate was added thereto and vacuum concentration was carried out, and vacuum drying was performed at 100°C. Thus, 9.48 g of lithium bis(1-diethoxyphosphoryl-2-oxo-ethanediolate) borate was obtained as a white solid (yield: 100%).

For the obtained lithium bis(1-diethoxyphosphoryl-2-oxo-ethanediolate) borate, ¹H-NMR measurement was performed and the structure thereof was confirmed. The results are shown below.
¹H-NMR (400 MHz, DMSO -d₆): δ=4.4-4.6 (2H, m), 4-4.2 (8H, m), 1.2-1.4 (12H, m)

### Synthesis Example II-4

### Synthesis of lithium tris (1-diethoxyphosphoryl-2-oxo-ethanediolate) phosphate (Synthetic Compound II-4)

Under a nitrogen atmosphere, 13.02 g (85.7 mmol) of lithium hexafluorophosphate, 49.04 g (231 mmol) of 2-(diethoxyphosphoryl)-2-hydroxyacetic acid, and 260 ml of dimethyl carbonate were added in a 500 ml reaction container. 55.86 g (514 mmol) of chlorotrimethylsilane was added dropwise to this solution at an internal temperature of 30°C or less. After finishing the dropwise addition, stirring was carried out at room temperature for 4 hours. The dissolved acidic gas was removed under reduced pressure and the obtained reaction solution was concentrated under reduced pressure. After the addition of 100 ml of dimethyl carbonate to the concentrate, vacuum concentration was carried out again, and thus, 174.0 g of a dimethyl carbonate solution including lithium tris (1-diethoxyphosphoryl-2-oxo-ethanediolate) phosphate was obtained as a clear liquid.

From NMR analysis, a mixture (molar ratio) of lithium tris (1-diethoxyphosphoryl-2-oxo-ethanediolate) phosphate(74%), lithium bis(1-diethoxyphosphoryl-2-oxo-ethanediolate) difluorophosphate(24%), and lithium (1-diethoxyphosphoryl-2-oxo-ethanediolate) tetrafluorophosphate(2%) was confirmed.

For lithium tris (1-diethoxyphosphoryl-2-oxo-ethanediolate) phosphate, ¹H-NMR measurement was performed and the structure thereof was confirmed. The results are shown below.
¹H-NMR (400 MHz, CH₃CN-d₃): δ=4.85-4.55 (m, 1H), 4.35-4.05 (m, 4H), 1.45-1.10 (m, 6H)

For lithium bis(1-diethoxyphosphoryl-2-oxo-ethanediolate) difluorophosphate, ¹⁹F-NMR measurement with the chemical shift of LiPF₆ set to -75.9 ppm was performed and the structure thereof was confirmed. The results are shown below.
¹⁹F-NMR (376.5 MHz, dimethyl carbonate): δ=-52.0--70.0 (m, 2F)

For lithium (1-diethoxyphosphoryl-2-oxo-ethanediolate) tetrafluorophosphate, ¹⁹F-NMR measurement with the chemical shift of LiPF₆ set to -75.9 ppm was performed and the structure thereof was confirmed. The results are shown below.
¹⁹F-NMR (376.5 MHz, dimethyl carbonate): δ=qq-56.5--59.0 (m, 1F), -62.0--65.0 (m, 1F), -70.5--73.0 (m, 1F), -78.5--81.0 (m, 1F)

### [Examples]

### Examples II-1 to II-17 and Comparative Examples II-1 and II-2

### [Preparation of Lithium Ion Secondary Battery]

94% by mass of LiNi_{1/3}Mn_{1/3}Co_{1/3}O₂ and 3% by mass acetylene black (electroconductive agent) were mixed, 3% by mass polyvinylidene fluoride (binder) was dissolved in 1-methyl-2-pyrrolidone in advance and added to and mixed therein, and thus, a positive electrode mixture paste was prepared. This positive electrode mixture paste was applied to one surface of an aluminum foil (collector), dried, and subjected to a pressure treatment, cut into a predetermined size, and thus, a belt-like positive electrode sheet was prepared. The density of the part excluding the collector of the positive electrode was 3.6 g/cm³.

In addition, 10% by mass of silicon (elemental substance), 80% by mass of artificial graphite (d₀₀₂=0.335 nm, negative electrode active material), and 5% by mass of acetylene black (electroconductive agent) were mixed, and the resultant was added to and mixed with a solution prepared by dissolving 5% by mass of polyvinylidene fluoride (binder) in 1-methyl-2-pyrrolidone in advance, and thus, a negative electrode mixture paste was prepared. The negative electrode mixture paste was applied onto one surface of a copper foil (collector), dried, and subjected to a pressure treatment, cut into a predetermined size, and thus, a negative electrode sheet was prepared. The density of the part excluding the collector of the negative electrode was 1.5 g/cm³. In addition, as a result of X-ray diffraction measurement using the electrode sheet, the ratio [I (110)/I (004)] of the peak intensity I (110) of the (110) plane and the peak intensity I (004) of the (004) plane of graphite crystal was 0.1.

Then, the positive electrode sheet obtained as described above, a separator made of a microporous polyethylene film, and the negative electrode sheet obtained as described above were laminated in order, the nonaqueous electrolytic solution of each of the compositions described in Table 6 and the Table 7 was added thereto, thereby producing a laminate-type battery.

### [Discharge Capacity Retention Rate after High-Temperature Charged Storage]

### <Initial Discharge Capacity>

In a thermostatic chamber at 25°C, the laminate-type battery produced by the aforementioned method was charged up to a final voltage of 4.4 V with a constant current of 1 C and under a constant voltage for 3 hours and then discharged down to a final voltage of 2.75 V with a constant current of 1 C, thereby determining an initial discharge capacity.

### <High-Temperature Charged Storage Test>

Subsequently, in a thermostatic chamber at 50°C, this laminate-type battery was charged up to a final voltage of 4.4 V with a constant current of 1 C and under a constant voltage for 3 hours, and then stored for 5 days while being kept at 4.4 V. Thereafter, the battery was placed in a thermostatic chamber at 25°C, and once discharged under a constant current of 1 C to a final voltage of 2.75 V.

### <Discharge Capacity after High-Temperature Charged Storage>

Further thereafter, the discharge capacity after the high-temperature charged storage was determined in the same manner as in the measurement of the initial discharge capacity.

### <Discharge Capacity Retention Rate after High-Temperature Charged Storage>

A discharge capacity retention rate (%) after the high-temperature charged storage was determined according to the following equation. $Discharge capacity retention rate \left(%\right) after high - temperature charged storage = \left(Discharge capacity after high-temperature charged storage\right) / \left(Initial discharge capacity\right) \times 100$

### [Evaluation of Gas Generation Amount after High-Temperature Charged Storage]

A gas generation amount after the high -temperature charged storage was measured by the Archimedean method. As for the gas generation amount, a relative gas generation amount was evaluated on the basis of defining the gas generation amount of Comparative Example II-1 as 100%.

In addition, the production condition and battery characteristics of each of the batteries are shown in Tables 6 and 7.

**Table 6**

| | Composition of electrolyte salt Composition of nonaqueous electrolytic solution (volume ratio of solvent) | Lithium salt (III) | | Discharge capacity retention rate after high-temperature charged storage (%) | Gas generation amount after high-temperature charged storage (%) |
|---|---|---|---|---|---|
| | | Kind | Content in nonaqueous electrolytic solution (% by mass) | | |
| Example II-1 | 1.2M iPF₆ EC/DMC/MEC (30/40/30) | | 1 | 69 | 62 |
| Example II-2 | 1.2M LiPF₆ EC/MEC (30/70) | 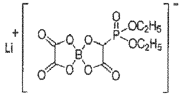 | 1 | 66 | 65 |
| Example II-3 | 1.2M LiPF₆ EC/VC/DMC/MEC (29/1/40/30) | | 0.05 | 63 | 68 |
| Example II-4 | 1.2M LiPF₆ EC/VC/DMC/MEC (29/1/40/30) | | 1 | 74 | 57 |
| Example II-5 | 1.2M LiPF6 EC/VC/DMC/MEC (29/1/40/30) | | 4 | 68 | 59 |
| Example II-6 | 1.2M LiPF6 EC/VC/DMC/MEC (29/1/40/30) | 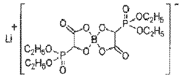 | 1 | 72 | 55 |
| Example II-7 | 1.2M LiPF6 EC/VC/DMC/MEC (29/1/40/30) | 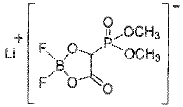 | 1 | 73 | 53 |
| Example II-8 | 1.2M LiPF6 EC/VC/DMC/MEC (29/1/40/30) | 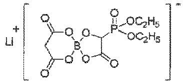 | 1 | 68 | 54 |
| Example II-9 | 1.2M LiPF6 EC/VC/DMC/MEC (29/1/40/30) | 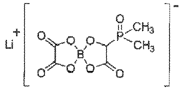 | 1 | 70 | 64 |
| Example II-10 | 1.2M LiPF6 EC/VC/DMC/MEC (29/1/40/30) | 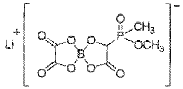 | 1 | 71 | 61 |
| Example II-11 | 1.2M LiPF6 EC/VC/DMC/MEC (29/1/40/30) | 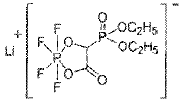 | 1 | 72 | 60 |
| Example II-12 | 1.2M LiPF₆ EC/VC/DMC/MEC (29/1/40/30) | 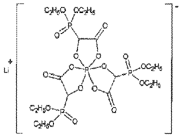 | 1 | 72 | 60 |

**Table 7**

| | Composition of electrolyte salt Composition of nonaqueous electrolytic solution (volume ratio of solvent) | Lithium salt (III) | | Discharge capacity retention rate after high-temperature charged storage (%) | Gas generation amount after high-temperature charged storage (%) |
|---|---|---|---|---|---|
| | | Kind | Content in nonaqueous electrolytic solution (% by mass) | | |
| Example II-13 | .2M LiPF6 + 0.05M LiFOP EC/FEC/VC/DMC/MEC (19/10/1/40/30) | | 1 | 77 | 55 |
| Example II-14 | 1.2M LiPF6 + 0.05M LiPO2F2 EC/VC/DMC/MEC/GBL (29/1/37/30/3) | 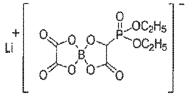 | 1 | 79 | 52 |
| Example II-15 | 0.7M LiPF6 + 0.5M LiFSI EC/VC/DMC/MEC (29/1/40/30) | | 1 | 80 | 48 |
| Example II-16 | 1.2M LiPF6 + 0.05M LES EC/VC/DMC/MEC/EA (29/1/40/25/5) | | 1 | 82 | 50 |
| Example II-17 | 1.2M LiPF₆ + 0.05M LiFOP EC/FEC/VC/DMC/MEC (19/10/1/40/30) | 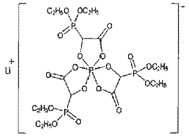 | 1 | 76 | 49 |
| Comparative Example II-1 | 1.2M LiPF6 EC/VC/DMC/MEC (29/1/45/25) | None | | 50 | 100 |
| Comparative Example II-2 | 1.2M LiPF6 EC/VC/DMC/MEC (29/1/45/25) | 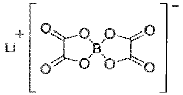 | 1 | 57 | 150 |

### Examples II-18 and II-19 and Comparative Example II-3

A positive electrode sheet was produced by using lithium nickel manganate (LiNi_{1/2}Mn_{3/2}O₄: positive electrode active material) in place of the positive electrode active material used in Example II-1.

94% by mass of the lithium nickel manganate coated with amorphous carbon and 3% by mass of acetylene black (electroconductive agent) were mixed and then added to and mixed with a solution which had been prepared by dissolving 3% by mass of polyvinylidene fluoride (binder) in 1-methyl-2-pyrrolidone in advance, thereby preparing a positive electrode mixture paste. A laminate-type battery was produced and subjected to battery evaluation in the same manners as in Example II-1, except that this positive electrode mixture paste was applied onto one surface of an aluminum foil (collector), dried, and treated under pressure, followed by cutting into a predetermined size, thereby producing a positive electrode sheet; and that in evaluating the battery, the final charging voltage and the final discharging voltage were set to 4.9 V and 2.7 V, respectively; and that the composition of the nonaqueous electrolytic solution was changed to a predetermined composition. The results are shown in Table 8.

**Table 8**

| | Composition of electrolyte salt Composition of nonaqueous electrolytic solution (volume ratio of solvent) | Lithium salt (III) | | Discharge capacity retention rate after high-temperature charged storage (%) | Gas generation amount after high-temperature charged storage (%) |
|---|---|---|---|---|---|
| | | Kind | Content in nonaqueous electrolytic solution (% by mass) | | |
| Example II-18 | 1.2M LiPF6 EC/FEC/MEC/DEC (20/10/30/40) | 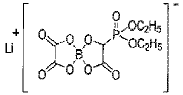 | 1 | 71 | 61 |
| Example II-19 | | 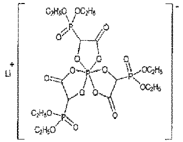 | 1 | 67 | 55 |
| Comparative Example II-3 | | None | - | 42 | 100 |

### Examples II-20 and II-21 and Comparative Example II-4

A negative electrode sheet was produced by using lithium titanate (Li₄Ti₅O₁₂: negative electrode active material) in place of the negative electrode active material used in Example II-1.

80% by mass of the lithium titanate and 15% by mass of acetylene black (electroconductive agent) were mixed and then added to and mixed with a solution which had been prepared by dissolving 5% by mass of polyvinylidene fluoride (binder) in 1-methyl-2-pyrrolidone in advance, thereby preparing a negative electrode mixture paste. A laminate-type battery was produced and subjected to battery evaluation in the same manners as in Example II-1, except that this negative electrode mixture paste was applied onto a copper foil (collector), dried, and treated under pressure, followed by cutting into a predetermined size, thereby producing a negative electrode sheet; and that in evaluating the battery, the final charging voltage and the final discharging voltage were set to 2.8 V and 1.2 V, respectively; and that the composition of the nonaqueous electrolytic solution was changed to a predetermined composition. The results are shown in Table 9.

**Table 9**

| | Composition of electrolyte salt Composition of nonaqueous electrolytic solution (volume ratio of solvent) | Lithium salt (III) | | Discharge capacity retention rate after high -temperature charged storage (%) | Gas generation amount after high-temperature charged storage (%) |
|---|---|---|---|---|---|
| | | Kind | Content in nonaqueous electrolytic solution (% by mass) | | |
| Example II-20 | 1.2M LiPF₆ PC/MEC/DEC (30/30/40) | 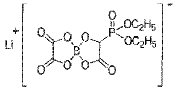 | 1 | 88 | 53 |
| Example II-21 | | 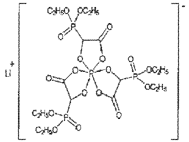 | 1 | 84 | 48 |
| Comparative Example II-4 | | None | - | 72 | 100 |

### Example II-22

A lithium secondary battery was produced in the same manner as comparative example II-1 except for using a positive electrode produced by adding a predetermined amount of the compound represented by the general formula (III) with the total mass of the positive electrode active material being taken as 100, and the battery was evaluated. The results are shown in Table 10.

### Example II-23

A lithium secondary battery was produced in the same manner as comparative example II-1 except for using a negative electrode produced by adding a predetermined amount of the compound represented by the general formula (III) with the total mass of the negative electrode active material being taken as 100 without adding the compound to the positive electrode, and the battery was evaluated. The results are shown in Table 10.

**Table 10**

| | Composition of electrolyte salt Composition of nonaqueous electrolytic solution (volume ratio of solvent) | Compound represented by formula (III) | | | Discharge capacity retention rate after high-temperature charged storage (%) | Gas generation amount after high-temperature charged storage (%) |
|---|---|---|---|---|---|---|
| | | Kind | Addition Part | Content in electrode active material (% by mass) | | |
| Example II-22 | 1.2M LiPF₆ EC/VC/DMC/MEC (29/1/45/25) | 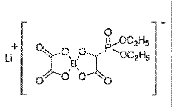 | Positive electrode | 0.3 | 72 | 55 |
| Example II-23 | | | Negative electrode | 0.3 | 65 | 68 |

All of the lithium secondary batteries of Examples II-1 to II-17 relating to the second embodiment of the present invention described above remarkably improved the electrochemical characteristics in a broad temperature range in comparison with the lithium secondary batteries of Comparative Example II-1 where the lithium salt represented by the general formula (III) was not added and of Comparative Example II-2 where lithium bis(oxalate)borate was added. From the above, it was found that the effect of the present invention was a peculiar effect in a case where the lithium salt represented by the general formula (III) was contained in a nonaqueous electrolytic solution in which an electrolyte salt is dissolved in a nonaqueous solvent.

In addition, from the comparison of Examples II-18 and II-19 with Comparative Example II-3 and the comparison of Examples II-20 and II-21 with Comparative Example II-4, it is clear that the effect does not depend on a specific positive electrode or negative electrode since the same effect is seen in a case where lithium nickel manganate (LiNi_{1/2}Mn_{3/2}O₄) is used in the positive electrode or a case where lithium titanate is used in the negative electrode.

From the comparison of Example II-22 and II-23 with Comparative Example II-1, it was found that the effect of the present invention was exhibited even in a case where the lithium salt represented by the general formula (III) is included in a part other than the electrolytic solution.

Furthermore, the nonaqueous electrolytic solution of the second embodiment of the present invention also has an effect of improving the discharging characteristics of lithium primary batteries in a broad temperature range.

### [Relating to Third Embodiment of Present Invention]

### Synthesis Example III-1

### Synthesis of lithium tetrakis(formyloxy) borate (Synthetic Compound III-1)

Under an argon atmosphere, 12.08 g (262.4 mmol) of formic acid and 40 ml of dicarbonate methyl were added to a 100 ml reaction container, 16.31 g (96.0 mmol) of silicon tetrachloride was added to this solution at room temperature, and a mixed solution was prepared.

Under an argon atmosphere, 6.0 g (64.0 mmol) of lithium tetrafluoroborate and 50 ml of dimethyl carbonate were added to a 200 ml reaction container. A mixed solution was added dropwise to this solution while stirring at room temperature. During the addition, gas was generated and a white solid was precipitated. After stirring for 20 hours at room temperature, the dissolved gas was removed from the reaction container under reduced pressure. The precipitated white solid was filtered and the residue was washed with dimethyl carbonate. The residue was dried under reduced pressure and thus, 11.22 g (yield: 89%) of the desired lithium salt was obtained as a white solid.

For the obtained lithium tetrakis(formyloxy) borate, ¹H-NMR measurement was performed and the structure thereof was confirmed. The results are shown below.
¹H-NMR (400 MHz, DMSOd₆): δ=8.28 (m, 4H)

### Synthesis Example III-2

### Synthesis of lithium bis(formyloxy) (oxalate) borate (Synthetic Compound III-2)

Under an argon atmosphere, 3.29 g (73.0 mmol) of formic acid and 30 ml of dicarbonate methyl were added to a 100 ml reaction container, 4.00 g (23.5 mmol) of silicon tetrachloride was added to this solution at room temperature, and thus, a mixed solution was prepared.

Under an argon atmosphere, 5.0 g (34.8 mmol) of difluoro(oxalate) lithium borate and 30 ml of dimethyl carbonate were added to a 100 ml reaction container. The prepared mixed solution was added dropwise while stirring at room temperature. During the dropwise addition, gas was generated and a white solid was precipitated. After stirring this solution for 27 hours at room temperature, dissolved acidic gas was removed from the reaction container under reduced pressure. The precipitated white solid was filtered and the residue was washed with dimethyl carbonate. The residue was dried under reduced pressure and thus, 4.66 g (yield: 68%) of the desired lithium salt was obtained as a white solid.

For the obtained lithium bis(formyloxy) (oxalate) borate, ¹H-NMR and ¹³C-NMR measurement was performed and the structure thereof was confirmed. The results are shown below.
¹H-NMR (400 MHz, DMSO-d₆): δ=8.15 (m, 2H)
¹³C-NMR (100 MHz, DMSO-d₆): δ=162.3, 159.4

### Examples III-1 to III-14 and Comparative Examples III-1 to III-3

### [Production of Lithium Ion Secondary Battery]

94% by mass of LiNi_{1/3}Mn_{1/3}CO_{1/3}O₂ and 3% by mass of acetylene black (electroconductive agent) were mixed and then added to and mixed with a solution which had been prepared by dissolving 3% by mass of polyvinylidene fluoride (binder) in 1-methyl-2-pyrrolidone in advance, thereby preparing a positive electrode mixture paste. This positive electrode mixture paste was applied onto one surface of an aluminum foil (collector), dried, and treated under pressure, followed by cutting into a predetermined size, thereby producing a positive electrode sheet in a belt-like form. A density of the positive electrode except for the collector was 3.6 g/cm³.

10% by mass of silicon (elemental substance), 80% by mass of artificial graphite (d₀₀₂ = 0.335 nm, negative electrode active material), and 5% by mass of acetylene black (electroconductive agent) were mixed and then added to and mixed with a solution which had been prepared by dissolving 5% by mass of polyvinylidene fluoride (binder) in 1-methyl-2-pyrrolidone in advance, thereby preparing a negative electrode mixture paste. This negative electrode mixture paste was applied onto one surface of a copper foil (collector), dried, and treated under pressure, followed by cutting into a predetermined size, thereby producing a negative electrode sheet. A density of the negative electrode except for the collector was 1.5 g/cm³. The electrode sheet was analyzed by X-ray diffractometry, and a ratio [I(110)/I(004)] of the peak intensity I(110) of the (110) plane to the peak intensity I(004) of the (004) plane of the graphite crystal was 0.1.

The above-obtained positive electrode sheet, a micro-porous polyethylene-made film separator and the above-obtained negative electrode sheet were laminated in this order, and the nonaqueous electrolytic solution having each of compositions shown in Tables 11 to 13 was added, thereby producing a laminate-type battery.

### [Discharge Capacity Retention Rate after High-Temperature Charged Storage]

### <Initial Discharge Capacity>

In a thermostatic chamber at 25°C, the laminate-type battery produced by the aforementioned method was charged up to a final voltage of 4.35 V with a constant current of 1 C and under a constant voltage for 3 hours and then discharged down to a final voltage of 2.75 V with a constant current of 1 C, thereby determining an initial discharge capacity.

### <High-Temperature Charged Storage Test>

Subsequently, in a thermostatic chamber at 60°C, this laminate-type battery was charged up to a final voltage of 4.35 V with a constant current of 1 C and under a constant voltage for 3 hours, and then stored for 10 days while being kept at 4.35 V. Thereafter, the battery was placed in a thermostatic chamber at 25°C, and once discharged under a constant current of 1 C to a final voltage of 2.75 V.

### <Discharge Capacity after High-Temperature Charged Storage>

Further thereafter, the discharge capacity after the high-temperature charged storage was determined in the same manner as in the measurement of the initial discharge capacity.

### <Discharge Capacity Retention Rate after High-Temperature Charged Storage>

A discharge capacity retention rate after the high-temperature charged storage was determined according to the following equation. $Discharge capacity retention rate \left(%\right) after high - temperature charged storage = \left(Discharge capacity after high-temperature charged storage\right) / \left(Initial discharge capacity\right) \times 100$

### [Evaluation of Gas Generation Amount after High-Temperature Charged Storage]

A gas generation amount after the high-temperature charged storage was measured by the Archimedean method. As for the gas generation amount, a relative gas generation amount was evaluated on the basis of defining the gas generation amount of Comparative Example III-1 as 100%.

In addition, the production condition and battery characteristics of each of the batteries are shown in Tables 11 to 13.

**Table 11**

| | Composition of electrolyte salt Composition of nonaqueous electrolytic solution (volume ratio of solvent) | Lithium salt (IV) | | Discharge capacity retention rate after high-temperature charged storage (%) | Gas generation amount after high-temperature charged storage (%) |
|---|---|---|---|---|---|
| | | Kind | Content in nonaqueous electrolytic solution (% by mass) | | |
| Example III-1 | 1.15M LiPF6 EC/DMC/MEC (30/45/25) | | 1 | 72 | 81 |
| Example III-2 | 1.15M LiPF6 EC/MEC (30/70) | 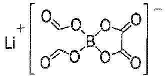 | 1 | 70 | 82 |
| Example III-3 | 1.15M LiPF6 EC/VC/DMC/MEC (29/1/45/25) | | 0.05 | 69 | 85 |
| Example III-4 | 1.15M LiPF6 EC/VC/DMC/MEC (29/1/45/25) | | 1 | 77 | 74 |
| Example III-5 | 1.15M LiPF6 EC/VC/DMC/MEC (29/1/45/25) | | 4 | 71 | 78 |
| Example III-6 | 1.15M LiPF6 EC/VC/DMC/MEC (29/1/45/25) | 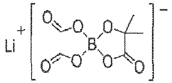 | 1 | 71 | 69 |
| Example III-7 | 1.15M LiPF6 EC/VC/DMC/MEC (29/1/45/25) | 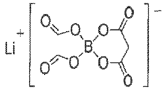 | 1 | 74 | 72 |

**Table 12**

| | Composition of electrolyte salt Composition of nonaqueous electrolytic solution (volume ratio of solvent) | Lithium salt (IV) | | Discharge capacity retention rate after high-temperature charged storage (%) | Gas generation amount after high-temperature charged storage (%) |
|---|---|---|---|---|---|
| | | Kind | Content in nonaqueous electrolytic solution (% by mass) | | |
| Example III-8 | 1.15M LiPF6 + 0.05M LiFOP EC/FEC/VC/DMC/MEC (19/10/1/45/25) | 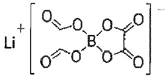 | 1 | 78 | 81 |
| Example III-9 | 1.15M LiPF₆ + 0.05M LiPO2F2 EC/VC/DMC/MEC/GBL (29/1/42/25/3) | | 1 | 79 | 70 |
| Example III- 10 | 1.15M LiPF6 + 0.05M LES EC/VC/DMC/MEC/GBL (29/1/42/25/3) | | 1 | 84 | 68 |
| Example III-11 | 0.7M LiPF6 + 0.45M LiFSI EC/VC/DMC/MEC (29/1/45/25) | | 1 | 82 | 73 |
| Comparative Example III-1 | 1.15M LiPF6 EC/VC/DMC/MEC (29/1/45/25) | None | | 53 | 100 |
| Comparative Example III-2 | 1.15M LiPF6 EC/VC/DMC/MEC (29/1/45/25) | 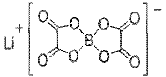 | 1 | 65 | 149 |
| Comparative Example III-3 | 1.15M LiPF6 EC/VC/DMC/MEC (29/1/45/25) | 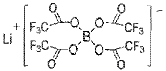 | 1 | 59 | 94 |

**Table 13**

| | Composition of electrolyte salt Composition of nonaqueous electrolytic solution (volume ratio of solvent) | Lithium salt (IV) | | Discharge capacity retention rate after high-temperature charged storage (%) | Gas generation amount after high-temperature charged storage (%) |
|---|---|---|---|---|---|
| | | Kind | Content in nonaqueous electrolytic solution (% by mass) | | |
| Example III-12 | 1.15M LiPF6 + 0.05M LiPO2F2 EC/VC/DMC/MEC (29/1/45/25) | 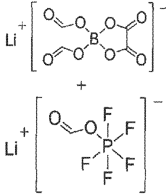 | 1.0 + 1.0 | 88 | 78 |
| Example III-13 | 1.15M LiPF6 + 0.05M LiDFOB EC/VC/DMC/MEC (29/1/45/25) | 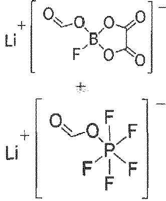 | 0.5 + 1.5 | 86 | 75 |
| Example III-14 | 1.15M LiPF6 + 0.05M LMS EC/VC/DMC/MEC (29/1/45/25) | 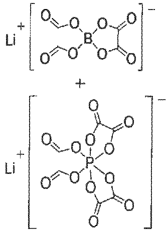 | 1.5 + 0.5 | 89 | 81 |

### Example III-15 and Comparative Example III-4

A positive electrode sheet was produced by using lithium nickel manganate (LiNi_{1/2}Mn_{3/2}O₄: positive electrode active material) in place of the positive electrode active material used in Example III-1 and Comparative Example III-1.

94% by mass of the lithium nickel manganate and 3% by mass of acetylene black (electroconductive agent) were mixed and then added to and mixed with a solution which had been prepared by dissolving 3% by mass of polyvinylidene fluoride (binder) in 1-methyl-2-pyrrolidone in advance, thereby preparing a positive electrode mixture paste. A laminate-type battery was produced and subjected to battery evaluation in the same manners as in Example III-1 and Comparative Example III-1, except that this positive electrode mixture paste was applied onto one surface of an aluminum foil (collector), dried, and treated under pressure, followed by cutting into a predetermined size, thereby producing a positive electrode sheet; and that in evaluating the battery, the final charging voltage and the final discharging voltage were set to 4.9 V and 2.7 V, respectively. The results are shown in Table 14.

**Table 14**

| | Composition of electrolyte salt Composition of nonaqueous electrolytic solution (volume ratio of solvent) | Lithium salt (IV) | | Discharge capacity retention rate after high-temperature charged storage (%) | Gas generation amount after high-temperature charged storage (%) |
|---|---|---|---|---|---|
| | | Kind | Content in nonaqueous electrolytic solution (% by mass) | | |
| Example 111-15 | 1.15M LiPF6 EC/FEC/MEC/DEC (20/10/45/25) | 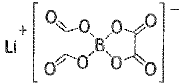 | 1 | 67 | 78 |
| Comparative Example III-4 | | None | | 45 | 100 |

### Example III-16 and Comparative Example III-5

A negative electrode sheet was produced by using lithium titanate (Li₄Ti₅O₁₂: negative electrode active material) in place of the negative electrode active material used in Example III-1 and Comparative Example III-1.

80% by mass of the lithium titanate and 15% by mass of acetylene black (electroconductive agent) were mixed and then added to and mixed with a solution which had been prepared by dissolving 5% by mass of polyvinylidene fluoride (binder) in 1-methyl-2-pyrrolidone in advance, thereby preparing a negative electrode mixture paste. A laminate-type battery was produced and subjected to battery evaluation in the same manners as in Example III-1 and Comparative Example III-1, except that this negative electrode mixture paste was applied onto one surface of a copper foil (collector), dried, and treated under pressure, followed by cutting into a predetermined size, thereby producing a negative electrode sheet; and that in evaluating the battery, the final charging voltage and the final discharging voltage were set to 2.8 V and 1.2 V, respectively; and that the composition of the nonaqueous electrolytic solution was changed to a predetermined composition. The results are shown in Table 15.

**Table 15**

| | Composition of electrolyte salt Composition of nonaqueous electrolytic solution (volume ratio of solvent) | Lithium salt (IV) | | Discharge capacity retention rate after high-temperature charged storage (%) | Gas generation amount after high-temperature charged storage (%) |
|---|---|---|---|---|---|
| | | Kind | Content in nonaqueous electrolytic solution (% by mass) | | |
| Example III-16 | 1.15M LiPF6 PC/DEC (30/70) | 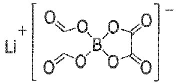 | 1 | 86 | 69 |
| Comparative Example III-5 | | None | - | 75 | 100 |

### Example III-17

A lithium secondary battery was produced in the same manner as comparative example III-1 except for using a positive electrode produced by adding a predetermined amount of the compound represented by the general formula (IV) with the total mass of the positive electrode active material being taken as 100, and the battery was evaluated. The results are shown in Table 16.

### Example III-18

A lithium secondary battery was produced in the same manner as comparative example III-1 except for using a negative electrode produced by adding a predetermined amount of the compound represented by the general formula (IV) with the total mass of the negative electrode active material being taken as 100 without adding the compound to the positive electrode, and the battery was evaluated. The results are shown in Table 16.

**Table 16**

| | Composition of electrolyte salt Composition of nonaqueous electrolytic solution (volume ratio of solvent) | Compound represented by formula (IV) | | | Discharge capacity retention rate after high-temperature charged storage (%) | Gas generation amount after high-temperature charged storage |
|---|---|---|---|---|---|---|
| | | Kind | Addition Part | Content in electrode active material (% by mass) | | |
| Example III-17 | 1.15M LiPF6 EC/VC/DMC/MEC (29/1/45/25) | 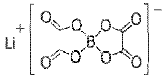 | Positive electrode | 0.3 | 71 | 78 |
| Example III-18 | | | Negative electrode | 0.3 | 64 | 85 |

All of the lithium secondary batteries of Examples III-1 to III-14 relating to the third embodiment of the present invention described above improve the high-temperature and high-voltage storage characteristics and suppress the gas generation amount in comparison with the lithium secondary batteries of Comparative Example III-1 where the lithium salt represented by the general formula (IV) is not added, Comparative Example III-2 where the compound described in PTL 1 was added, and Comparative Example III-3 where the compound described in PTL 2 was added. From the above, it was found that the effect in a case of using the energy storage device of the present invention at high voltage is a peculiar effect in a case where a lithium salt (IV) is contained in a nonaqueous electrolytic solution.

In addition, the same effects were seen in a case of using lithium nickel manganate (LiNi_{1/2}Mn_{3/2}O₄) on the positive electrode from the comparison of Example III-15 and Comparative Example III-4, or a case of using lithium titanate (Li₄Ti₅O₁₂) on the negative electrode from the comparison of Example III-16 and Comparative Example III-5. Accordingly, it is clear that the effect of the present invention is not an effect depending on a specific positive electrode or negative electrode.

From the comparison of Examples III-17 and III-18 and Comparative Example III-1, it was found that the effect of the present invention was exhibited even in a case of including the lithium salt represented by the general formula (III) in a part other than the electrolytic solution.

Furthermore, the nonaqueous electrolytic solution of the third embodiment of the present invention also has an effect of improving the discharging characteristics in a case of using a lithium primary battery at high voltage.

### INDUSTRIAL APPLICABILITY

An energy storage device using the nonaqueous electrolytic solution of the present invention is effective as an energy storage device, such as a lithium secondary battery, etc., with excellent electrochemical characteristics in a case of using a battery at a high voltage.

When the nonaqueous electrolytic solution of the present invention is used as a nonaqueous electrolytic solution for energy storage device, such as a lithium secondary battery mounted on a hybrid electric vehicle, a plug-in hybrid electric vehicle, a battery electric vehicles, and the like, it is possible to obtain an energy storage device where the electrochemical characteristics are not easily worsened in a broad temperature range.

In addition, from the special structure thereof, in the field of general chemistry, in particular, in organic chemistry, electrochemistry, biochemistry, and polymer chemistry, the novel lithium salt of the present invention is effective as an intermediate material for a pharmaceutical, a pesticide, an electronic material, a polymer material and the like, or a battery material, and as a material for electrolyte applications, heat-resistant applications and the like.

## Claims

1. A nonaqueous electrolytic solution having an electrolyte salt dissolved in a nonaqueous solvent, the nonaqueous electrolytic solution comprising:
one or more selected from lithium salts represented by the following general formula (I), (III), or (IV): 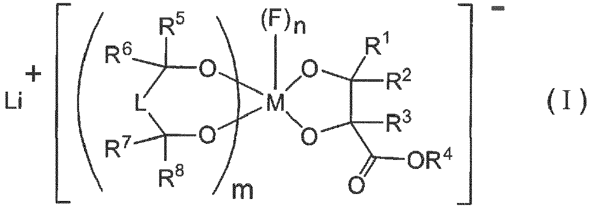
wherein R¹, R⁵, and R⁷ each independently represents a hydrogen atom, an alkyl group having 1 to 6 carbon atoms, or -C(=O)-OR⁹ group, R², R³, R⁶, and R⁸ each independently represents a hydrogen atom or an alkyl group having 1 to 6 carbon atoms, C(R⁵)(R⁶) and C(R⁷)(R⁸) may each independently represents C(=O), R⁴ and R⁹ each independently represents an alkyl group having 1 to 6 carbon atoms, a cycloalkyl group having 3 to 7 carbon atoms, an alkenyl group having 2 to 6 carbon atoms, an alkynyl group having 3 to 6 carbon atoms, or an aryl group having 6 to 12 carbon atoms, and L represents a single bond or an alkylene group having 1 to 4 carbon atoms, provided that at least one hydrogen atom of the alkyl group, the cycloalkyl group, the alkenyl group, the aryl group, or the alkylene group may be substituted with a halogen atom; and
M represents a boron atom or phosphorus atom, m represents 0 or 1, and n represents 0, 2, or 4, provided that in a case where M is a boron atom, 2m + n = 2 and in a case where M is a phosphorus atom, 2m + n = 4: 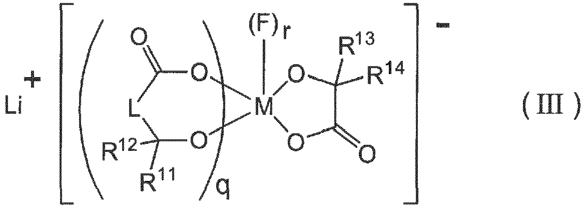
wherein R¹¹ and R¹³ each independently represents a hydrogen atom, a fluorine atom, or an alkyl group having 1 to 6 carbon atoms, R¹² represents a hydrogen atom, an alkyl group having 1 to 6 carbon atoms, a -C(=O)-OR¹⁵ group, a -P(=O)(-OR¹⁶) (-OR¹⁷) group, a -P(=O)(-R¹⁸) (-OR¹⁹) group, or a -P(=O)(-R²⁰) (-R²¹) group, R¹⁴ represents -C(=O)-OR¹⁵ group, a -P(=O)(-OR¹⁶) (-OR¹⁷) group, a -P(=O)(-R¹⁸) (-OR¹⁹) group, or a -P(=O)(-R²⁰) (-R²¹) group, C(R¹¹)(R¹²) may represent C(=O), R¹⁵, R¹⁶, R¹⁷, R¹⁸, R¹⁹, R²⁰, and R²¹ each independently represents an alkyl group having 1 to 6 carbon atoms, a cycloalkyl group having 3 to 7 carbon atoms, an alkenyl group having 2 to 6 carbon atoms, an alkynyl group having 3 to 6 carbon atoms, or an aryl group having 6 to 12 carbon atoms, and L represents a single bond or an alkylene group having 1 to 4 carbon atoms, provided that at least one hydrogen atom of the alkyl group, the cycloalkyl group, the alkenyl group, the aryl group, or the alkylene group may be substituted with a halogen atom; and
M represents a boron atom or phosphorus atom, q represents 0 or 1, and r represents 0, 2, or 4, provided that in a case where M is a boron atom, 2q + r = 2 and in a case where M is a phosphorus atom, 2q + r = 4: 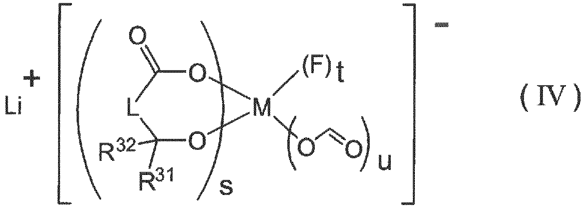
wherein R³¹ and R³² each independently represents a hydrogen atom, a halogen atom, or an alkyl group having 1 to 6 carbon atoms, C(R³¹)(R³²) may represent C(=O), L represents a single bond or an alkylene group having 1 to 4 carbon atoms, M represents a boron atom or phosphorus atom, s represents an integer of 0 to 2, t represents an integer of 0 to 5, and u represents an integer of 1 to 6, provided that at least one hydrogen atom of the alkyl group or the alkylene group may be substituted with a halogen atom, in a case where M is a boron atom, s = 1 and 2s + t + u = 4, and in a case where M is a phosphorus atom, 2s + t + u = 6.

2. The nonaqueous electrolytic solution according to claim 1,
wherein the lithium salt represented by the general formula (I) is one or more selected from lithium bis(dimethyl-2,3-di(hydroxy-kO) butane dioate) borate, lithium bis(diethyl-2,3-di(hydroxy-kO) butane dioate) borate, lithium (dimethyl-2,3-di(hydroxy-kO) butane dioate) (oxalate) borate, lithium (diethyl-2,3-di(hydroxy-kO) butane dioate) (oxalate) borate, lithium difluoro(dimethyl-2,3-di(hydroxy-kO) butane dioate) borate, lithium (diethyl-2,3-di(hydroxy-kO) butane dioate) difluoroborate, lithium bis(dimethyl-2,3-di(hydroxy-kO) butane dioate) difluorophosphate, lithium bis(diethyl-2,3-di(hydroxy-kO) butane dioate) difluorophosphate, lithium difluoro(dimethyl-2,3-di(hydroxy-kO) butane dioate) (oxalate) phosphate, lithium difluoro(diethyl-2,3-di(hydroxy-kO) butane dioate) (oxalate) phosphate, lithium (dimethyl-2,3-di(hydroxy-kO) butane dioate) tetrafluorophosphate, and lithium (diethyl-2,3-di(hydroxy-kO) butane dioate) tetrafluorophosphate.

3. The nonaqueous electrolytic solution according to claim 1 or 2,
wherein the lithium salt represented by the general formula (III) is one or more selected from lithium bis(1-dimethoxyphosphoryl-2-oxo-ethanediolate) borate, lithium bis(1-diethoxyphosphoryl-2-oxo-ethanediolate) borate, lithium (1-dimethoxyphosphoryl-2-oxo-ethanediolate) (oxalate) borate, lithium (1-diethoxyphosphoryl-2-oxo-ethanediolate) (oxalate) borate, lithium (1-(di(2,2,2-trifluoroethoxy) phosphoryl)-2-oxo-ethanediolate) (oxalate) borate, lithium diffuoro(1-dimethoxyphosphoryl-2-oxo-ethanediolate) borate, lithium (1-diethoxyphosphoryl-2-oxo-ethanediolate) difluoroborate, lithium (1-methoxycarbonyl-2-oxo-ethanediolate) (oxalate) borate, lithium (1-ethoxycarbonyl-2-oxo-ethanediolate) (oxalate) borate, lithium (1-((2,2,2-triffuoroethoxy)carbonyl)-2-oxo-ethanediolate) (oxalate) borate, lithium bis(1-dimethoxyphosphoryl-2-oxo-ethanediolate) difluorophosphate, lithium bis(1-diethoxyphosphoryl-2-oxo-ethanediolate) difluorophosphate, lithium difluoro(1-dimethoxyphosphoryl-2-oxo-ethanediolate) (oxalate) phosphate, lithium (1-diethoxyphosphoryl-2-oxo-ethanediolate) (oxalate) difluorophosphate, lithium diffuoro(1-(di(2,2,2-triffuoroethoxy) phosphoryl)-2-oxo-ethanediolate) (oxalate) phosphate, lithium (1-dimethoxyphosphoryl-2-oxo-ethanediolate) tetrafluorophosphate, lithium (1-diethoxyphosphoryl-2-oxo-ethanediolate) tetrafluorophosphate, lithium (1-methoxycarbonyl-2-oxo-ethanediolate) (oxalate) difluorophosphate, lithium (1-ethoxycarbonyl-2-oxo-ethanediolate) (oxalate) difluorophosphate, and lithium (1-((2,2,2-trifluoroethoxy) carbonyl)-2-oxo-ethanediolate) (oxalate) difluorophosphate.

4. The nonaqueous electrolytic solution according to any one of claims 1 to 3,
wherein the lithium salt represented by the general formula (IV) is one or more selected from lithium bis(formyloxy) (oxalate) borate, lithium bis(formyloxy) (malonate) borate, or lithium bis(formyloxy) (2,2-difluoromalonate) borate, lithium formyloxypentafluorophosphate, lithium tetrakis(formyloxy) (oxalate) phosphate, lithium bis(formyloxy) bis(oxalate) phosphate, lithium tetrakis(formyloxy) (malonate) phosphate, and lithium bis(formyloxy) bis(malonate) phosphate.

5. The nonaqueous electrolytic solution according to any one of claims 1 to 4, comprising:
0.001 to 10% by mass of one or more selected from lithium salts represented by the general formula (I), (III), or (IV).

6. The nonaqueous electrolytic solution according to any one of claims 1 to 5,
wherein the nonaqueous solvent comprises a cyclic carbonate and a linear ester.

7. The nonaqueous electrolytic solution according to claim 6,
wherein the cyclic carbonate comprises one or more selected from ethylene carbonate, propylene carbonate, 4-fluoro-1,3-dioxolan-2-one, vinylene carbonate, and 4-ethynyl-1,3-dioxolan-2-one.

8. The nonaqueous electrolytic solution according to claim 6 or 7, comprising both symmetric linear carbonate and asymmetric linear carbonate as the linear ester,
wherein a content of the symmetric linear carbonate is more than a content of the asymmetric linear carbonate.

9. The nonaqueous electrolytic solution according to any one of claims 1 to 8,
wherein the electrolyte salt comprises one or more of lithium salts selected from LiPF₆, LiBF₄, LiN(SO₂CF₃)₂, and LiN(SO₂F)₂.

10. The nonaqueous electrolytic solution according to any one of claims 1 to 9, which is for an energy storage device.

11. An energy storage device comprising:
a positive electrode;
a negative electrode; and
a nonaqueous electrolytic solution having an electrolyte salt dissolved in a nonaqueous solvent,
wherein the nonaqueous electrolytic solution comprises one or more selected from lithium salt represented by the following general formula (I), (III), or (IV): 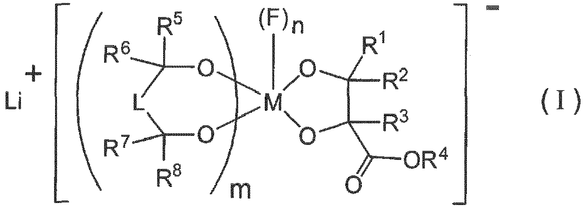
wherein R¹, R⁵, and R⁷ each independently represents a hydrogen atom, an alkyl group having 1 to 6 carbon atoms, or a -C(=O)-OR⁹ group, R², R³, R⁶, and R⁸ each independently represents a hydrogen atom or an alkyl group having 1 to 6 carbon atoms, C(R⁵)(R⁶) and C(R⁷)(R⁸) may each independently represent C(=O), R⁴ and R⁹ each independently represents an alkyl group having 1 to 6 carbon atoms, a cycloalkyl group having 3 to 7 carbon atoms, an alkenyl group having 2 to 6 carbon atoms, an alkynyl group having 3 to 6 carbon atoms, or an aryl group having 6 to 12 carbon atoms, and L represents a single bond or an alkylene group having 1 to 4 carbon atoms, provided that at least one hydrogen atom of the alkyl group, the cycloalkyl group, the alkenyl group, the aryl group, or the alkylene group may be substituted with a halogen atom; and
M represents a boron atom or phosphorus atom, m represents 0 or 1, and n represents 0, 2, or 4, provided that in a case where M is a boron atom, 2m + n = 2 and in a case where M is a phosphorus atom, 2m + n = 4: 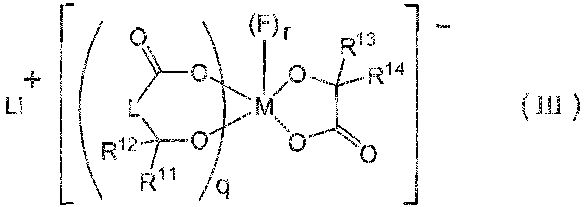
wherein R¹¹ and R¹³ each independently represents a hydrogen atom, a fluorine atom, or an alkyl group having 1 to 6 carbon atoms, R¹² represents a hydrogen atom, an alkyl group having 1 to 6 carbon atoms, a -C(=O)-OR¹⁵ group, a -P(=O)(-OR¹⁶) (-OR¹⁷) group, a -P(=O)(-R¹⁸) (-OR¹⁹) group, or a -P(=O)(-R²⁰) (-R²¹) group, R¹⁴ represents a -C(=O)-OR¹⁵ group, a -P(=O)(-OR¹⁶) (-OF¹⁷) group, a -P(=O)(-R¹⁸) (-OR¹⁹) group, or a -P(=O)(-R²⁰) (-R²¹) group, C(R¹¹)(R¹²) may represent C(=O), R¹⁵, R¹⁶, R¹⁷, R¹⁸, R¹⁹, R²⁰, and R²¹ each independently represents an alkyl group having 1 to 6 carbon atoms, a cycloalkyl group having 3 to 7 carbon atoms, an alkenyl group having 2 to 6 carbon atoms, an alkynyl group having 3 to 6 carbon atoms, or an aryl group having 6 to 12 carbon atoms, and L represents a single bond or an alkylene group having 1 to 4 carbon atoms, provided that at least one hydrogen atom of the alkyl group, the cycloalkyl group, the alkenyl group, the aryl group, or the alkylene group may be substituted with a halogen atom; and
M represents a boron atom or phosphorus atom, q represents 0 or 1, and r represents 0, 2, or 4, provided that in a case where M is a boron atom, 2q + r = 2 and in a case where M is a phosphorus atom, 2q + r = 4: 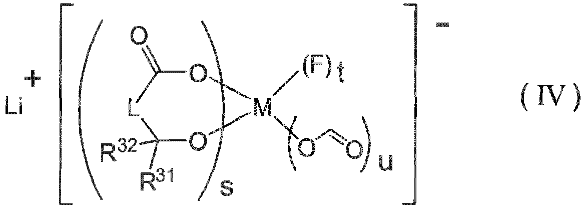
wherein R³¹ and R³² each independently represents a hydrogen atom, a halogen atom, or an alkyl group having 1 to 6 carbon atoms, C (R³¹) (R³²) may represent C(=O), L represents a single bond or an alkylene group having 1 to 4 carbon atoms, M represents a boron atom or a phosphorus atom, s represents an integer of 0 to 2, t represents an integer of 0 to 5, and u represents an integer of 1 to 6, provided that at least one hydrogen atom of the alkyl group or the alkylene group may be substituted with a halogen atom, in a case where M is a boron atom, s = 1 and 2s + t + u = 4, and in a case where M is a phosphorus atom, 2s + t + u = 6.

12. The energy storage device according to claim 11, wherein the nonaqueous electrolytic solution is the nonaqueous electrolytic solution according to any one of claims 1 to 10.

13. The energy storage device according to claim 11 or 12,
wherein the positive electrode comprises a composite metal oxide of lithium containing one or more selected from cobalt, manganese, and nickel or a lithium-containing olivine-type phosphate as a positive electrode active material,.

14. The energy storage device according to any one of claims 11 to 13,
wherein the negative electrode comprises one or more selected from a lithium metal, a lithium alloy, a carbon material capable of absorbing and releasing lithium, tin, a tin compound, silicon, a silicon compound, and a lithium titanate compound as a negative electrode active material.

15. A lithium salt represented by the following general formula (II), (III), or (IV): 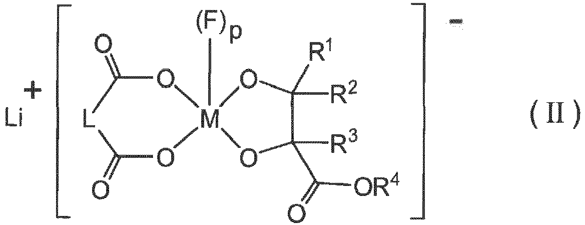
wherein R¹ represents a hydrogen atom, an alkyl group having 1 to 6 carbon atoms, or a -C(=O)-OR⁹ group, R² and R³ each independently represents a hydrogen atom or an alkyl group having 1 to 6 carbon atoms, R⁴ and R⁹ each independently represents an alkyl group having 1 to 6 carbon atoms, a cycloalkyl group having 3 to 7 carbon atoms, an alkenyl group having 2 to 6 carbon atoms, an alkynyl group having 3 to 6 carbon atoms, or an aryl group having 6 to 12 carbon atoms, and L represents a single bond or an alkylene group having 1 to 4 carbon atoms, provided that at least one hydrogen atom of the alkyl group, the cycloalkyl group, the alkenyl group, the aryl group, or the alkylene group may be substituted with a halogen atom; and
M represents a boron atom or a phosphorus atom, and p represents 0 or 2, provided that in a case where M is a boron atom, p represents 0 and in a case where M is a phosphorus atom, p represents 2: 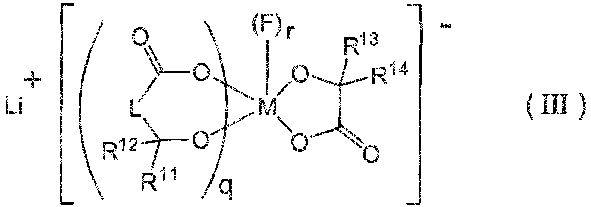
wherein R¹¹ and R¹³ each independently represents a hydrogen atom, a fluorine atom, or an alkyl group having 1 to 6 carbon atoms, R¹² represents a hydrogen atom, an alkyl group having 1 to 6 carbon atoms, a -C(=O)-OR¹⁵ group, a -P(=O)(-OR¹⁶) (-OR¹⁷) group, a -P(=O)(-R¹⁸) (-OR¹⁹) group, or a -P(=O)(-R²⁰) (-R²¹) group, R¹⁴ represents a -C(=O)-OR¹⁵ group, a -P(=O)(-OR¹⁶) (-OR¹⁷) group, a -P(=O)(-R¹⁸) (-OR¹⁹) group, or a -P(=O)(-R²⁰) (-R²¹) group, C(R¹¹)(R¹²) may represent C(=O), R¹⁵, R¹⁶, R¹⁷, R¹⁸, R¹⁹, R²⁰, and R²¹ each independently represents an alkyl group having 1 to 6 carbon atoms, a cycloalkyl group having 3 to 7 carbon atoms, an alkenyl group having 2 to 6 carbon atoms, an alkynyl group having 3 to 6 carbon atoms, or an aryl group having 6 to 12 carbon atoms, and L represents a single bond or an alkylene group having 1 to 4 carbon atoms, provided that at least one hydrogen atom of the alkyl group, the cycloalkyl group, the alkenyl group, the aryl group, or the alkylene group may be substituted with a halogen atom; and
M represents a boron atom or a phosphorus atom, q represents 0 or 1, and r represents 0, 2, or 4, provided that in a case where M is a boron atom, 2q + r = 2 and in a case where M is a phosphorus atom, 2q + r = 4: 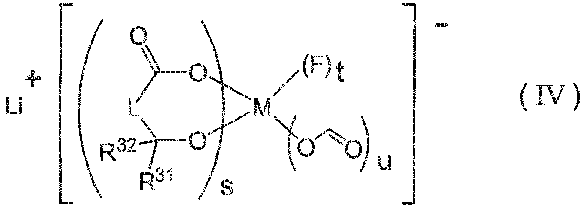
wherein R³¹ and R³² each independently represents a hydrogen atom, a halogen atom, or an alkyl group having 1 to 6 carbon atoms, C(R³¹)(R³²) may represent C(=O), L represents a single bond or an alkylene group having 1 to 4 carbon atoms, M represents a boron atom or a phosphorus atom, s represents an integer of 0 to 2, t represents an integer of 0 to 5, and u represents an integer of 1 to 6, provided that at least one hydrogen atom of the alkyl group or the alkylene group may be substituted with a halogen atom, in a case where M is a boron atom, s = 1 and 2s + t + u = 4, and in a case where M is a phosphorus atom, 2s + t + u = 6.
